# EUROPEAN PATENT APPLICATION

(11) **EP 4 847 577 A1**
(43) Date of publication of application: **02.12.2026**
(21) Application number: 25752269.8
(22) Date of filing: 07.02.2025
(51) Int. Cl.: C09K 3/00, C09K 3/18

(54) **COMPOSITION INCLUDING SILANE COMPOUNDS**

(30) Priority: 09.02.2024 JP 2024018637
(71) Applicant: DAIKIN INDUSTRIES, LTD., Osaka-shi, Osaka 530-0001 (JP)
(72) Inventor: HARA, Manami, Osaka-Shi, Osaka 530-0001 (JP); TAKANO, Shinya, Osaka-Shi, Osaka 530-0001 (JP); NOMURA, Takashi, Osaka-Shi, Osaka 530-0001 (JP)
(74) Representative: Hoffmann Eitle
(86) International application number: PCT/JP2025/004151
(87) International publication number: WO 2025/170046

(57) **Abstract**

A composition comprising silane compounds represented by formula (1) and formula (2):
(Compound A)

R^{A}_{α}-X^{1A}-R^{Si}_{β} (1)

(Compound B)

R^{B}_{α}-X^{1B}-R^{Si}_{β} (2)

## Description

### Technical Field

The present disclosure relates to a composition containing a silane compound.

### Background Art

Certain types of silane compounds are known to be capable of providing excellent water- and oil-repellency when used in surface treatment of a substrate (Patent Literature 1).

### Citation List

### Patent Literature

Patent Literature 1: WO 2015/087903 A1

### Summary of Invention

### Technical Problem

An object of the present disclosure is to provide a composition that can allow a surface-treating layer excellent in fingerprint removability by wiping to be realized.

### Solution to Problem

The present disclosure includes the following embodiments.
[1] A composition comprising silane compounds represented by formula (1) and formula (2):
   (Compound A)

   R^{A}_{α}-X^{1A}-R^{Si}_{β} (1)

   (Compound B)

   R^{B}_{α}-X^{1B}-R^{Si}_{β} (2)

   wherein
   R^{A} is a group containing a group represented by the following group A or group B:

   **R⁵¹ₙₐ R⁵²₃₋ₙₐ Si-(O)_{z}**- (A)

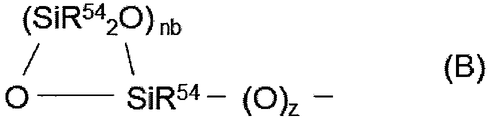

   (wherein
   R⁵¹ is each independently a group represented by R⁵³-(SiR⁵³₂-R⁶⁶)ₘₐ-,
      R⁶⁶ is each independently a single bond, an oxygen atom, or a C₁₋₆ alkylene group,
      R⁵³ is each independently a hydrocarbon group or R^{51'},
         R^{51'} has the same meaning as R⁵¹,
      ma is each independently an integer of 1 to 5,
   provided that the number of R^{51'} in R⁵¹ is 20 or less,
   R⁵² is each independently a hydrocarbon group,
   na is an integer of 1 to 3,
   R⁵⁴ is each independently a hydrocarbon group,
   nb is an integer of 1 to 5, and
   z is 0 or 1);
   R^{B} is a monovalent group containing one or more Si atoms to which neither a hydroxyl group nor a hydrolyzable group is directly bonded, or a hydrocarbon group;
   provided that R^{A} and R^{B} are different groups;
   R^{Si} is each independently a monovalent group containing a Si atom to which a hydroxyl group or a hydrolyzable group is bonded;
   X^{1A} is each independently a di- to decavalent group containing an alkyl group having 7 or more carbon atoms;
   X^{1B} is each independently a di- to decavalent group;
   α is each independently an integer of 1 to 9; and
   β is each independently an integer of 1 to 9.
[2] The composition according to Item [1], wherein R^{A} is a group represented by the following formula:

   R^{1a}-(R^{S})_{γ1}-(SiR^{2a}₂)_{γ2}-(R^{Ar})_{γ3}-

   wherein
   R^{1a} is each independently the group A or the group B;
   R^{S} is each independently a group represented by the following formula: 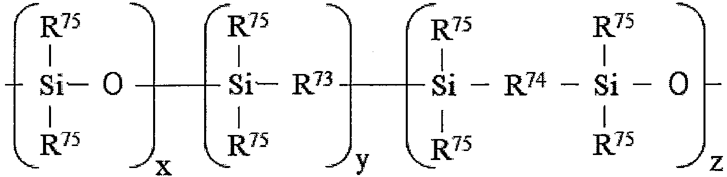 (wherein
      R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹- ,
      R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
         R⁷⁶ is each independently a C₁₋₆ alkylene group,
         R⁷⁷ is each independently an optionally substituted arylene group,
         R⁷⁸ is each independently a single bond or a C₁₋₆ alkylene group,
         R⁷⁹ is each independently a single bond or an oxygen atom,
      R⁷⁵ is each independently a hydrocarbon group,
      x is an integer of 0 to 500,
      y is an integer of 0 to 500,
      z is an integer of 0 to 500,
      x + y + z is 1 or more, and
      the occurrence order of the respective repeating units enclosed in parentheses provided with x, y, or z is not limited in the formula);
      R^{2a} is each independently a hydrocarbon group;
      R^{Ar} is each independently a divalent aromatic group;
      γ1 is 0 or 1;
      γ2 is 0 or 1; and
      γ3 is 0 or 1.
[3] The composition according to Item [1] or [2], wherein R^{A} is a group containing the group A.
[4] The composition according to any one of Items [1] to [3], wherein R^{A} is a group containing at least one branched structure described below. 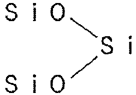
[5] The composition according to any one of Items [1] to [4], wherein R^{B} is a group represented by the following formula:

   R^{1b}-(R^{S})_{γ1}-(SiR^{2a}₂)_{γ2}-(R^{Ar})_{γ3}-

   wherein
   R^{1b} is each independently a hydrocarbon group, the group A or the group B,
   R^{S} is each independently a group represented by the following formula: 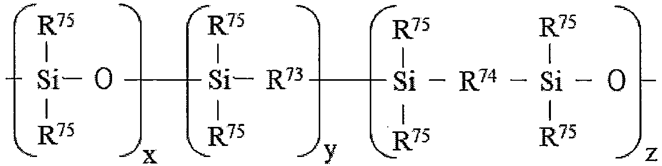 (wherein
      R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹- ,
      R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
         R⁷⁶ is each independently a C₁₋₆ alkylene group,
         R⁷⁷ is each independently an optionally substituted arylene group,
         R⁷⁸ is each independently a single bond or a C₁₋₆ alkylene group,
         R⁷⁹ is each independently a single bond or an oxygen atom,
      R⁷⁵ is each independently a hydrocarbon group,
      x is an integer of 0 to 500,
      y is an integer of 0 to 500,
      z is an integer of 0 to 500,
      x + y + z is 1 or more, and
      the occurrence order of the respective repeating units enclosed in parentheses provided with x, y, or z is not limited in the formula),
      R²² is each independently a hydrocarbon group,
      R^{Ar} is each independently a divalent aromatic group,
      γ1 is 0 or 1,
      γ2 is 0 or 1, and
      γ3 is 0 or 1.
[6] The composition according to Item [5], wherein R^{1b} in R^{B} is a hydrocarbon group and γ1 is 1.
[7] The composition according to Item [5], wherein R^{1b} in R^{B} is a group A, γ1 is 0, γ2 is 0, and γ3 is 0.
[8] The composition according to any one of Items [1] to [7], wherein X^{1A} and X^{1B} are each independently a group represented by the following formula:

   -[(X²¹)ₓ₁-(X²²)ₓ₂]-:

   wherein
   X²¹ is each independently a single bond or a C₁₋₆₀ alkylene group,
   X²² is each independently a single bond, -CO-, -COO-, -OCO-, -NR⁴¹-, -CONR⁴¹-, -NR⁴¹CO-, -OCONR⁴¹-, -NR⁴¹COO-, - NR⁴¹-CO-NR⁴¹-, -O-, -S-, -O-(CH₂)x₃-CONR⁴¹-, -O-(CH₂)ₓ₃-NR⁴¹CO-, or -O-(CH₂)ₓ₃-CO-,
      R⁴¹ is a hydrogen atom or a C₁₋₆ alkyl group,
      x3 is an integer of 1 to 30,
   x1 is an integer of 0 to 6,
   x2 is an integer of 0 to 6, and
   the occurrence order of the respective repeating units enclosed in parentheses provided with x1 or x2 is not limited in the formula.
[9] The composition according to any one of Items [1] to [8], wherein X^{1A} and X^{1B} are each independently a group represented by the following formula:

   -X²¹-[(X²²)_{y1}-(X²³)_{y2}]-X²⁴-:

   wherein
   X²¹ is a C₁₋₆₀ alkylene group,
   X²² is each independently -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)ₓ₃-CO-,
      R⁴¹ is a hydrogen atom or a C₁₋₆ alkyl group,
      x3 is an integer of 1 to 30,
   X²³ is each independently a C₁₋₆ alkylene group,
   X²⁴ is a single bond or a C₁₋₆₀ alkylene group,
   y1 is an integer of 1 to 3,
   y2 is an integer of 0 to 3, and
   the occurrence order of X²² and X²³ in [(X²²)_{y1}-(X²³)_{y2}] is not limited.
[10] The composition according to Item [8], wherein at least one X²¹ in the compound A is a C₇₋₆₀ alkylene group.
[11] The composition according to Item [8] or [9], wherein X²² is -CO-, -COO-, -OCO-, -NR⁴¹-, -CONR⁴¹-, -NR⁴¹CO-, - OCONR₄₁-, -NR⁴¹COO-, -NR⁴¹-CO-NR⁴¹-, -O-, or -S-.
[12] The composition according to Item [8] or [9], wherein X²² is -O- or -CONR⁴¹-.
[13] The composition according to Item [8] or [9], wherein X²² is -CONR⁴¹-.
[14] The composition according to any one of Items [1] to [8], wherein X^{1A} and X^{1B} are each independently a group represented by the following formula:

   -(X¹²¹)ₐ₀-X¹¹⁰-[(X¹¹¹)ₐ₁-(X¹¹²)ₐ₂] -

   wherein
   X¹²¹ is R⁶¹_{b1}R⁶²_{3-b1}C-, R⁶³_{b2}R⁶⁴_{3-b2}Si-, or R⁶⁵₂N-,
      R⁶¹ is each independently a single bond or a divalent organic group,
      R⁶² is each independently a hydrogen atom or a monovalent organic group,
      R⁶³ is each independently a single bond or a divalent organic group,
      R⁶⁴ is each independently a hydrogen atom or a monovalent organic group,
      R⁶⁵ is each independently a single bond or a divalent organic group,
      b1 is 2 or 3,
      b2 is 2 or 3,
   X¹¹⁰ is a single bond or an alkylene group having 3 or more carbon atoms,
   X¹¹¹ is a single bond or a divalent organic group,
   X¹¹² is -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, -O- (CH₂)ₓ₃-CO-, -CON= or R^{S},
      R⁴¹ is a hydrogen atom or a C₁₋₆ alkyl group,
      x3 is an integer of 1 to 30,
      R^{S} is a group represented by the following formula: 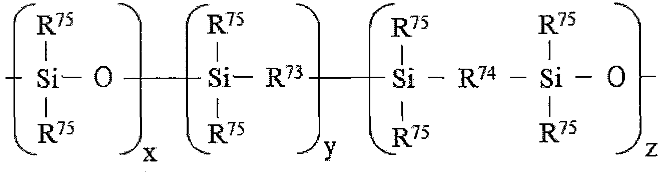 (wherein
         R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹- ,
         R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
            R⁷⁶ is each independently a C₁₋₆ alkylene group,
            R⁷⁷ is each independently an optionally substituted arylene group,
            R⁷⁸ is each independently a single bond or a C₁₋₆ alkylene group,
            R⁷⁹ is each independently a single bond or an oxygen atom,
         R⁷⁵ is each independently a hydrocarbon group,
         x is an integer of 0 to 500,
         y is an integer of 0 to 500,
         z is an integer of 0 to 500,
         x + y + z is 1 or more, and
         the occurrence order of the respective repeating units enclosed in parentheses provided with x, y, or z is not limited in the formula),
         a0 is 0 or 1,
         a1 is an integer of 1 to 5,
         a2 is an integer of 0 to 5, and
         the occurrence order of the respective repeating units enclosed in parentheses provided with a1 or a2 is not limited in the formula; or
         a group represented by the following formula: 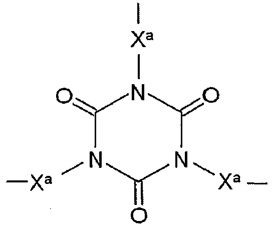 wherein X^{a} is each independently a single bond or a divalent linking group.
[15] The composition according to any one of Items [1] to [14], wherein α is 1 and β is 1.
[16] The composition according to any one of Items [1] to [15], wherein R^{Si} is a group represented by the following formula (S1), (S2), (S3), (S4) or (S5):

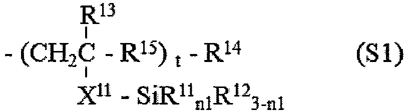

   - **SiR¹¹ₙ₁R¹²₃₋ₙ₁** **(S2)**

   **- SiR^{a1}ₖ₁R^{b1}ₗ₁R^{c1}ₘ₁** **(S3)**

   - **CR^{d1}ₖ₂R^{e1}ₗ₂R^{f1}ₘ₂** **(S4)**

   **- NR^{g1}R^{h1}** **(S5)**

   wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom or -X¹¹-SiR¹¹ₙ₁R¹²₃₋ₙ₁,
   R¹⁵ is each independently a single bond, an oxygen atom, an alkylene group having 1 to 6 carbon atoms or an alkyleneoxy group having 1 to 6 carbon atoms,
   R^{a1} is each independently -Z¹-SiR²¹ₚ₁R²²_{q1}R²³ᵣ₁;
   Z¹ is each independently a divalent organic group,
   R²¹ is each independently -Z^{1'}-SiR^{21'}_{p1'}R^{22'}_{q1'}R^{23'}_{r1'};
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z^{1'} is each independently a divalent organic group,
   R^{21'} is each independently -Z^{1"}-SiR^{22"}_{q1"}R^{23"}_{r1"};
   R^{22'} is each independently a hydroxyl group or a hydrolyzable group,
   R^{23'} is each independently a monovalent organic group,
   p1' is each independently an integer of 0 to 3,
   q1' is each independently an integer of 0 to 3,
   r1' is each independently an integer of 0 to 3,
   Z^{1"} is each independently a divalent organic group,
   R^{22"} is each independently a hydroxyl group or a hydrolyzable group,
   R^{23"} is each independently a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   l1 is each independently an integer of 0 to 3,
   m1 is each independently an integer of 0 to 3,
   provided that, in the formula (S3), at least two Si atoms to which a hydroxyl group or a hydrolyzable group is bonded are present,
   R^{d1} is each independently -Z²-CR³¹ₚ₂R³²_{q2}R³³ᵣ₂,
   Z² is each independently a single bond, an oxygen atom or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom or a divalent organic group,
   R^{32'} is each independently -Z³-SiR³⁴ₙ₂R³⁵₃₋ₙ₂,
   R^{33'} is each independently a hydrogen atom, a hydroxyl group or a monovalent organic group,
   q2' is each independently an integer of 0 to 3,
   r2' is each independently an integer of 0 to 3,
   Z³ is each independently a single bond, an oxygen atom or a divalent organic group;
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group or a monovalent organic group,
   k2 is each independently an integer of 0 to 3,
   l2 is each independently an integer of 0 to 3,
   m2 is each independently an integer of 0 to 3,
   provided that, in the formula (S4), at least two Si atoms to which a hydroxyl group or a hydrolyzable group is bonded are present,
   R^{g1} and R^{h1} are each independently -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
   Z⁴ is each independently a single bond, an oxygen atom or a divalent organic group,
   provided that, in the formula (S5), at least two Si atoms to which a hydroxyl group or a hydrolyzable group is bonded are present.
[17] The composition according to any one of Items [1] to [16], wherein the compound A is a silane compound represented by formula (1),
   wherein
   R^{A} is 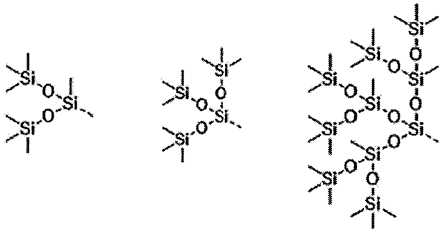
   R^{Si} is -Si(OR^{h})₃,
   R^{h} is an unsubstituted C₁₋₄ alkyl group,
   X^{1A} is -X²¹-X²²-X²⁴-,
   X²¹ is a C₁₈₋₂₄ alkylene group,
   X²² is -CONH-,
   X²⁴ is a C₃₋₆ alkylene group, and
   α and β are each 1; and

   the compound B is a silane compound represented by formula (2),
   wherein
      R^{B} is R^{1b}-R^{S}-SiR^{2a}₂-, R^{1b}-R^{S}-SiR^{2a}₂-R^{Ar}-, 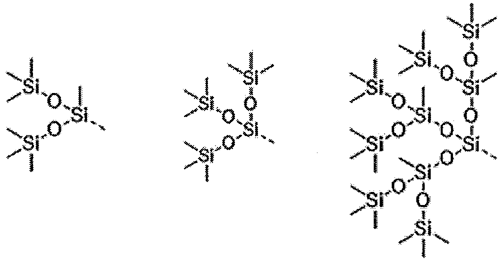
      R^{1b} is a C₁₋₄ alkyl group,
      R^{S} is - (Si (CH₃)₂-O)ₓ-,
      x is an integer of 10 to 60,
      R^{2a} is a methyl group,
      R^{Ar}- is p-phenylene,
      R^{Si} is -Si(OR^{h})₃,
      R^{h} is an unsubstituted C₁₋₄ alkyl group,
      X^{1B} is a C₁₀₋₁₈ alkylene group, -X²¹-X²²-X²⁴-, or - X^{21'}-O-CH₂-CONH-X^{24'}-,
      X²¹ is a C₁₈₋₂₄ alkylene group,
      X²² is -CONH-,
      X²⁴ is a C₃₋₆ alkylene group,
      X^{21'} is a C₃₋₆ alkylene group,
      X^{24'} is a C₃₋₆ alkylene group, and
      α and β are each 1.
[18] The article according to any one of Items [1] to [17], wherein the compound A is selected from the following compounds:
   ·

      [(CH₃)₃SiO)]₂(CH₃)Si-O-[Si(CH₃)₂O]ₙ₁Si(CH₃)₂-(CH₂)_{H1}-C(=O)NHCH₂CH₂CH₂Si(OCH₃)₃
   ·

      [(CH₃)3SiO)]₃Si-O-[Si(CH₃)₂O]ₙ₁Si(CH₃)₂-(CH₂)_{H1}-C(=O)NHCH₂CH₂CH₂Si(OCH₃)₃
   ·

      [(CH₃)₃SiO)]₂(CH₃)Si-O-[Si(CH₃)₂O]ₙ₁Si(CH₃)₂**-**(CH₂)_{H1}**-**Si(OCH₃)₃
   ·

      [(CH₃)₃SiO)]₃Si-O-[Si(CH₃)₂O]ₙ₁Si(CH₃)₂-(CH₂)_{H1}-Si(OCH₃)₃ [(CH₃)₃SiO)]₂(CH₃)Si-O-[Si(CH₃)₂O]ₙ₁Si**(**CH₃)₂**-**(CH₂)_{H1}**-**C(=O)NHCH₂CH[CH₂CH₂CH₂Si(OCH₃)₃]₂
   ·

      [(CH₃)3SiO)]₃Si-O-[Si(CH₃)₂O]ₙ₁Si(CH₃)₂**-**(CH₂)_{H1}**-**C(=O)NHCH₂CH[CH₂CH₂CH₂Si(OCH₃)₃]₂
   ·

      [(CH₃)₃SiO)]₂(CH₃)Si-O-[Si(CH₃)₂O]ₙ₁Si(CH₃)₂**-**(CH₂)_{H1}**-** CH[CH₂CH₂CH₂Si(OCH₃)₃]₂
   ·

      [(CH₃)₃SiO)]₃Si-O-[Si (CH₃)₂O]ₙ₁Si(CH₃)₂-(CH₂)_{H1}-CH[CH₂CH₂CH₂Si(OCH₃)₃]₂
   ·

      [(CH₃)₃SiO)]₂(CH₃)Si-O-[Si(CH₃)₂O]ₙ₁Si(CH₃)₂-(CH₂)_{H1}-C (=O)NHCH₂CH[CH₂CH₂CH₂CH₂CH₂CH₂CH₂CH₂CH₂CH₂CH₂Si(OCH₃)₃]₂
   ·

      [(CH₃)₃SiO)]₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
   ·

      [(CH₃)₃SiO)]₂(CH₃)Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
   ·

      [(CH₃)₃SiO)]₃Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
   ·

      [(CH₃)₃SiO)]₂(CH₃)Si-O-[Si(CH₃)₂O]ₙ₁Si(CH₃)₂-(CH₂)_{H1}-C(=O)N[CH₂CH₂CH₂Si(OCH₃)₃]₂
   ·

      [(CH₃)₃SiO)]₃Si-O-[Si(CH₃)₂O]ₙ₁Si(CH₃)₂-(CH₂)_{H1}-C(=O)N[CH₂CH₂CH₂Si(OCH₃)₃]₂
   ·

      [(CH₃)₃SiO)]₂(CH₃)Si-O-[Si(CH₃)₂O]ₙ₁Si(CH₃)₂-(CH₂)_{H1}-N[CH₂CH₂CH₂Si(OCH₃)₃]₂
   ·

      [(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂
   ·

      [(CH₃)₃SiO)]₂(CH₃)Si-O-[Si(CH₃)₂O]ₙ₁Si(CH₃)₂-(CH₂)_{H1}-C(=O)NHCH₂C[CH₂CH₂CH₂Si(OCH₃)₃]₃
   ·

      [(CH₃)₃SiO)]₃Si-O-[Si(CH₃)₂O]ₙ₁Si(CH₃)₂-(CH₂)_{H1}-C(=O)NHCH₂C[CH₂CH₂CH₂Si(OCH₃)₃]₃
   ·

      [(CH₃)₃SiO)]₂(CH₃)Si-O-[Si(CH₃)₂O]ₙ₁Si(CH₃)₂-(CH₂)_{H1}-C[CH₂CH₂CH₂Si(OCH₃)₃]₃
   ·

      [(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃
   ·

      [(CH₃)₃SiO)]₂(CH₃)Si-(CH₂)_{H1}-C(=O)NHCH₂CH₂CH₂Si(OCH₃)₃
   ·

      [(CH₃)₃SiO)]₃Si-(CH₂)_{H1}-C(=O)NHCH₂CH₂CH₂Si(OCH₃)₃
   ·

      [(CH₃)₃SiO)]₂(CH₃)Si-(CH₂)_{H1}-Si(OCH₃)₃
   ·

      [(CH₃)₃SiO)]₃Si-(CH₂)_{H1}-Si(OCH₃)₃
   ·

      [(CH₃)₃SiO)]₂(CH₃)Si-(CH₂)_{H1}-C(=O)NHCH₂CH[CH₂CH₂CH₂Si(OCH₃)₃]₂
   ·

      [(CH₃)₃SiO)]₃Si-(CH₂)_{H1}-C(=O)NHCH₂CH[CH₂CH₂CH₂Si(OCH₃)₃]₂
   ·

      [(CH₃)₃SiO)]₂(CH₃)Si-(CH₂)_{H1}-CH[CH₂CH₂CH₂Si(OCH₃)₃]₂
   ·

      [(CH₃)₃SiO)]₃Si-(CH₂)_{H1}-CH[CH₂CH₂CH₂Si(OCH₃)₃]₂
   ·

      [(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂
   ·

      [(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
   ·

      [(CH₃)₃SiO)]₂(CH₃)Si-(CH₂)_{H1}-CH[CH₂CH₂CH₂CH₂CH₂CH₂CH₂CH₂CH₂CH₂CH₂Si(OCH₃)₃]₂
   ·

      [(CH₃)₃SiO)]₃Si-(CH₂)_{H1}-CH[CH₂CH₂CH₂CH₂CH₂CH₂CH₂CH₂CH₂CH₂CH₂Si(OCH₃)₃]₂
   ·

      [(CH₃)₃SiO)]₂(CH₃)Si-(CH₂)_{H1}-C(=O)N[CH₂CH₂CH₂Si(OCH₃)₃]₂
   ·

      [(CH₃)₃SiO)]₃Si-(CH₂)_{H1}-C(=O)N[CH₂CH₂CH₂Si(OCH₃)₃]₂
   ·

      [(CH₃)₃SiO)]₂(CH₃)Si-(CH₂)_{H1}-N[CH₂CH₂CH₂Si(OCH₃)₃]₂
   ·

      [(CH₃)₃SiO)]₃Si-(CH₂)_{H1}-N[CH₂CH₂CH₂Si(OCH₃)₃]₂
   ·

      [(CH₃)₃SiO)]₂(CH₃)Si-(CH₂)_{H1}-C(=O)NHCH₂C[CH₂CH₂CH₂Si(OCH₃)₃]₃
   ·

      [(CH₃)₃SiO)]₃Si-(CH₂)_{H1}-C(=O)NHCH₂C[CH₂CH₂CH₂Si(OCH₃)₃]₃
   ·

      [(CH₃)₃SiO)]₂(CH₃)Si-(CH₂)_{H1}-C[CH₂CH₂CH₂Si(OCH₃)₃]₃
   ·

      [(CH₃)₃SiO)]₃Si-(CH₂)_{H1}-C[CH₂CH₂CH₂Si(OCH₃)₃]₃

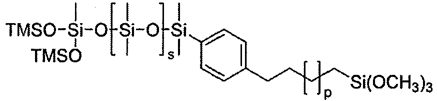

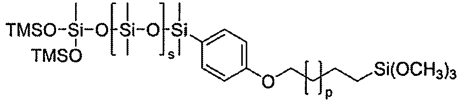

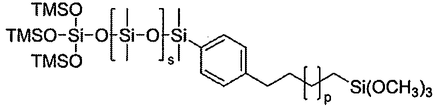

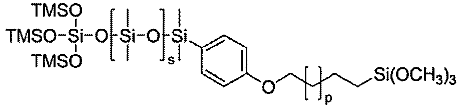

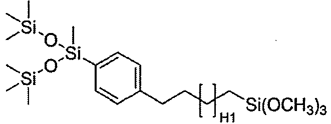

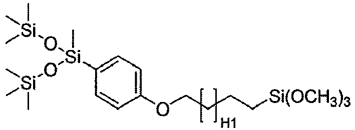

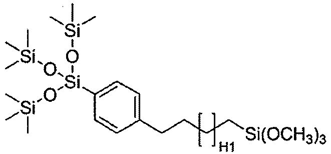

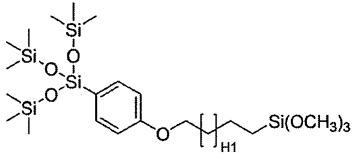

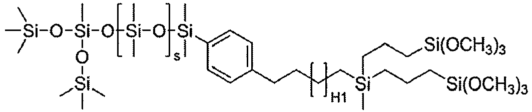

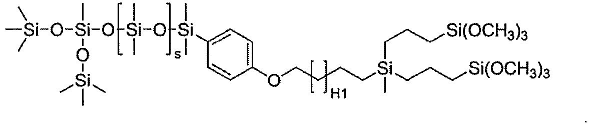

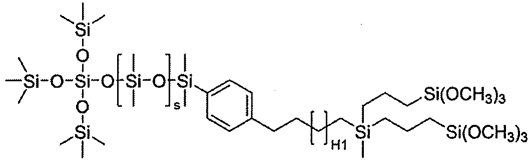

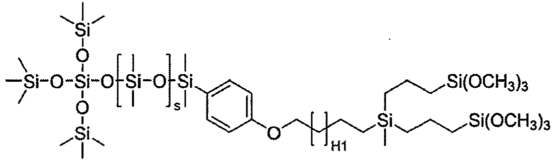

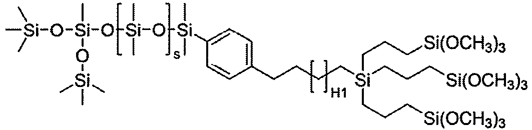

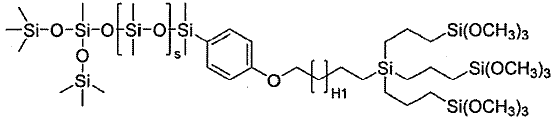

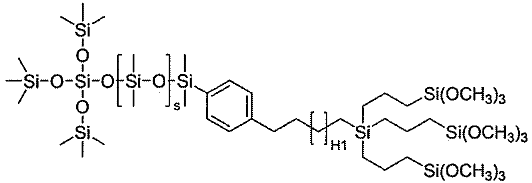

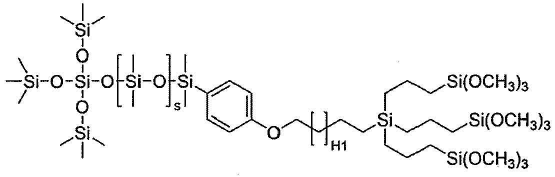

      wherein
      TMSO is a trimethylsilyloxy group,
      n1 and s are each independently an integer of 0 to 150,
      p is each independently an integer of 4 to 50, and
      H1 is each independently an integer of 4 to 50; and
      the compound B is selected from the following compounds:
         ·

            CH₃-[Si(CH₃)₂O]ₙ₁Si(CH₃)₂-(CH₂)_{H1}-C(=O)NHCH₂CH₂CH₂Si(OCH₃)₃
         ·

            CH₃CH₂CH₂CH₂-[Si(CH₃)₂O]ₙ₁Si(CH₃)₂-(CH₂)_{H1}-C(=O)NHCH₂CH₂CH₂Si(OCH₃)₃
         ·

            [(CH₃)₃SiO)]₂(CH₃)Si-O-[Si(CH₃)₂O]ₙ₁Si(CH₃)₂-(CH₂)_{H1}-C(=O)NHCH₂CH₂CH₂Si(OCH₃)₃
         ·

            [(CH₃)₃SiO)]₃Si-O-[Si(CH₃)₂O]ₙ₁Si(CH₃)₂-(CH₂)_{H1}-C(=O)NHCH₂CH₂CH₂Si(OCH₃)₃
         ·

            CH₃-[Si(CH₃)₂O]ₙ₁Si(CH₃)₂-(CH₂)_{H1}-O-(CH₂)_{H2}-C(=O)NHCH₂CH₂CH₂Si(OCH₃)₃
         ·

            CH₃CH₂CH₂CH₂-[Si(CH₃)₂O]ₙ₁Si(CH₃)₂-(CH₂)_{H1}-O-(CH₂)_{H2}-C(=O)NHCH₂CH₂CH₂Si(OCH₃)₃
         ·

            CH₃-[Si(CH₃)₂O]ₙ₁Si(CH₃)₂-(CH₂)_{H1}-Si(OCH₃)₃
         ·

            CH₃CH₂CH₂CH₂-[Si(CH₃)₂O]ₙ₁Si(CH₃)₂-(CH₂)_{H1}-Si(OCH₃)₃
         ·

            [(CH₃)₃SiO)]₂(CH₃)Si-O-[Si(CH₃)₂O]ₙ₁Si(CH₃)2-(CH₂)_{H1}-Si(OCH₃)₃
         ·

            [(CH₃)₃SiO)]₃Si-O-[Si(CH₃)₂O]ₙ₁Si(CH₃)₂-(CH₂)_{H1}-Si(OCH₃)₃
         ·

            CH₃-[Si(CH₃)₂O]ₙ₁Si(CH₃)₂-(CH₂)_{H1}-C(=O)NHCH₂CH[CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-C(=O)NHCH₂CH[CH₂CH₂CH₂Si(OCH₃)₃]₂
         ·

            [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂Si(OCH₃)₃]₂
         ·

            [(CH₃)₃SiO)]₃Si-O-[Si(CH₃)₂O]ₙ₁Si(CH₃)2-(CH₂)_{H1}-C(=O)NHCH₂CH[CH₂CH₂CH₂Si(OCH₃)₃]₂
         ·

            CH₃-[Si(CH₃)₂O]ₙ₁Si(CH₃)₂-(CH₂)_{H1}-O-(CH₂)_{H2}-C(=O)NHCH₂CH[CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂
         ·

            CH₃-[Si(CH3)₂O]ₙ₁Si(CH₃)2-(CH₂)_{H1}-CH[CH2CH₂CH₂Si(OCH₃)₃]₂
         ·

            CH₃CH₂CH₂CH₂-[Si(CH₃)₂O]ₙ₁Si(CH₃)2- (CH₂)_{H1}-CH[CH₂CH₂CH₂Si(OCH₃)₃]₂
         ·

            [(CH₃)₃SiO)]₂(CH₃)Si-O-[Si(CH₃)₂O]ₙ₁Si(CH₃)₂-(CH₂)_{H1}-CH[CH₂CH₂CH₂Si(OCH₃)₃]₂
         ·

            [(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂
         ·

            CH₃-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
         ·

            [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
         ·

            [(CH₃)₃SiO)]₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
         ·

            CH₃-[Si(CH₃)₂O]ₙ₁Si(CH₃)₂-(CH₂)_{H1}-O-(CH₂)_{H2}-C(=O)NHCH₂CH[CH₂CH₂CH₂CH₂CH₂CH₂CH₂CH₂CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-O-(CH₂)_{H2}-C(=O)NHCH₂CH[CH₂CH₂CH₂CH₂CH₂CH₂CH₂CH₂CH₂CH₂CH₂Si(OCH₃)₃]₂
         ·

            CH₃-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
         ·

            [(CH₃)₃SiO)]₂(CH₃)Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
         ·

            [(CH₃)₃SiO)]₃Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
         ·

            CH₃-[Si(CH₃)₂O]ₙ₁Si(CH₃)₂-(CH₂)_{H1}-C(=O)N[CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂
         ·

            [(CH₃)₃SiO)]₂(CH₃)Si-O-[Si(CH₃)₂O]ₙ₁Si(CH₃)₂-(CH₂)_{H1}-C(=O)N[CH₂CH₂CH₂Si(OCH₃)₃]₂
         ·

            [(CH₃)₃SiO)]₃Si-O-[Si(CH₃)₂O]ₙ₁Si(CH₃)₂-(CH₂)_{H1}-C(=O)N[CH₂CH₂CH₂Si(OCH₃)₃]₂
         ·

            CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
         ·

            CH₃-[Si(CH₃)₂O]ₙ₁Si(CH₃)₂-(CH₂)n₁-N[CH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-N[CH₂CH₂CH₂Si(OCH₃)₃]₂
         ·

            [(CH₃)₃SiO)]₂(CH₃)Si-O-[Si(CH₃)₂O]ₙ₁Si(CH₃)₂-(CH₂)_{H1}-N[CH₂CH₂CH₂Si(OCH₃)₃]₂
         ·

            [(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂
         ·

            CH₃-[Si(CH₃)₂O]ₙ₁Si(CH₃)₂-(CH₂)_{H1}-C(=O)NHCH₂C[CH₂CH₂CH₂Si(OCH₃)₃]₃
         ·

            CH₃CH₂CH₂CH₂-[Si(CH₃)₂O]ₙ₁Si(CH₃)2-(CH₂)_{H1}-C(=O)NHCH₂C[CH₂CH₂CH₂Si(OCH₃)₃]₃
         ·

            [(CH₃)₃SiO)]₂(CH₃)Si-O-[Si(CH₃)₂O]ₙ₁Si(CH₃)₂-(CH₂)_{H1}-C(=O)NHCH₂C[CH₂CH₂CH₂Si(OCH₃)₃]₃
         ·

            [(CH₃)₃SiO)]₃Si-O-[Si(CH₃)₂O]ₙ₁Si(CH₃)₂-(CH₂)_{H1}- C(=O)NHCH₂C[CH₂CH₂CH₂Si(OCH₃)₃]₃
         ·

            CH₃-[Si(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
         ·

            CH₃CH₂CH₂CH₂-[Si(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
         ·

            CH₃-[Si(CH₃)₂O]ₙ₁Si(CH₃)₂-(CH₂)_{H1}-C[CH₂CH₂CH₂Si(OCH₃)₃]₃
         ·

            CH₃CH₂CH₂CH₂-[Si(CH₃)₂O]ₙ₁Si(CH₃)₂-(CH₂)_{H1}-C[CH₂CH₂CH₂Si(OCH₃)₃]₃
         ·

            [(CH₃)₃SiO)]₂(CH₃)Si-O-[Si(CH₃)₂O]ₙ₁Si(CH₃)₂-(CH₂)_{H1}-C[CH₂CH₂CH₂Si(OCH₃)₃]₃
         ·

            [(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃
         ·

            [(CH₃)₃SiO)]₂(CH₃)Si-(CH₂)_{H1}-C(=O)NHCH₂CH₂CH₂Si(OCH₃)₃
         ·

            [(CH₃)₃SiO)]₃Si-(CH₂)_{H1}-C(=O)NHCH₂CH₂CH₂Si(OCH₃)₃
         ·

            [(CH₃)₃SiO)]₂(CH₃)Si-(CH₂)_{H1}-Si(OCH₃)₃
         ·

            [(CH₃)₃SiO)]₃Si-(CH₂)_{H1}-Si(OCH₃)₃
         ·

            [(CH₃)₃SiO)]₂(CH₃)Si-(CH₂)_{H1}-C(=O)NHCH₂CH[CH₂CH₂CH₂Si(OCH₃)₃]₂
         ·

            [(CH₃)₃SiO)]₃Si-(CH₂)_{H1}-C(=O)NHCH₂CH[CH₂CH₂CH₂Si(OCH₃)₃]₂
         ·

            [(CH₃)₃SiO)]₂(CH₃)Si-(CH₂)_{H1}-CH[CH₂CH₂CH₂Si(OCH₃)₃]₂
         ·

            [(CH₃)₃SiO)]₃Si-(CH₂)_{H1}-CH(CH₂CH₂CH₂Si(OCH₃)₃]₂
         ·

            [(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂
         ·

            [(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
         ·

            [(CH₃)₃SiO)]₂(CH₃)Si-(CH₂)_{H1}-CH[CH₂CH₂CH₂CH₂CH₂CH₂CH₂CH₂CH₂CH₂CH₂Si(OCH₃)₃]₂
         ·

            [(CH₃)₃SiO)]₃Si-(CH₂)_{H1}-CH[CH₂CH₂CH₂CH₂CH₂CH₂CH₂CH₂CH₂CH₂CH₂Si(OCH₃)₃]₂
         ·

            [(CH₃)₃SiO)]₂(CH₃)Si-(CH₂)n₁-C(=O)N[CH₂CH₂CH₂Si(OCH₃)₃]₂
         ·

            [(CH₃)₃SiO)]₃Si-(CH₂)_{H1}-C(=O)N[CH₂CH₂CH₂Si(OCH₃)₃]₂
         ·

            [(CH₃)₃SiO)]₂(CH₃)Si-(CH₂)n₁-N[CH₂CH₂CH₂Si(OCH₃)₃]₂
         ·

            [(CH₃)₃SiO)]₃Si-(CH₂)_{H1}-N[CH₂CH₂CH₂Si(OCH₃)₃]₂
         ·

            [(CH₃)₃SiO)]₂(CH₃)Si-(CH₂)_{H1}-C(=O)NHCH₂C[CH₂CH₂CH₂Si(OCH₃)₃]₃
         ·

            [(CH₃)₃SiO)]₃Si-(CH₂)_{H1}-C(=O)NHCH₂C[CH₂CH₂CH₂Si(OCH₃)₃]₃ · [(CH₃)₃SiO)]₂(CH₃)Si-(CH₂)_{H1}-C[CH₂CH₂CH₂Si(OCH₃)₃]₃
         ·

            [(CH₃)₃SiO)]₃Si-(CH₂)_{H1}-C[CH₂CH₂CH₂Si(OCH₃)₃]₃ 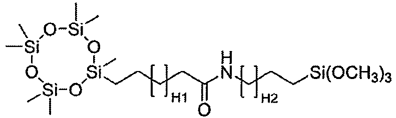 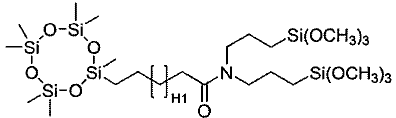 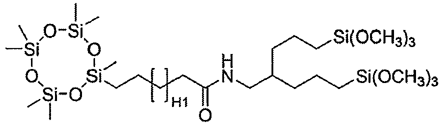 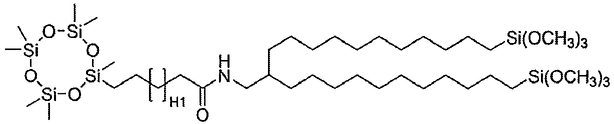 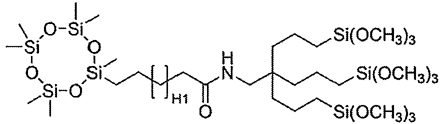
         ·

            CH₃CH₂CH₂CH₂-[Si(CH₃)₂O]ₙ₁Si(CH₃)2-(CH₂)_{H1}-O-(CH₂)_{H2}-C(CH₂CH₃)[CH₂OC(=O)NHCH₂CH₂CH₂Si(OCH₃)₃]₂
         ·

            CH₃-[Si(CH₃)₂O]ₙ₁Si(CH₃)2-(CH₂)_{H1}-O-(CH₂)_{H2}- C(CH₂CH₃)[CH₂OC(=O)NHCH₂CH₂CH₂Si(OCH₃)₃]₂
         ·

            CH₃CH₂CH₂CH₂-[Si(CH₃)₂O]ₙ₁Si(CH₃)2-(CH₂)_{H1}-O-(CH₂)_{H2}-C(CH₂CH₃)[CH₂OC(=O)NHCH₂CH₂OC(=O)CH(CH₃)CH₂Si(OCH₃)₃]₂
         ·

            CH₃-[Si(CH₃)₂O]ₙ₁Si(CH₃)2-(CH₂)_{H1}-O-(CH₂)_{H2}-C(CH₂CH₃)[CH₂OC(=O)NHCH₂CH₂OC(=O)CH(CH₃)CH₂Si(OCH₃)₃]₂
         ·

            CH₃CH₂CH₂CH₂-[Si(CH₃)₂O]ₙ₁Si(CH₃)₂--(CH₂)_{H1}-O-(CH₂)_{H2}-C[CH₂OC(=O)NHCH₂CH₂CH₂Si(OCH₃)₃]₃
         ·

            CH₃-[(Si(CH₃)₂O)]ₙ₁Si(CH₃)₂-(CH₂)_{H1}-O-(CH₂)_{H2}-C[CH₂OC(=O)NHCH₂CH₂CH₂Si(OCH₃)₃]₃
         ·

            [CH₃CH₂CH₂CH₂-[(Si(CH₃)₂O)]ₙ₁Si(CH₃)₂-(CH₂)_{H1}-O-(CH₂)H₂-]₂-C[CH₂OC(=O)NHCH₂CH₂CH₂Si(OCH₃)₃]₂
         ·

            [CH₃-[(Si(CH₃)₂O)]ₙ₁Si(CH₃)₂-(CH₂)_{H1}-O-(CH₂)_{H2}-]₂-C[CH₂OC(=O)NHCH₂CH₂CH₂Si(OCH₃)₃]₂
         ·

            CH₃CH₂CH₂CH₂-[Si(CH₃)₂O]ₙ₁Si(CH₃)₂-(CH₂)_{H1}-O-(CH₂)_{H2}-OC(=O)NHCH₂CH₂CH₂Si(OCH₃)₃
         ·

            CH₃-[Si(CH₃)₂O]ₙ₁Si(CH₃)2-(CH₂)_{H1}-O-(CH₂)_{H2}-OC(=O)NHCH₂CH₂CH₂Si(OCH₃)₃
         ·

            CH₃CH₂CH₂CH₂-[Si(CH₃)₂O]ₙ₁Si(CH₃)₂-(CH₂)_{H1}-O-(CH₂)_{H2}-OC(=O)NHCH₂CH₂OC(=O)CH(CH₃)CH₂Si(OCH₃)₃
         ·

            CH₃-[Si(CH₃)₂O]ₙ₁Si(CH₃)₂-(CH₂)_{H1}-O-(CH₂)_{H2}-OC(=O)NHCH₂CH₂OC(=O)CH(CH₃)CH₂Si(OCH₃)₃
         ·

            [CH₃CH₂CH₂CH₂-[Si(CH₃)₂O]ₙ₁Si(CH₃)₂-(CH₂)_{H1}-O-(CH₂)_{H2}-]₃C-CH₂OC(=O)NHCH₂CH₂CH₂Si(OCH₃)₃
         ·

            [CH₃-[Si(CH₃)₂O]ₙ₁Si(CH₃)₂-(CH₂)_{H1}-O-(CH₂)_{H2}-]₃C-CH₂OC(=O)NHCH₂CH₂CH₂Si(OCH₃)₃
         ·

            [CH₃CH₂CH₂CH₂-[(Si(CH₃)₂O)]ₙ₁Si(CH₃)₂-(CH₂)_{H1}-O-(CH₂)n₂-]₂C(CH₂CH₃)[CH₂OC(=O)NHCH₂CH₂CH₂Si(OCH₃)₃]
         ·

            [CH₃-[(Si(CH₃)₂O)]ₙ₁Si(CH₃)₂-(CH₂)_{H1}-O-(CH₂)_{H2}-]₂C(CH₂CH₃)[CH₂OC(=O)NHCH₂CH₂CH₂Si(OCH₃)₃] 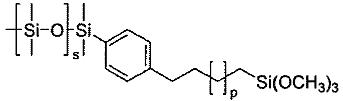 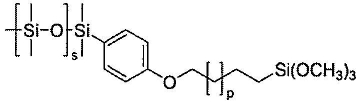 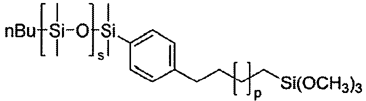 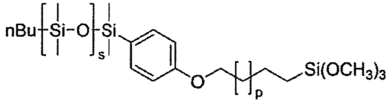 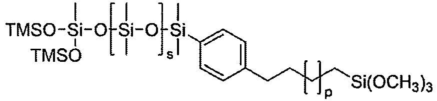 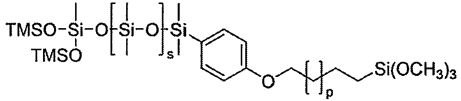 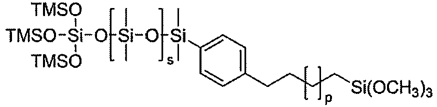 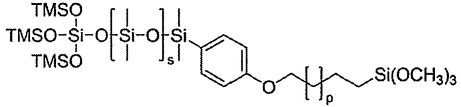 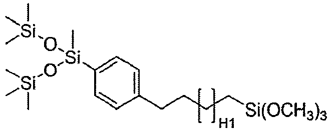 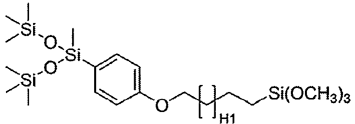 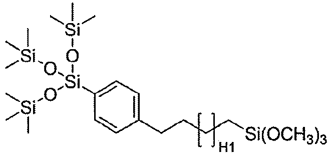 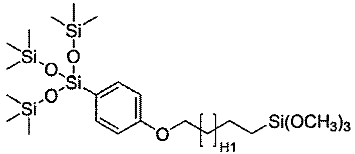 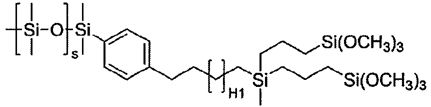 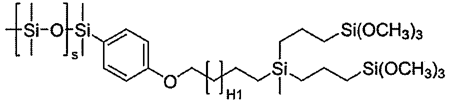 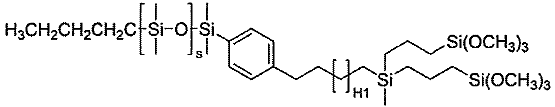 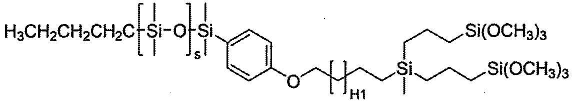 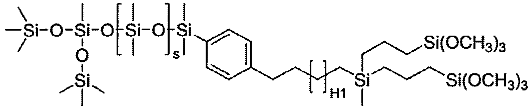 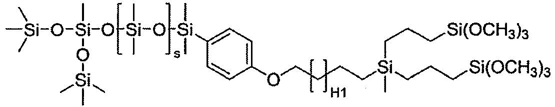 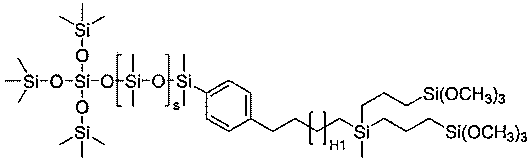 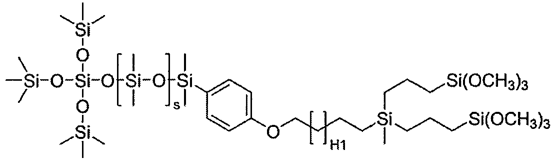 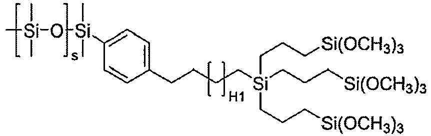 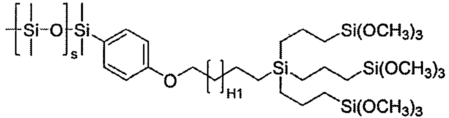 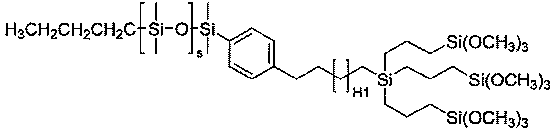 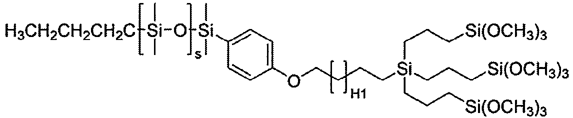 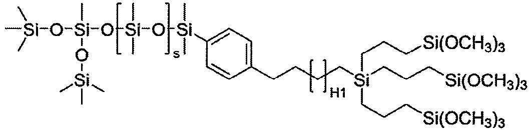 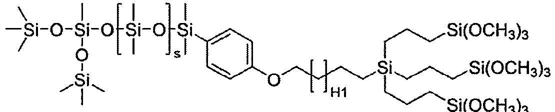 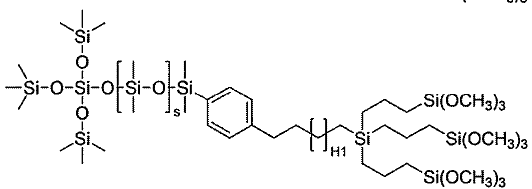 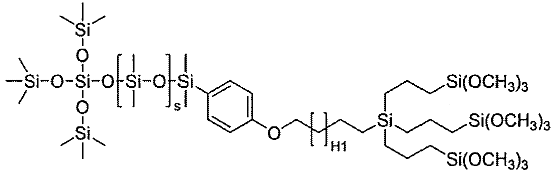 wherein
            TMSO is a trimethylsilyloxy group,
            n1 and s are each independently an integer of 0 to 150,
            p is each independently an integer of 1 to 50, and
            H1 and H2 are each independently an integer of 1 to 50.
[19] The article according to any one of Items [1] to [18], wherein, in the compound A:
   n1 and s are each independently 0 or 1,
   p is each independently an integer of 8 to 40, and
   H1 is each independently an integer of 8 to 40; and
   in the compound B:
      n1 and s are each independently 0 or 1,
      p is each independently an integer of 8 to 40,
      H1 is each independently an integer of 8 to 40, and
      H2 is each independently an integer of 1 to 10.
[20] The article according to any one of Items [1] to [19], wherein, in the compound A:
   n1 and s is each independently an integer of 5 to 80,
   p is each independently an integer of 8 to 40, and
   H1 is each independently an integer of 8 to 40; and
   in the compound B:
      n1 and s is each independently an integer of 5 to 80,
      p is each independently an integer of 8 to 40,
      H1 is each independently an integer of 8 to 40, and
      H2 is each independently an integer of 1 to 10.
[21] The article according to any one of [1] to [20], wherein the compound A is selected from the following compounds: 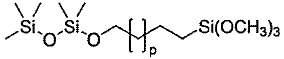 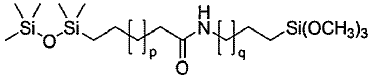 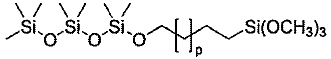 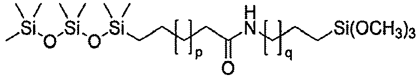 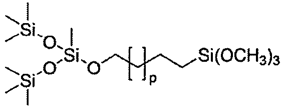 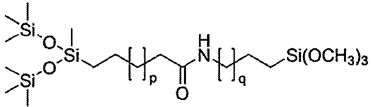 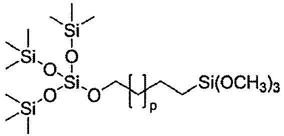 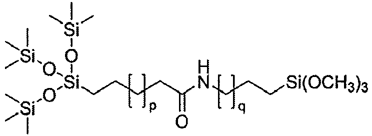 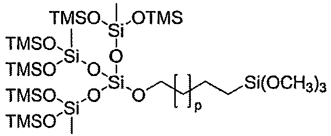 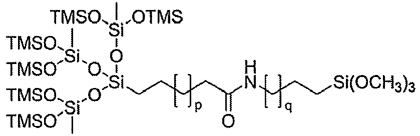 wherein TMSO is a trimethylsilyloxy group,
   p is each independently an integer of 1 to 30, and
   q is each independently an integer of 1 to 30; and
   the compound B is selected from the following compounds:

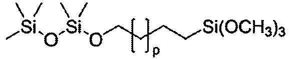

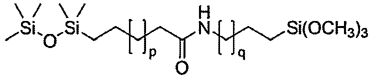

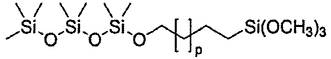

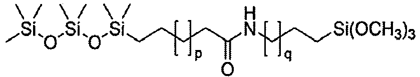

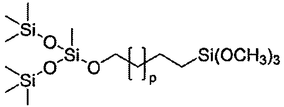

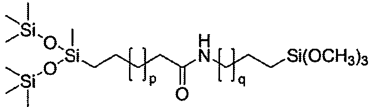

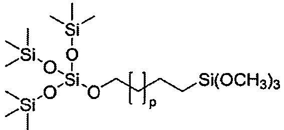

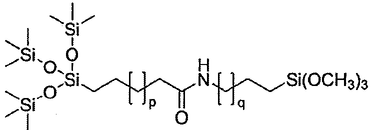

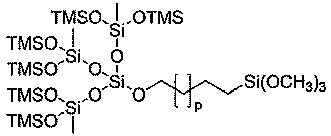

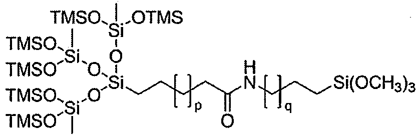

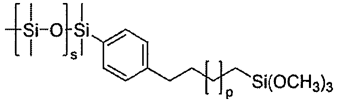

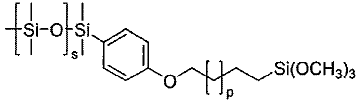

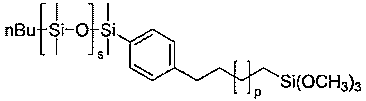

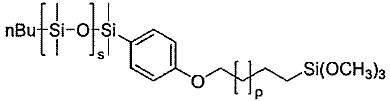

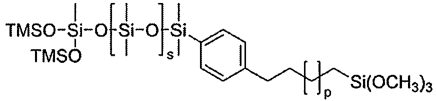

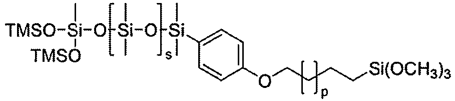

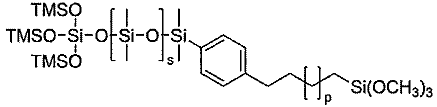

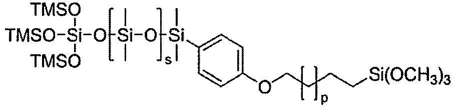

      CH₃Si(CH₃)₂O(Si(CH₃)₂O)ₙSi(CH₃)₂(CH₂)₁₀CONHCH₂CH₂CH₂Si(O CH₃)₃

      (CH₃CH₂CH₂CH₂Si(CH₃)₂(OSi(CH₃)₂)ₙ-(CH₂)₃-OCH₂-CONH-CH₂C{CH₂CH₂CH₂Si(OCH₃)₃}₃

      wherein
      TMSO is a trimethylsilyloxy group,
      p is each independently an integer of 1 to 30,
      q is each independently an integer of 1 to 30,
      s is each independently an integer of 1 to 60, and
      n is each independently an integer of 10 to 70.
[22] The composition according to any one of Items [1] to [20], wherein the compound A is

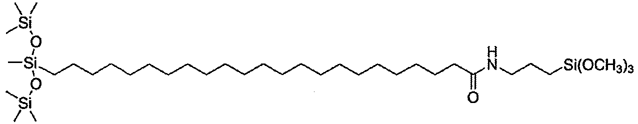

   [(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH₂CH₂CH₂Si (OCH₃)₃]₂

   (n = 26)

   [(CH₃)₃SiO]₃SiO(Si(CH₃)₂O)ₙSi(CH₃)₂CH₂CH₂CH₂CH₂CH₂CH₂CH₂CH₂CH₂ CH₂CONHCH₂C[CH₂CH₂CH₂Si(OCH₃)₃]₃

   (n = 23) and
   the compound B is a compound selected from

   CH₃Si(CH₃)₂O(Si(CH₃)₂O)ₙSi(CH₃)₂(CH₂)₁₀CONHCH₂CH₂CH₂Si(OCH₃)₃

   (n is an integer of 10 to 30)

   (CH₃CH₂CH₂CH₂Si(CH₃)₂(OSi(CH₃)₂)₅₇-(CH₂)₃-OCH₂-CONH-CH₂C{CH₂CH₂CH₂Si(OCH₃)₃}₃ 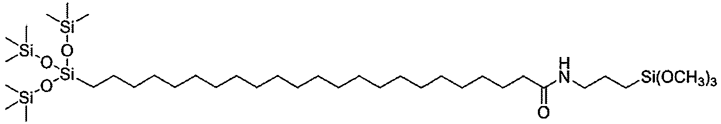 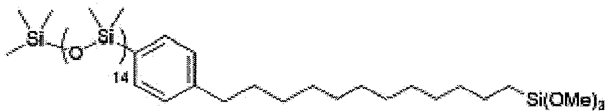 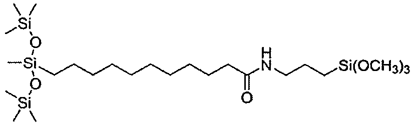 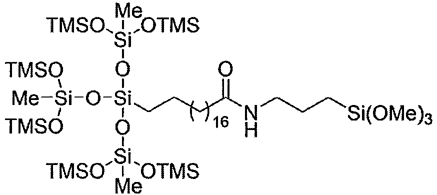 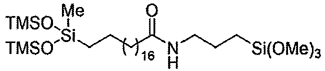
   wherein TMSO is trimethylsilyloxy, and Me is a methyl group.

      CH₃[Si(CH₃)₂O]ₙSi(CH₃)₂(CH₂)₂₂CONH-CH₂CH[CH₂CH₂CH₂Si(OCH₃)₃]₂
   (n = 57)

      [(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH₂CH₂CH₂CH ₂CH₂CH₂CH₂CH₂CH₂CH₂CH₂Si (OCH₃)₃]₂

      (n = 17)
[23] The composition according to any one of Items [1] to [22], wherein a mass ratio of contents of the compound A and the compound B contained in the composition is 1:99 to 99:1.
[24] A surface-treating agent comprising the composition according to any one of Items [1] to [23].
[25] The surface-treating agent according to Item [24], comprising a condensate of the compound A and the compound B.
[26] The surface-treating agent according to Item [24] or [25], which is for vacuum deposition.
[27] The surface-treating agent according to Item [24] or [25], which is for wet coating.
[28] A pellet comprising the surface-treating agent according to any one of Items [24] to [27].
[29] An article comprising a substrate and a layer on the substrate, wherein the layer is formed from the surface-treating agent according to any one of Items [24] to [27].
[30] The article according to Item [29], comprising, between the substrate and the aforementioned layer, a silicon oxide-containing intermediate layer.
[31] The article according to Item [30], wherein the intermediate layer comprises an alkali metal atom.
[32] The article according to Item [31], wherein the alkali metal atom is at least partially sodium atom.
[33] The article according to any one of Items [29] to [32], which is an optical member.
[34] The article according to any one of Items [29] to [33], which is a display.

### Advantageous Effect of Invention

The composition of the present disclosure can allow a surface-treating layer excellent in fingerprint removability by wiping to be realized.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a carbon-containing divalent group. The divalent organic group may be, for example, a divalent group obtained by further removing one hydrogen atom from the organic group. Similarly, an organic group having a valence of 3 or more refers to a group obtained by removing a predetermined number of hydrogen atoms from an organic group.

The "hydrocarbon group" as used herein refers to a group containing carbon and hydrogen and a group in which a hydrogen atom is removed from the hydrocarbon. Examples of the hydrocarbon group include, but are not limited to, C₁₋₆₀ hydrocarbon groups, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group may be substituted with one or more substituents.

Examples of the substituent of the "hydrocarbon group" as used herein include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group each optionally substituted with one or more halogen atoms.

The "hydrolyzable group" as used herein refers to a group that can undergo a hydrolysis reaction, i.e., refers to a group that can be removed from the main backbone of the compound by a hydrolysis reaction. Examples of the hydrolyzable group include -OR^{h}, -OCOR^{h}, -O-N=CR^{h}₂, -NR^{h}₂, -NHR^{h}, -NCO, halogen (in these formulae, R^{h} represents a substituted or unsubstituted alkyl group having 1 to 4 carbon atoms), and -OR^{h} (i.e., an alkoxy group) is preferable. Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable.

The term "arylene group" as used herein refers to a divalent aromatic group. The arylene group may be a monocyclic aromatic group or may be a polycyclic aromatic group. The arylene group is, for example, a divalent mono- to tricyclic aromatic group, and specific examples include the following divalent group obtained by removing two hydrogen atoms from benzene, naphthalene, anthracene, fluorene, or phenanthrene. The arylene group may be substituted with one or more substituents. The binding position is not limited.

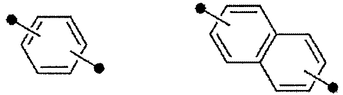

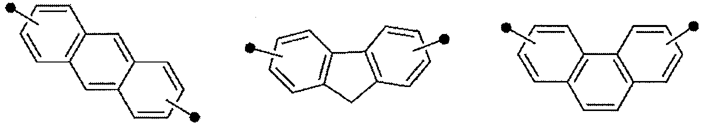

The composition of the present disclosure contains silane compounds represented by formula (1) and formula (2) :
(Compound A)

R^{A}_{α}-X^{1A}-R^{Si}_{β} (1)

(Compound B)

R^{B}_{α}-X^{1B}-R^{Si}_{β} (2)

wherein
R^{A} is a group containing a group represented by the following group A or group B:

   R⁵¹ₙₐR⁵²₃₋ₙₐSi-(O)_{z}- (A)

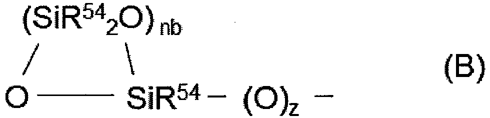

   (wherein
   R⁵¹ is each independently a group represented by R⁵³-(SiR⁵³₂-R⁶⁶)ₘₐ-,
      R⁶⁶ is each independently a single bond, an oxygen atom, or a C₁₋₆ alkylene group,
      R⁵³ is each independently a hydrocarbon group or R^{51'},
         R^{51'} has the same meaning as R⁵¹,
      ma is each independently an integer of 1 to 5, provided that the number of R^{51'} in R⁵¹ is 20 or less,
   R⁵² is each independently a hydrocarbon group,
   na is an integer of 1 to 3,
   R⁵⁴ is each independently a hydrocarbon group,
   nb is an integer of 1 to 5, and
   z is 0 or 1);
   R^{B} is a monovalent group containing one or more Si atoms to which neither a hydroxyl group nor a hydrolyzable group is directly bonded, or a hydrocarbon group;
   provided that R^{A} and R^{B} are different groups;
   R^{Si} is each independently a monovalent group containing a Si atom to which a hydroxyl group or a hydrolyzable group is bonded;
   X^{1A} is each independently a di- to decavalent group containing an alkyl group having 7 or more carbon atoms;
   X^{1B} is each independently a di- to decavalent group;
   α is each independently an integer of 1 to 9; and
   β is each independently an integer of 1 to 9.

The composition of the present disclosure can allow a surface-treating layer favorable in liquid repellency and fingerprint removability by wiping to be provided. While the present disclosure should not be interpreted to be limited to any particular theory, the reason why the composition of the present disclosure can exert such an effect is considered as follows. The composition of the present disclosure contains two or more silane compounds different in terminal structure. Therefore, it is considered that a gap is easily generated at a molecule level in a surface-treating layer formed with a compound having a large terminal structure, and it is considered that this gap is embedded with a compound having a small terminal structure to form a dense layer and then provide a surface which is enhanced in liquid repellency and which is favorable in fingerprint removability by wiping.

· R^{A} is different from R^{B} in the composition of the present disclosure. More specifically, the compound A is different from the compound B in terminal structure.

R^{A} is a group containing a group represented by the following group A or group B:

R⁵¹ₙₐR⁵²₃₋ₙₐSi-(O)_{z}- (A)

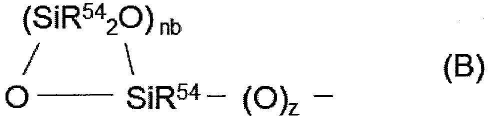

wherein
R⁵¹ is each independently a group represented by R⁵³-**(SiR⁵³₂-R⁶⁶) ma⁻,**
R⁶⁶ is each independently a single bond, an oxygen atom, or a C₁₋₆ alkylene group,
R⁵³ is each independently a hydrocarbon group or R⁵¹',
   R⁵¹' has the same meaning as R⁵¹,
ma is each independently an integer of 1 to 5,
provided that the number of R⁵¹' in R⁵¹ is 20 or less,
R⁵² is each independently a hydrocarbon group,
na is an integer of 1 to 3,
R⁵⁴ is each independently a hydrocarbon group,
nb is an integer of 1 to 5, and z is 0 or 1.

R^{B} is a group different from R^{A}, and is a monovalent group containing one or more Si atoms to which neither a hydroxyl group nor a hydrolyzable group is directly bonded, or a hydrocarbon group.

The "R^{B} being a group different from R^{A"} may also include a case where their isomers are different. Such an isomer encompasses a chain isomer, a positional isomer, a geometric isomer, and an optical isomer.

The monovalent group containing one or more Si atoms to which neither a hydroxyl group nor a hydrolyzable group is directly bonded may contain a Si atom to which a hydroxyl group or a hydrolyzable group is directly bonded.

In one embodiment, the monovalent group containing one or more Si atoms to which neither a hydroxyl group nor a hydrolyzable group is directly bonded does not contain a Si atom to which a hydroxyl group or a hydrolyzable group is directly bonded.

In another embodiment, the monovalent group containing one or more Si atoms to which neither a hydroxyl group nor a hydrolyzable group is directly bonded contains one or more Si atoms to which a hydroxyl group or a hydrolyzable group is directly bonded.

In one embodiment, R^{A} and R^{B} are each a group represented by the following formula:

R^{1a}-(R^{S})_{γ1}-(SiR^{2a}₂)_{γ2}-(R^{Ar})_{γ3}-,

R^{1b}-(R^{S})_{γ1}-(SiR^{2a}₂)γ₂-(R^{Ar})_{γ3}-

wherein
R^{1a} is each independently a group A or a group B,
R^{1b} is each independently a hydrocarbon group, a group A or a group B,
R^{S} is each independently a group represented by the following formula: 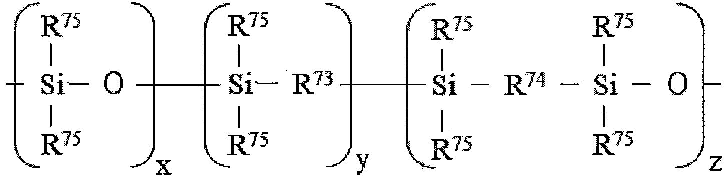 (wherein
   R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, *-*R⁷⁸*-*R⁷⁷*-*R⁷⁹*-*R⁷⁷*-*R⁷⁸*-,* -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted arylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula.

In R^{B}, the hydrocarbon group in R^{1b} is preferably a C₁₋₁₂ alkyl group.

The C₁₋₁₂ alkyl group in R^{1b} may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₄ alkyl group, even more preferably a methyl group or an ethyl group, and particularly preferably a methyl group.

The C₁₋₁₂ alkyl group in R^{1b} is preferably a C₁₋₆ alkyl group, more preferably a C₁₋₄ alkyl group, and even more preferably a n-butyl group.

### (Group A)

R⁵¹ₙₐR⁵²₃₋ₙₐSi-(O)_{z}- (A)

R⁵¹ is each independently a group represented by R⁵³-(SiR⁵³₂-R⁶⁶)ₘₐ-.

R⁶⁶ is each independently a single bond, an oxygen atom, or a C₁₋₆ alkylene group.

The C₁₋₆ alkylene group in R⁶⁶ may be linear or may be branched. The C₁₋₆ alkylene group is preferably a C₁₋₄ alkylene group, and more preferably a C₂₋₄ alkylene group.

In one embodiment, R⁶⁶ is an oxygen atom, or a C₁₋₆ alkylene group.

In one embodiment, R⁶⁶ is an oxygen atom.

In one embodiment, some R⁶⁶ groups are oxygen atoms, and other R⁶⁶ groups are C₁₋₆ alkylene groups.

R⁵³ is each independently a hydrocarbon group or R⁵¹'.

The hydrocarbon group in R⁵³ may preferably be an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, a n-butyl group, or a tert-butyl group.

The aryl group may be monocyclic or may be polycyclic. The aryl group is preferably an aryl group having 6 to 20 carbon atoms, and more preferably an aryl group having 6 to 10 carbon atoms. The aryl group is particularly preferably a phenyl group.

R⁵³ is preferably an alkyl group, and more preferably an alkyl group having 1 to 4 carbon atoms.

R⁵¹' has the same meaning as R⁵¹. That is, R⁵¹' is R⁵³-(SiR⁵³₂O)ₘₐ-. However, in R⁵¹, the number of R^{51'} is 20 or less, preferably 10 or less, more preferably 6 or less, and even more preferably 3 or less.

In one embodiment, R⁵³ is each independently a hydrocarbon group or R^{51'}.

In a preferable embodiment, R⁵³ is each independently a hydrocarbon group.

In one embodiment, R⁵³ is R^{53'}-(SiR^{53'}₂-R^{66'})_{ma'}- wherein
R⁵³' is each independently a hydrocarbon group or R⁵³-(SiR⁵³₂-R⁶⁶)ₘₐ-,
at least one R^{53'} is R⁵³-(SiR⁵³₂-R⁶⁶)ₘₐ-,
   R⁵³ is each independently a hydrocarbon group,
   R⁶⁶ is each independently a single bond, an oxygen atom, or a C₁₋₆ alkylene group,
   ma is each independently an integer of 1 to 5,
R⁶⁶' is each independently an oxygen atom or a C₁₋₆ alkylene group, and
ma' is each independently an integer of 1 to 5.

In another embodiment, R⁵³ is R⁵³'-(SiR^{53'}₂-R^{66'} )_{ma'}- wherein
R^{53'} is each independently a hydrocarbon group or R^{53"}-(SiR^{53"}₂-R^{66"})_{ma"}-,
at least one R^{53'} is R^{53"}-(SiR^{53"}₂-R^{66"})_{ma"}-,
   R^{53"} is each independently a hydrocarbon group or R⁵³- (SiR⁵³₂-R⁶⁶)ₘₐ-,
   at least one R^{53"} is R⁵³- (SiR⁵²₂-R⁶⁶)ₘₐ-,
      R⁵³ is each independently a hydrocarbon group,
      R⁶⁶ is each independently an oxygen atom or a C₁₋₆ alkylene group,
      ma is each independently an integer of 1 to 5,
   R^{66"} is each independently an oxygen atom or a C₁₋₆ alkylene group,
   ma" is each independently an integer of 1 to 5,
R⁶⁶' is each independently an oxygen atom or a C₁₋₆ alkylene group, and
ma' is each independently an integer of 1 to 5.

ma is each independently an integer of 1 to 5, and preferably 1 or 2.

R⁵² is each independently a hydrocarbon group.

The hydrocarbon group in R⁵² may be preferably an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, a n-butyl group, or a tert-butyl group.

The aryl group may be monocyclic or may be polycyclic. The aryl group is preferably an aryl group having 6 to 20 carbon atoms, and more preferably an aryl group having 6 to 10 carbon atoms. The aryl group is particularly preferably a phenyl group.

R⁵² is preferably an alkyl group, and more preferably an alkyl group having 1 to 4 carbon atoms.

na is an integer of 1 to 3. In one embodiment, na is 2. In another embodiment, na is 3. Note that na, when R^{51'} is present, is independently selected for (SiR⁵³₂-R⁶⁶)ₘₐ.

z is 0 or 1. In one embodiment, z is 0. In another embodiment, z is 1.

In a preferable embodiment, in the group A,
R⁵¹ is each independently a group represented by R⁵³-(SiR⁵³₂- R⁶⁶)ₘₐ-,
   R⁶⁶ is each independently a single bond, an oxygen atom, or a C₁₋₆ alkylene group, and preferably an oxygen atom or a C₁₋₆ alkylene group,
   R⁵³ is each independently a hydrocarbon group, and preferably an alkyl group having 1 to 4 carbon atoms,
   ma is 1 or 2,
R⁵² is each independently a hydrocarbon group, and preferably an alkyl group having 1 to 4 carbon atoms, and
na is 1 or 2.

Examples of the group A include, but are not limited to, the following groups:

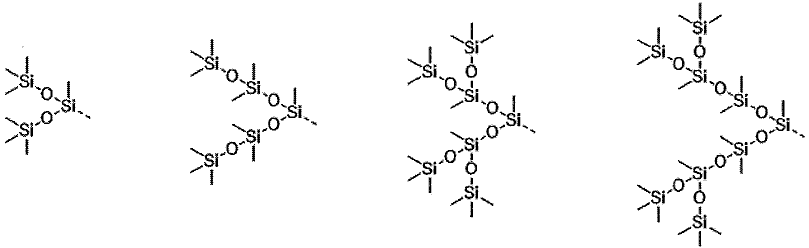

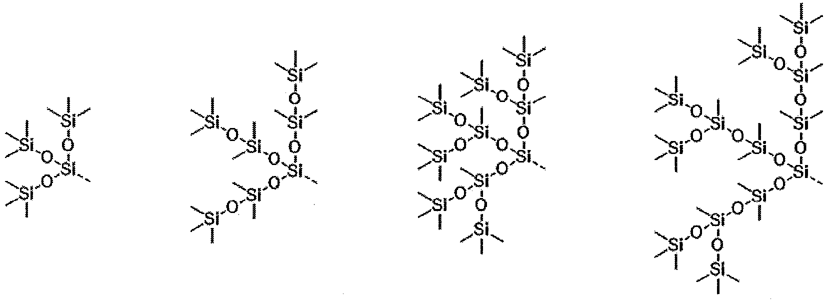

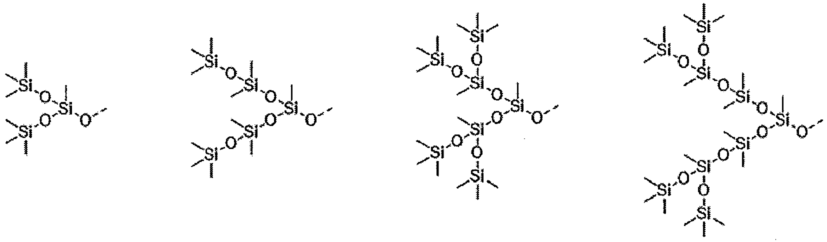

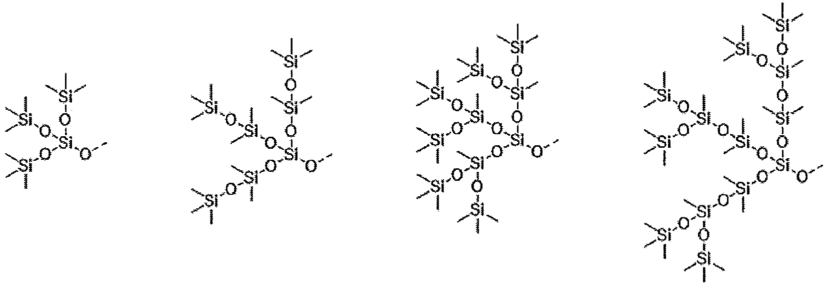

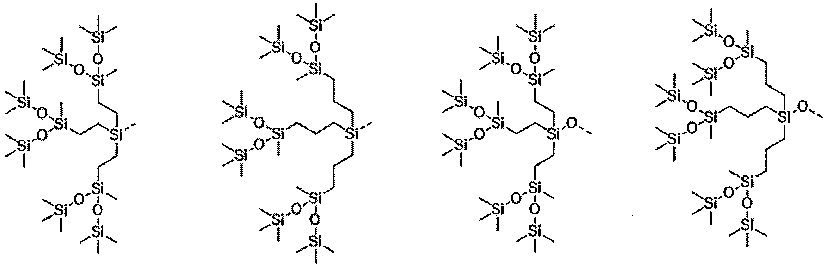

In one embodiment, the group A is the following group:

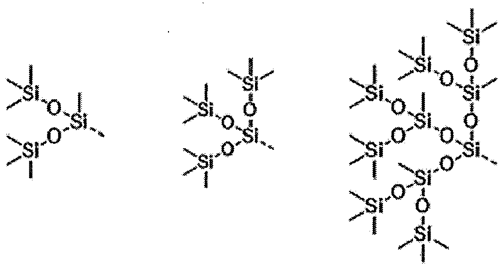

### (Group B)

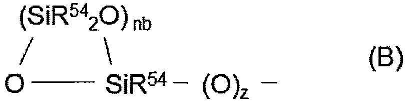

R⁵⁴ is each independently a hydrocarbon group.

The hydrocarbon group in R⁵⁴ may be preferably an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, a n-butyl group, or a tert-butyl group.

The aryl group may be monocyclic or may be polycyclic. The aryl is preferably an aryl group having 6 to 20 carbon atoms, and more preferably an aryl group having 6 to 10 carbon atoms. The aryl group is particularly preferably a phenyl group.

R⁵⁴ is preferably an alkyl group, and more preferably an alkyl group having 1 to 4 carbon atoms.

nb is an integer of 1 to 5, and preferably 2 or 3.

In a preferable embodiment, in the group B,
R⁵⁴ is each independently a hydrocarbon group, and preferably an alkyl group having 1 to 4 carbon atoms, and
nb is 2 or 3.

Examples of the group B include, but are not limited to, the following groups.

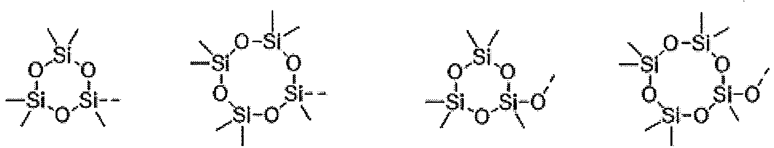

R^{S} is each independently a group represented by the following formula: 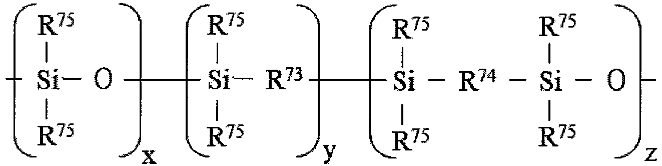 (wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹- ,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R79-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted arylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula.

R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-O-R⁷⁶-.

In one embodiment, R⁷³ is a single bond.

In one embodiment, R⁷³ is a C₁₋₁₂ alkylene group, -R⁷⁶-O-R⁷⁶₋, -R⁷⁸-R⁷⁷-R⁷⁸-, -R⁷⁸-R⁷⁷-R79-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-O-R⁷⁶-.

R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R79-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷⁴ is each independently a C₁₋₁₂ alkylene group, or -R⁷⁶-O-R⁷⁶-.

In another embodiment, R⁷⁴ is each independently -R⁷⁸-R⁷⁷-R⁷⁸-, -R⁷⁸-R⁷⁷-R79-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷³ is each independently a C₁₋₁₂ alkylene group or -R⁷⁶-O-R⁷⁶-, and R⁷⁴ is each independently a C₁₋₁₂ alkylene group or -R⁷⁶-O-R⁷⁶-.

In another embodiment, R⁷³ is each independently a C₁₋₁₂ alkylene group or -R⁷⁶-O-R⁷⁶-, and R⁷⁴ is each independently -R⁷⁸-R⁷⁷-R⁷⁸-, -R⁷⁸-R⁷⁷-R79-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

The C₁₋₁₂ alkylene group may be linear or may be branched. The C₁₋₁₂ alkylene group is preferably linear.

The C₁₋₁₂ alkylene group is preferably a C₂₋₈ alkylene group, and more preferably a C₂₋₆ alkylene group.

R⁷⁶ is each independently a C₁₋₆ alkylene group. The C₁₋₆ alkylene group may be linear or may be branched. The C₁₋₆ alkylene group is preferably linear.

The C₁₋₆ alkylene group is preferably a C₂₋₄ alkylene group, and more preferably a C₂₋₃ alkylene group.

In a preferable embodiment, in a group containing a plurality of R⁷⁶, all R⁷⁶ are the same group.

R⁷⁷ is each independently an optionally substituted arylene group.

In one embodiment, R⁷⁷ is each independently

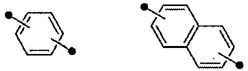

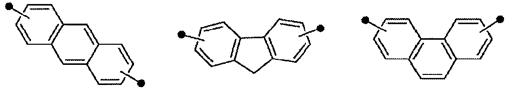

In one embodiment, R⁷⁷ is a phenylene group.

In another embodiment, R⁷⁷ is a naphthylene group.

The arylene group may have a substituent. The number of substituents is not limited, and is, for example, 1 to 4, and preferably 1 or 2.

In one embodiment, the phenylene group and the naphthylene group may have a substituent. The number of substituents is not limited, and is, for example, 1 to 4, and preferably 1 or 2. The substituted phenylene group is preferably 2,5-substituted phenylene.

The substituent with respect to the arylene group is each independently -R¹⁴¹-R¹⁴².

R¹⁴¹ is a single bond, an oxygen atom, or a sulfur atom, preferably a single bond or an oxygen atom, and more preferably an oxygen atom.

R¹⁴² is a C₁₋₁₂ alkyl group, -(O-R¹⁴³)ₚ, -R¹⁴⁴-R¹⁴⁵, or - R¹⁴⁴-OR¹⁴⁶, all of which are optionally substituted with a halogen.

The halogen is fluorine, chlorine, bromine, or iodine, and is preferably fluorine.

The C₁₋₁₂ alkyl group in R¹⁴² may be linear or may be branched.

R¹⁴³ is a C₁₋₆ alkylene group, and preferably a C₂₋₄ alkylene group. Such an alkylene group may be linear or may be branched.

R¹⁴⁴ is a C₁₋₁₂ alkylene group, and preferably a C₁₋₆ alkylene group. Such an alkylene group may be linear or may be branched.

R¹⁴⁵ is -CH=CH₂, or -OCOCH=CH₂.

R¹⁴⁶ is a hydrogen atom or a C₁₋₆ alkyl group. Such an alkyl group may be linear or may be branched. The C₁₋₆ alkyl group is preferably a C₁₋₃ alkyl group, more preferably a C₁₋₂ alkyl group, and even more preferably a methyl group.

R⁷⁸ is each independently a single bond or a C₁₋₆ alkylene group. Such a C₁₋₆ alkylene group may be linear or may be branched.

In one embodiment, R⁷⁸ is a single bond.

In another embodiment, R⁷⁸ is a C₁₋₈ alkylene group.

R⁷⁹ is each independently a single bond or an oxygen atom.

In one embodiment, R⁷⁹ is a single bond.

In another embodiment, R⁷⁹ is an oxygen atom.

R⁷⁵ is each independently a hydrocarbon group. Such a hydrocarbon group may be substituted.

R⁷⁵ is each independently preferably an unsubstituted hydrocarbon group, or a hydrocarbon group substituted with a halogen atom.

R⁷⁵ is, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, even more preferably a C₁₋₄ alkyl group, and yet more preferably a methyl group.

The aryl group is preferably a phenyl group.

In one embodiment, R⁷⁵ is each independently a C₁₋₆ alkyl group, preferably a C₁₋₄ alkyl group, and more preferably a methyl group.

In another embodiment, R⁷⁵ is a phenyl group.

In another embodiment, R⁷⁵ is each independently a methyl group or a phenyl group, and preferably a methyl group.

x is an integer of 0 to 500, preferably an integer of 0 to 300, more preferably an integer of 0 to 100, even more preferably an integer of 1 to 100, yet more preferably an integer of 5 to 60, and yet more preferably an integer of 10 to 30.

In one embodiment, x is 0.

In one embodiment, x is an integer of 1 to 500, preferably an integer of 1 to 300, more preferably an integer of 1 to 100, even more preferably an integer of 5 to 60, yet more preferably an integer of 10 to 60, and particularly preferably an integer of 10 to 30, and is, for example, an integer of 2 to 100, 2 to 50, 2 to 30, 5 to 100, 5 to 50, 5 to 30, or 5 to 20. By allowing x to fall within such a range, the friction durability of the resulting surface-treating layer is enhanced.

In another embodiment, x is an integer of 10 to 500, more preferably an integer of 10 to 100, and even more preferably an integer of 10 to 80, and is, for example, an integer of 20 to 500, 20 to 100, 20 to 80, 30 to 80, 40 to 80, or 40 to 70. By allowing x to fall within such a range, the tactile sensations and the lubricity of the resulting surface-treating layer are enhanced.

y is an integer of 0 to 500, preferably an integer of 0 to 300, more preferably an integer of 0 to 100, even more preferably an integer of 1 to 100, yet more preferably an integer of 5 to 60, and yet more preferably an integer of 10 to 30.

In one embodiment, y is 0.

In one embodiment, y is an integer of 1 to 500, preferably an integer of 1 to 300, more preferably an integer of 1 to 100, even more preferably an integer of 5 to 60, yet more preferably an integer of 10 to 60, and particularly preferably an integer of 10 to 30, and is, for example, an integer of 2 to 100, 2 to 50, 2 to 30, 5 to 100, 5 to 50, 5 to 30, or 5 to 20. By allowing y to fall within such a range, the friction durability of the resulting surface-treating layer is enhanced.

In another embodiment, y is an integer of 10 to 500, more preferably an integer of 10 to 100, and even more preferably an integer of 10 to 80, and is, for example, an integer of 20 to 500, 20 to 100, 20 to 80, 30 to 80, 40 to 80, or 40 to 70. By allowing y to fall within such a range, the tactile sensations and the lubricity of the resulting surface-treating layer are enhanced.

z is an integer of 0 to 500, preferably an integer of 0 to 300, more preferably an integer of 0 to 100, even more preferably an integer of 1 to 100, yet more preferably an integer of 5 to 60, and yet more preferably an integer of 10 to 30.

In one embodiment, z is 0.

In one embodiment, z is an integer of 1 to 500, preferably an integer of 1 to 300, more preferably an integer of 1 to 100, even more preferably an integer of 5 to 50, yet more preferably an integer of 10 to 60, and particularly preferably an integer of 10 to 30, and is, for example, an integer of 2 to 100, 2 to 50, 2 to 30, 5 to 100, 5 to 50, 5 to 30, or 5 to 20. By allowing z to fall within such a range, the friction durability of the resulting surface-treating layer is enhanced.

In another embodiment, z is an integer of 10 to 500, more preferably an integer of 10 to 100, and even more preferably an integer of 10 to 80, and is, for example, an integer of 20 to 500, 20 to 100, 20 to 80, 30 to 80, 40 to 80, or 40 to 70. By allowing z to fall within such a range, the tactile sensations and the lubricity of the resulting surface-treating layer are enhanced.

In one embodiment, y is 0, and z is 0.

In another embodiment, x is 0, and y is 0.

In yet another embodiment, x is 0, and z is 0.

The R^{S} group may be a random polymer, or may be a block polymer.

R^{2a} is each independently a hydrocarbon group.

The hydrocarbon group in R^{2a} is preferably a C₁₋₁₂ alkyl group.

The C₁₋₁₂ alkyl group in R^{2a} may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₄ alkyl group, even more preferably a methyl group or an ethyl group, and particularly preferably a methyl group.

The C₁₋₁₂ alkyl group in R^{2a} is preferably a C₁₋₆ alkyl group, more preferably a C₁₋₄ alkyl group, and even more preferably a n-butyl group.

R^{Ar} is each independently a divalent aromatic group.

In one embodiment, R^{Ar} is each independently

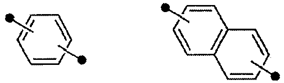

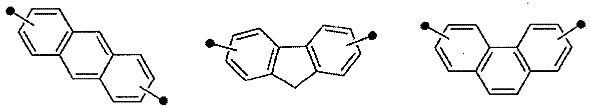

In one embodiment, R^{Ar} may be an o-phenylene group, a m-phenylene group, a p-phenylene group, a 2-methyl-1,4-phenylene group, a 2,5-dimethyl-1,4-phenylene group, a 1,2-naphthylene group, a 1,4-naphthylene group, a 1,5-naphthylene group, a 9,10-anthrylene group, a 9,10-phenanthrylene group, or a 4,4'-biphenylylene group.

In a preferable embodiment, R^{Ar} is a phenylene group, and particularly preferably a p-phenylene group.

The divalent aromatic group may have a substituent. The number of substituents is not limited, and is, for example, 1 to 4, and preferably 1 or 2.

In a preferable embodiment, R^{Ar} is an unsubstituted phenylene group.

γ1 is 0 or 1. In one embodiment, γ1 is 0. In one embodiment, γ1 is 1.

γ2 is 0 or 1, and in one embodiment, γ2 is 0. In one embodiment, γ2 is 1.

γ3 is 0 or 1, and in one embodiment, γ3 is 0. In one embodiment, γ3 is 1.

In one embodiment, in the compound A, γ1 is 0, γ2 is 0, and γ3 is 0 or 1, and in the compound B, γ1 is 1, γ2 is 1, and γ3 is 0 or 1,

In one embodiment, R^{A} is a group having a branched structure of at least one Si.

The branched structure is preferably the following structure: 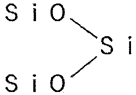 In the formula, a Si atom is tetravalent, but other bonds are not denoted.

In one embodiment, the branched structure may be the following structure: 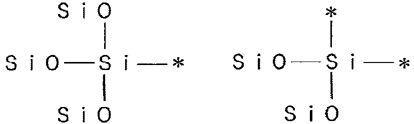 [* represents a bonding site]

That is, the structure may be branched to two SiO or may be branched to three SiO. In the formula, a Si atom in SiO is tetravalent, but other bonds are not denoted. The bonding site represented by * may be bonded to any other group not bonded to X^{1A} or X^{1B} that may be contained in R^{A} or R^{B}, may be bonded to a group bonded to X^{1A} or X^{1B} that may be contained in R^{A} or R^{B}, or may be directly bonded to X^{1A} or X^{1B}. When 2 or more * are contained in the branched structure, these * are each independently optionally bonded to any other group not bonded to X^{1A} or X^{1B} that may be contained in R^{A} or R^{B}, optionally bonded to a group bonded to X^{B} that may be contained in R^{sb}, or X^{B}, and at least one * is preferably bonded to X^{1A} or X^{1B}, or a group bonded to X^{1A} or X^{1B}.

### [X^{1A} and X^{1B}]

X^{1A} and X^{1B} are each a single bond, or a di- to decavalent group.

X^{1A} and X^{1B} are interpreted as a linker connecting the moiety (R^{A} or R^{B}) that mainly provides functions such as water-repellency and the silane moiety (R^{Si}) that provides an ability to bind to a substrate. Accordingly, X^{1A} and X^{1B} are not limited as long as the silane compound represented by the formula (1) and (2) can stably exist.

In the formula (1) and (2), α is an integer of 1 to 9, and β is an integer of 1 to 9. These α and β may vary depending on the valence of X^{1A} and X^{1B}. The sum of α and β is the same as the valence of X^{1A} and X^{1B}. For example, when X^{1A} and X^{1B} are each a decavalent organic group, the sum of α and β is 10. For example, α may be 9, and β may be 1; α may be 5, and β may be 5; or α may be 1, and β may be 9. When X¹ is a divalent organic group, α and β are each 1.

X^{1A} and X^{1B} are each a di- to decavalent group. X^{1A} is preferably each independently a di- to decavalent group containing an alkyl group having 7 or more carbon atoms. In the following, the left sides of X^{1A} and X^{1B} groups bind to R^{A} or R^{B} and the right sides thereof bind to R^{Si}.

The di- to decavalent group is preferably a di- to tetravalent group, and more preferably a divalent group. In another embodiment, the di- to decavalent organic group is preferably a tri- to octavalent organic group, and more preferably a tri- to hexavalent organic group.

In one embodiment, X^{1A} and X^{1B} are each a divalent group, and α and β are 1.

In one embodiment, X^{1A} and X^{1B} are each a tri- to hexavalent group, α is 1, and β is 2 to 5.

In one embodiment, X^{1A} and X^{1B} are each a trivalent organic group; and α is 2 and β is 1, or α is 1 and β is 2.

In one embodiment, X^{1A} and X^{1B} may each be a divalent organic group containing an alkylene group having 3 or more, 6 or more, 7 or more, 10 or more, 11 or more, 12 or more, 16 or more, 18 or more, or 22 or more carbon atoms. The number of carbon atoms of the alkylene group may be, for example, 60 or less, 40 or less, 36 or less, 32 or less, 30 or less, 28 or less, or 24 or less. The number of carbon atoms of the alkylene group in X¹ may be preferably 3 to 60, more preferably 6 to 40, even more preferably 10 to 30, and yet more preferably 11 to 30.

The alkylene group in X^{1A} and X^{1B} may be linear or may be branched. The alkylene group in X^{1A} and X^{1B} is preferably linear.

In one embodiment, X^{1A} and X^{1B} may each be a divalent organic group containing a partial structure selected from -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, -O- (CH₂)ₓ₃-CONR⁴¹-, -O-(CH₂)ₓ₃-NR⁴¹CO-, and -O-(CH₂)ₓ₃-CO-. R⁴¹ is a hydrogen atom or a C₁₋₆ alkyl group, and x3 is an integer of 1 to 30 (preferably an integer of 1 to 20, for example, an integer of 1 to 10, 11 to 30, or 11 to 20).

In one embodiment, the partial structures contained in X¹ in the formula (1) and the formula (2) are the same. In another embodiment, the partial structures contained in X^{A} in the formula (1) and the formula (2) are different from each other.

Examples of a combination of the partial structure contained in X¹ in the formula (1) and the partial structure contained in X^{A} in the formula (2), or the partial structure contained in X¹ in the formula (2) and the partial structure contained in X^{A} in the formula (1) include
a single bond and a single bond; a single bond and -CO-; a single bond and -COO-; a single bond and - OCO-; a single bond and -NR⁴¹-; a single bond and -CONR⁴¹-; a single bond and -NR⁴¹CO-; a single bond and -OCONR⁴¹-; a single bond and -NR⁴¹COO-; a single bond and -NR⁴¹-CO-NR⁴¹-; a single bond and -O-; a single bond and -S-; a single bond and -O-(CH₂)ₓ₃-CONR⁴¹-; a single bond and -O-(CH₂)ₓ₃-NR⁴¹CO-; and a single bond and -O-(CH₂)ₓ₃-CO-;
-CO- and -CO-; -CO- and -COO-; -CO- and -OCO-; -CO- and -NR⁴¹-; -CO- and -CONR⁴¹-; -CO- and -NR⁴¹CO-; -CO- and -OCONR⁴¹-; -CO- and -NR⁴¹COO-; -CO- and -NR⁴¹-CO-NR⁴¹-; -CO- and -O-; -CO- and -S-; -CO- and -O-(CH₂)ₓ₃-CONR⁴¹-; -CO- and -O-(CH₂)ₓ₃-NR⁴¹CO-; and -CO- and -O-(CH₂)ₓ₃-CO-
-COO- and -COO-; -COO- and -OCO-; -COO- and -NR⁴¹-; - COO- and -CONR⁴¹-; -COO- and -NR⁴¹CO-; -COO- and -OCONR⁴¹-; -COO- and -NR⁴¹COO-; -COO- and -NR⁴¹-CO-NR⁴¹-; -COO- and - O-; -COO- and -S-; -COO- and -O-(CH₂)ₓ₃-CONR⁴¹-; -COO- and -O- (CH₂)ₓ₃-NR⁴¹CO-; and -COO- and -O- (CH₂)ₓ₃-CO-;
-OCO- and -OCO-; -OCO- and -NR⁴¹-; -OCO- and -CONR⁴¹-; -OCO- and -NR⁴¹CO-; -OCO- and -OCONR⁴¹-; -OCO- and -NR⁴¹COO-; -OCO- and -NR⁴¹-CO-NR⁴¹-; -OCO- and -O-; -OCO- and -S-; - OCO- and -O-(CH₂)ₓ₃-CONR⁴¹-; -OCO- and -O-(CH₂)ₓ₃-NR⁴¹CO-; and -OCO- and -O-(CH₂)ₓ₃-CO-;
-NR⁴¹- and -NR⁴¹-; -NR⁴¹- and -CONR⁴¹-; -NR⁴¹- and - NR⁴¹CO-; -NR⁴¹- and -OCONR⁴¹-; -NR⁴¹- and -NR⁴¹COO-; -NR⁴¹- and -NR⁴¹-CO-NR⁴¹-; -NR⁴¹- and -O-; -NR⁴¹- and -S-; -NR⁴¹- and -O- (CH₂)ₓ₃-CONR⁴¹-; -NR⁴¹- and -O-(CH₂)ₓ₃-NR⁴¹CO-; and - NR⁴¹- and -O- (CH₂)ₓ₃-CO-;
-CONR⁴¹- and -CONR⁴¹-; -CONR⁴¹- and -NR⁴¹CO-; -CONR⁴¹- and -OCONR⁴¹-; -CONR⁴¹- and -NR⁴¹COO-; -CONR⁴¹- and -NR⁴¹-CO-NR⁴¹-; -CONR⁴¹- and -O-; -CONR⁴¹- and -S-; -CONR⁴¹- and -O-(CH₂) ₓ₃-CONR⁴¹-; -CONR⁴¹- and -O- (CH₂)ₓ₃-NR⁴¹CO-; and -CONR⁴¹- and -O-(CH₂)ₓ₃-CO-;
-NR⁴¹CO- and -NR⁴¹CO-; -NR⁴¹CO- and -OCONR⁴¹-; -NR⁴¹CO- and -NR⁴¹COO-; -NR⁴¹CO- and -NR⁴¹-CO-NR⁴¹-; -NR⁴¹CO- and -O-; -NR⁴¹CO- and -S-; -NR⁴¹CO- and -O- (CH₂)ₓ₃-CONR⁴¹-; -NR⁴¹CO- and -O-(CH₂)ₓ₃-NR⁴¹CO-; and -NR⁴¹CO- and -O- (CH₂)ₓ₃-CO-;
-OCONR⁴¹- and -OCONR⁴¹-; -OCONR⁴¹- and -NR⁴¹COO-; - OCONR⁴¹- and -NR⁴¹-CO-NR⁴¹-; -OCONR⁴¹- and -O-; -OCONR⁴¹- and -S-; -OCONR⁴¹- and -O-(CH₂)ₓ₃-CONR⁴¹-; -OCONR⁴¹- and -O-(CH₂)ₓ₃-N_{R}41CO-; and -OCONR⁴¹- and -O-(CH₂)ₓ₃-CO-;
-NR⁴¹COO- and -NR⁴¹COO-; -NR⁴¹COO- and -NR⁴¹-CO-NR⁴¹-; - NR⁴¹COO- and -O-; -NR⁴¹COO- and -S-; -NR⁴¹COO- and -O-(CH₂)ₓ₃-CONR⁴¹-; -NR⁴¹COO- and -O-(CH₂)ₓ₃-NR⁴¹CO-; and -NR⁴¹COO- and -O- (CH₂)ₓ₃-CO-;
-NR⁴¹-CO-NR⁴¹- and -NR⁴¹-CO-NR⁴¹-; -NR⁴¹-CO-NR⁴¹- and - O-; -NR⁴¹-CO-NR⁴¹- and -S-; -NR⁴¹-CO-NR⁴¹- and -O-(CH₂)ₓ₃-CONR⁴¹-; -NR⁴¹-CO-NR⁴¹- and -O- (CH₂)ₓ₃-N_{R}41CO-; and -NR⁴¹-CO-NR⁴¹- and -O-(CH₂)ₓ₃-CO-;
-O- and -O-; -O- and -S-; -O- and -O-(CH₂)ₓ₃-CONR⁴¹-; -O- and -O- (CH₂)ₓ₃-NR⁴¹CO-; and -O- and -O- (CH₂)ₓ₃-CO-;
-S- and -S-; -S- and -O- (CH₂)ₓ₃-CONR⁴¹-; -S- and -O-(CH₂)ₓ₃-NR⁴¹CO-; and -S- and -O- (CH₂)ₓ₃-CO-;
-O- (CH₂)ₓ₃-CONR⁴¹- and -O-(CH₂)ₓ₃-CONR⁴¹-; -O-(CH₂)ₓ₃-CONR⁴¹- and -O-(CH₂)ₓ₃-NR⁴¹CO-; and -O- (CH₂)ₓ₃-CONR⁴¹- and - O-(CH₂)ₓ₃-CO- ;
-O-(CH₂)ₓ₃-NR⁴¹CO- and -O-(CH₂)ₓ₃-NR⁴¹CO-; -O-(CH₂)ₓ₃-NR⁴¹CO- and -O-(CH₂)ₓ₃-CO-; and
-O-(CH₂)ₓ₃-CO- and -O-(CH₂)ₓ₃-CO-.

In one embodiment, X^{1A} and X^{1B} are each independently a group represented by the following formula:

-[(X²¹)ₓ₁-(X²²)ₓ₂]-:

wherein
X²¹ is each independently a single bond or a C₁₋₃₀ alkylene group,
X²² is each independently a single bond, -CO-, -COO-, -OCO-, -NR⁴¹-, -CONR⁴¹-, -NR⁴¹CO-, -OCONR⁴¹-, -NR⁴¹COO-, - NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)ₓ₃-CO-,
   R⁴¹ is a hydrogen atom or a C₁₋₆ alkyl group,
   x3 is an integer of 1 to 30,
x1 is an integer of 0 to 6,
x2 is an integer of 0 to 6, and
the occurrence order of the respective repeating units enclosed in parentheses provided with x1 or x2 is not limited in the formula.

X²¹ is each independently a single bond or a C₁₋₆₀ alkylene group.

In one embodiment, X²¹ is a single bond.

In one embodiment, X²¹ is a C₁₋₆₀ alkylene group.

In one embodiment, at least one X²¹ is a C₇₋₆₀ alkylene group.

In one embodiment, the number of carbon atoms in the C₁₋₆₀ alkylene group may be 3 or more, 7 or more, 10 or more, 11 or more, 12 or more, 16 or more, 18 or more, or 22 or more, and may be 60 or less, 40 or less, 36 or less, 32 or less, 30 or less, 28 or less, or 24 or less. The number of carbon atoms in the C₁₋₆₀ alkylene group may be preferably 3 to 60, more preferably 7 to 40, even more preferably 10 to 30, and yet more preferably 11 to 30. Note that, when plural X²¹ are present, the number of carbon atoms of each alkylene group may be different. For example, the number of carbon atoms of one X²¹ may be 1 to 6 and the number of carbon atoms of another X²¹ may be 10 to 30.

In one embodiment, the number of carbon atoms of the alkylene group may be preferably 10 to 60, more preferably 12 to 40, and even more preferably 18 to 30.

In another embodiment, the number of carbon atoms of the alkylene group may be preferably 11 to 60, more preferably 12 to 40, and even more preferably 18 to 30.

In one embodiment, the number of carbon atoms in the C₁₋₆₀ alkylene group may be 1 or more, 3 or more, or 4 or more, and may be 60 or less, 30 or less, 10 or less, 6 or less, 4 or less. The number of carbon atoms in the C₁₋₆₀ alkylene group may be preferably 1 to 10, more preferably 1 to 6, and even more preferably 3 to 6. Note that, when plural X²¹ are present, the number of carbon atoms of each alkylene group may be different. For example, the number of carbon atoms of one X²¹ may be 1 to 6 and the number of carbon atoms of another X²¹ may be 10 to 30.

X²² is each independently a single bond, -CO-, -COO-, -OCO-, -NR⁴¹-, -CONR⁴¹-, -NR⁴¹CO-, -OCONR⁴¹-, -NR⁴¹COO-, - NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)ₓ₃-CO-, R⁴¹ is a hydrogen atom or a C₁₋₆ alkyl group, x3 is an integer of 1 to 30, and R⁴¹ is a hydrogen atom or a C₁₋₆ alkyl group.

The C₁₋₆ alkyl group in R⁴¹ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group, more preferably a methyl group or an ethyl group, and particularly preferably a methyl group.

x3 is an integer of 1 to 30, and preferably an integer of 1 to 20, and may be, for example, an integer of 1 to 10, 11 to 30, or 11 to 20.

In one embodiment, X²² is -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, or -S-.

In a preferable embodiment, X²² is -CONR⁴¹-, -NR⁴¹CO-, or -O-.

x1 is an integer of 0 to 6, preferably an integer of 1 to 6, more preferably an integer of 1 to 4, and even more preferably 1 or 2.

x2 is an integer of 0 to 6, preferably an integer of 0 to 2, and is, for example, 0 or 1. In one embodiment, x2 is 0. In another embodiment, x2 is 1.

In a preferable embodiment, X^{1A} and X^{1B} are each independently a group represented by the following formula:

-X²¹-[(X²²)_{y1}-X²³-)_{y2}]-X²⁴-:

wherein
X²¹ is a C₁₋₆₀ alkylene group,
X²² is a single bond, -CO-, -COO-, -OCO-, -NR⁴¹-, - CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)x₃-CO-,
R⁴¹ is a hydrogen atom or a C₁₋₆ alkyl group,
   x3 is an integer of 1 to 30,
X²³ is each independently a C₁₋₆ alkylene group,
X²⁴ is a single bond or a C₁₋₆₀ alkylene group,
y1 is an integer of 1 to 3,
y2 is an integer of 0 to 3, and
the occurrence order of X²² and X²³ in [(X²²)_{y1}-(X²³)_{y2}] is not limited.

X²³ is a C₁₋₆ alkylene group.

The C₁₋₆ alkylene group in X²³ may be linear or may be branched. The C₁₋₆ alkylene group may be preferably a C₁₋₄ alkylene group, and more preferably a C₂₋₄ alkylene group.

X²⁴ is each independently a single bond or a C₁₋₆₀ alkylene group. The C₁₋₆₀ alkylene group in X²⁴ has the same meaning as the C₁₋₆₀ alkylene group in X²¹.

In a preferable embodiment, X^{1A} and X^{1B} are each independently a group represented by the following formula:

-X²¹-X²²-X²⁴-:

wherein
X²¹ is a C₇₋₄₀ alkylene group, and preferably a C₁₀₋₃₀ alkylene group,
X²² is -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)ₓ₃-CO-, preferably - CONR⁴¹- or -O-, and more preferably -CONR⁴¹-,
   R⁴¹ is a hydrogen atom or a C₁₋₆ alkyl group, and preferably a hydrogen atom,
   x3 is an integer of 1 to 30, and
X²⁴ is a C₂₋₆ alkylene group, and preferably CH₂CH₂CH₂.

In a preferable embodiment, X^{1A} and X^{1B} are each independently a group represented by the following formula:

-X²¹-X²²-X²³-X²²-X²⁴- :

wherein
X²¹ is a C₁₋₆ alkylene group, and preferably a C₃₋₆ alkylene group,
X²² is each independently -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)ₓ₃-CO-, preferably -CONR⁴¹- or -O-,
   R⁴¹ is a hydrogen atom or a C₁₋₆ alkyl group, and preferably a hydrogen atom,
   x3 is an integer of 1 to 30,
X²³ is each independently a C₁₋₆ alkylene group, preferably CH₂, and
X²⁴ is a C₂₋₆ alkylene group, and preferably CH₂CH₂CH₂.

In the above embodiment, X^{1A} is preferably -X²¹-O-X²³-CONH-X²⁴-.

In a preferable embodiment, X^{1A} is a C₇₋₄₀ alkylene group, and preferably a C₁₀₋₃₀ alkylene group.

In another embodiment, X^{1A} and X^{1B} are each independently a group represented by the following formula:

-(X¹²¹)ₐ₀-X¹¹⁰-[(X¹¹¹)ₐ₁-(X¹¹²)ₐ₂]-

wherein
X¹²¹ is R⁶¹_{b1}R⁶²_{3-b1}C-, R⁶³_{b2}R⁶⁴_{3-b2}Si-, or R⁶⁵₂N-,
   R⁶¹ is each independently a single bond or a divalent organic group,
   R⁶² is each independently a hydrogen atom or a monovalent organic group,
   R⁶³ is each independently a single bond or a divalent organic group,
   R⁶⁴ is each independently a hydrogen atom or a monovalent organic group,
   R⁶⁵ is each independently a single bond or a divalent organic group,
   b1 is 2 or 3,
   b2 is 2 or 3,
X¹¹⁰ is a single bond or an alkylene group having 3 or more carbon atoms,
X¹¹¹ is a single bond or a divalent organic group,
X¹¹² is -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, -O-(CH₂)ₓ₃-CO-, -CON= or R^{S},
   R⁴¹ is a hydrogen atom or a C₁₋₆ alkyl group,
   x3 is an integer of 1 to 30,
   R^{s} has the same meaning as above,
a0 is 0 or 1,
a1 is an integer of 1 to 5,
a2 is an integer of 0 to 5, and
the occurrence order of the respective repeating units enclosed in parentheses provided with a1 or a2 is not limited in the formula; or
a group represented by formula: 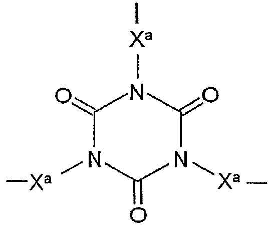 wherein X^{a} is each independently a single bond or a divalent linking group.

X¹²¹ is R⁶¹_{b1}R⁶²_{3-b1}C-, R⁶³_{b2}R⁶⁴_{3-b2}Si-, or R⁶⁵₂N-.

R⁶¹ is each independently a single bond or a divalent organic group.

R⁶¹ is preferably a C₁₋₆ alkylene group, - (CH₂) n-O-(CH₂)_{f2}- (wherein f1 is an integer of 0 to 6 such as an integer of 1 to 6, and f2 is an integer of 0 to 6 such as an integer of 1 to 6), or -(CH₂)_{f3}-phenylene-(CH₂)_{f4}-(wherein f3 is an integer of 0 to 6 such as an integer of 1 to 6, and f4 is an integer of 0 to 6 such as an integer of 1 to 6). Such a C₁₋₆ alkylene group may be linear or may be branched, and is preferably linear. These groups may be substituted with one or more substituents selected from, for example, a C₁₋₆ alkyl group, a C₂₋₆ alkenyl group, and a C₂₋₆ alkynyl group, and are preferably unsubstituted.

In a preferable embodiment, R⁶¹ is a C₁₋₆ alkylene group or -(CH₂)_{f3}-phenylene-(CH₂)_{f4}-, and preferably - phenylene-(CH₂)_{f4}-.

In another preferable embodiment, R⁶¹ is a C₁₋₃ alkylene group. In one embodiment, R⁶¹ may be -CH₂CH₂CH₂-. In another embodiment, R⁶¹ may be -CH₂CH₂-.

R⁶² is each independently a hydrogen atom or a monovalent organic group.

In one embodiment, R⁶² is a hydrogen atom.

In another embodiment, R⁶² is a monovalent organic group.

In R⁶², the monovalent organic group is preferably a C₁₋₂₀ alkyl group, more preferably a C₁₋₆ alkyl group, and even more preferably a methyl group.

b1 is 2 or 3. In one embodiment, b1 is 2. In another embodiment, b1 is 3.

R⁶³ is each independently a single bond or a divalent organic group.

R⁶³ is preferably a C₁₋₆ alkylene group, -(CH₂)_{g1}-O-(CH₂)_{g2}- (wherein g1 is an integer of 0 to 6 such as an integer of 1 to 6, and g2 is an integer of 0 to 6 such as an integer of 1 to 6), or - (CH₂)_{g3}-phenylene- (CH₂)_{g4}-(wherein g3 is an integer of 0 to 6 such as an integer of 1 to 6, and g4 is an integer of 0 to 6 such as an integer of 1 to 6). Such a C₁₋₆ alkylene group may be linear or may be branched, and is preferably linear. These groups may be substituted with one or more substituents selected from, for example, a C₁₋₆ alkyl group, a C₂₋₆ alkenyl group, and a C₂₋₆ alkynyl group, and are preferably unsubstituted.

In a preferable embodiment, R⁶³ is a C₁₋₆ alkylene group or -(CH₂)_{g3}-phenylene-(CH₂)_{g4}-, and preferably - phenylene-(CH₂)_{g4}-.

In another preferable embodiment, R⁶³ is a C₁₋₃ alkylene group. In one embodiment, R⁶³ may be -CH₂CH₂CH₂-. In another embodiment, R⁶³ may be -CH₂CH₂-.

R⁶⁴ is each independently a hydrogen atom or a monovalent organic group.

In one embodiment, R⁶⁴ is a hydrogen atom.

In another embodiment, R⁶⁴ is a monovalent organic group.

In R⁶⁴, the monovalent organic group is preferably a C₁₋₂₀ alkyl group, more preferably a C₁₋₆ alkyl group, and even more preferably a methyl group.

b2 is 2 or 3. In one embodiment, b2 is 2. In another embodiment, b2 is 3.

R⁶⁵ is each independently a single bond or a divalent organic group.

R⁶⁵ is preferably a C₁₋₆ alkylene group, -(CH₂)ₕ₁-O-(CH₂)ₕ₂- (wherein h1 is an integer of 0 to 6 such as an integer of 1 to 6, and h2 is an integer of 0 to 6 such as an integer of 1 to 6), or - (CH₂)ₕ₃-phenylene- (CH₂)ₕ₄-(wherein h3 is an integer of 0 to 6 such as an integer of 1 to 6, and h4 is an integer of 0 to 6 such as an integer of 1 to 6). Such a C₁₋₆ alkylene group may be linear or may be branched, and is preferably linear. These groups may be substituted with one or more substituents selected from, for example, a C₁₋₆ alkyl group, a C₂₋₆ alkenyl group, and a C₂₋₆ alkynyl group, and are preferably unsubstituted.

In a preferable embodiment, R⁶⁵ is a C₁₋₆ alkylene group or -(CH₂)ₕ₃-phenylene-(CH₂)ₕ₄-, and preferably-phenylene-(CH₂)ₕ₄-.

In another preferable embodiment, R⁶⁵ is a C₁₋₃ alkylene group. In one embodiment, R⁶⁵ may be -CH₂CH₂CH₂-. In another embodiment, R⁶⁵ may be -CH₂CH₂-.

In one embodiment, X¹²¹ is R⁶¹_{b1}R⁶²_{3-b1}C-.

In one embodiment, X¹²¹ is R⁶³_{b2}R⁶⁴_{3-b2}Si-.

In one embodiment, X¹²¹ is R⁶⁵₂N-.

X¹¹⁰ is a single bond or an alkylene group having 3 or more carbon atoms.

The number of carbon atoms of the alkylene group in X¹¹⁰ is preferably 3 or more, more preferably 6 or more, even more preferably 10 or more, and yet more preferably 12 or more, and may be, for example, 16 or more, 18 or more, or 22 or more. The number of carbon atoms of the alkylene group in X¹¹⁰ may be preferably 60 or less, more preferably 40 or less, even more preferably 30 or less, and yet more preferably 24 or less. The number of carbon atoms of the alkylene group in X¹¹⁰ may be preferably 3 to 60, more preferably 6 to 40, and even more preferably 10 to 30.

The number of carbon atoms of the alkylene group in X¹¹⁰ is preferably 3 or more, more preferably 6 or more, even more preferably 11 or more, and yet more preferably 12 or more, and may be, for example, 16 or more, 18 or more, or 22 or more. The number of carbon atoms of the alkylene group in X¹¹⁰ may be preferably 60 or less, more preferably 40 or less, even more preferably 30 or less, and yet more preferably 24 or less. The number of carbon atoms of the alkylene group in X¹¹⁰ may be preferably 3 to 60, more preferably 6 to 40, and even more preferably 11 to 30.

The alkylene group in X¹¹⁰ may be linear or may be branched. The alkylene group is preferably linear.

X¹¹¹ is a single bond or a divalent organic group.

The divalent organic group is preferably a divalent hydrocarbon group.

The hydrocarbon group in X¹¹¹ is preferably a hydrocarbon group having 1 to 30 carbon atoms.

The hydrocarbon group may be preferably an alkylene group or an arylene group.

The alkylene group may be linear or may be branched. The alkylene group may preferably be an alkylene group having 1 to 30 carbon atoms.

In one embodiment, the alkylene group may be, for example, a C₁₋₁₀ alkylene group, a C₁₋₈ alkylene group, a C₁₋₆ alkylene group, a C₂₋₁₀ alkylene group, a C₂₋₈ alkylene group, or a C₂₋₆ alkylene group.

In one embodiment, the alkylene group may be, for example, a C₁₀₋₃₀ alkylene group. The number of carbon atoms of such an alkylene group may be preferably 10 or more, more preferably 16 or more, even more preferably 18 or more, and yet more preferably 22 or more. The number of carbon atoms of the alkylene group in X¹¹¹ may be preferably 60 or less, more preferably 40 or less, even more preferably 30 or less, and yet more preferably 24 or less. The number of carbon atoms of each of the alkylene groups in X¹¹⁰ and X¹¹¹ may be preferably 10 to 60, more preferably 10 to 40, and even more preferably 18 to 30.

In one embodiment, the alkylene group may be, for example, a C₁₁₋₃₀ alkylene group. The number of carbon atoms of such an alkylene group may be preferably 10 or more, more preferably 16 or more, even more preferably 18 or more, and yet more preferably 22 or more. The number of carbon atoms of the alkylene group in X¹¹¹ may be preferably 60 or less, more preferably 40 or less, even more preferably 30 or less, and yet more preferably 24 or less. The number of carbon atoms of each of the alkylene groups in X¹¹⁰ and X¹¹¹ may be preferably 11 to 60, more . preferably 12 to 40, and even more preferably 18 to 30.

The arylene group may be monocyclic or may be polycyclic. The arylene group is preferably an arylene group having 6 to 20 carbon atoms, and more preferably an arylene group having 6 to 10 carbon atoms. The arylene group is particularly preferably a phenylene group.

In one embodiment, X¹¹¹ is a group represented by

-X¹¹³-X¹¹²-X¹¹⁴-

wherein
X¹¹³ is an alkylene group, an oxyalkylene group, or - (CⱼH₂ⱼ)ₖ₁-(O-CⱼH₂ⱼ)ₖ₂ (wherein j is an integer of 1 to 6, k1 is 1 or 0, and k2 is an integer of 1 to 20),
X¹¹² is -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, or -S-, preferably -CO-, -NR⁴¹-, -CONR⁴¹-, or -NR⁴¹CO-, and more preferably - CONR⁴¹- or -NR⁴¹CO-,
   R⁴¹ is a hydrogen atom or a C₁₋₆ alkyl group, and preferably a hydrogen atom, and
X¹¹⁴ is a single bond or an alkylene group.

X¹¹³ is an alkylene group, an oxyalkylene group, or - (CⱼH₂ⱼ)ₖ₁-(O-CⱼH₂ⱼ)ₖ₂ (wherein j is an integer of 1 to 6, k1 is 1 or 0, and k2 is an integer of 1 to 20).

The alkylene group may be linear or may be branched. The alkylene group may preferably be an alkylene group having 1 to 30 carbon atoms.

In one embodiment, the alkylene group may be, for example, a C₁₋₁₀ alkylene group, a C₁₋₆ alkylene group, a C₁₋₆ alkylene group, a C₂₋₁₀ alkylene group, a C₂₋₈ alkylene group, or a C₂₋₆ alkylene group.

In one embodiment, the alkylene group may be, for example, a C₁₀₋₃₀ alkylene group. The number of carbon atoms of such an alkylene group may be preferably 12 or more, more preferably 16 or more, even more preferably 18 or more, and yet more preferably 22 or more. The number of carbon atoms of each of the alkylene groups in X¹¹³ and X¹¹⁴ may be preferably 60 or less, more preferably 40 or less, even more preferably 30 or less, and yet more preferably 24 or less. The number of carbon atoms of each of the alkylene groups in X¹¹³ and X¹¹⁴ may be preferably 10 to 60, more preferably 10 to 40, and even more preferably 18 to 30.

In one embodiment, the alkylene group may be, for example, a C₁₁₋₃₀ alkylene group. The number of carbon atoms of the alkylene group may preferably be 12 or more, more preferably 16 or more, even more preferably 18 or more, and yet more preferably 22 or more. The number of carbon atoms of each of the alkylene groups in X¹¹³ and X¹¹⁴ may be preferably 60 or less, more preferably 40 or less, even more preferably 30 or less, yet more preferably 24 or less. The number of carbon atoms of each of the alkylene groups in X¹¹³ and X¹¹⁴ may be preferably 11 to 60, more preferably 12 to 40, and even more preferably 18 to 30.

The oxyalkylene group is a group having an oxygen atom on the left side (R^{A} or R^{B} side) of the alkylene group, namely, a -O- alkylene group.

j is an integer of 1 to 6, and preferably an integer of 2 to 4.

k1 is 1 or 0, and preferably 0.

k2 is an integer of 1 to 20, preferably an integer of 2 to 10, and more preferably an integer of 2 to 6.

X¹¹⁴ is an alkylene group.

The alkylene group may be linear or may be branched. The alkylene group may be an alkylene group preferably having 1 to 30 carbon atoms, preferably a C₁₋₁₀ alkylene group, more preferably a C₁₋₈ alkylene group, and even more preferably a C₁₋₆ alkylene group, such as a C₂₋₁₀ alkylene group, a C₂₋₈ alkylene group, or a C₂₋₆ alkylene group.

In one embodiment, X¹¹¹ is a group represented by

-O-R^{S}-X¹¹³-X¹¹²-X¹¹⁴-

wherein
R^{S} has the same meaning as above,
X¹¹² is -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, or -S-, preferably -CO-, -NR⁴¹-, -CONR⁴¹-, or -NR⁴¹CO-, and more preferably - CONR⁴¹- or -NR⁴¹CO-,
   R⁴¹ is a hydrogen atom or a C₁₋₆ alkyl group, and preferably a hydrogen atom,
X¹¹³ is an alkylene group, an oxyalkylene group, or - (CⱼH₂ⱼ)ₖ₁-(O-CⱼH₂ⱼ)ₖ₂ (wherein j is an integer of 1 to 6, k1 is 1 or 0, and k2 is an integer of 1 to 20), and
X¹¹⁴ is a single bond or an alkylene group.

In one embodiment, X¹¹¹ is a group represented by

-X¹¹⁵-R^{S}-X¹¹³-X¹¹²-X¹¹⁴-

wherein
R^{S} has the same meaning as above,
X¹¹² is -C_{O}-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, or -S-, preferably -CO-, -NR⁴¹-, -CONR⁴¹-, or -NR⁴¹CO-, and more preferably - CONR⁴¹- or -NR⁴¹CO-,
   R⁴¹ is a hydrogen atom or a C₁₋₆ alkyl group, and preferably a hydrogen atom,
X¹¹³ is an alkylene group, an oxyalkylene group, or - (CⱼH₂ⱼ)ₖ₁-(O-CⱼH₂ⱼ)ₖ₂ (wherein j is an integer of 1 to 6, k1 is 1 or 0, and k2 is an integer of 1 to 20),
X¹¹⁴ is a single bond or an alkylene group, and
X¹¹⁵ is an alkylene group, an oxyalkylene group, or - (Cₚ₁₀H₂ₚ₁₀)_{q1}-(O-Cₚ₁₀H₂ₚ₁₀)_{q2} (wherein p10 is an integer of 1 to 6, q1 is 1 or 0, and q2 is an integer of 1 to 20).

X¹¹⁵ is an alkylene group, an oxyalkylene group, or - (CₚH₂ₚ)_{q1}-(O-CₚH₂ₚ)_{q2} wherein p is an integer of 1 to 6, q1 is 1 or 0, and q2 is an integer of 1 to 20.

The alkylene group may be linear or may be branched. The alkylene group may preferably be an alkylene group having 1 to 30 carbon atoms.

In one embodiment, the alkylene group may be, for example, a C₁₋₁₀ alkylene group, a C₁₋₆ alkylene group, a C₁₋₆ alkylene group, a C₂₋₁₀ alkylene group, a C₂₋₈ alkylene group, or a C₂₋₆ alkylene group.

The oxyalkylene group is a group having an oxygen atom at the left terminal (the R^{A} or R^{B} side) of the alkylene group, i.e., an -O-alkylene group.

p10 is an integer of 1 to 6, and preferably an integer of 2 to 4.

q1 is 1 or 0, and preferably 0.

q2 is an integer of 1 to 20, preferably an integer of 2 to 10, and more preferably an integer of 2 to 6.

In one embodiment, X^{1A} and X^{1B} may be a group represented by the following formula: 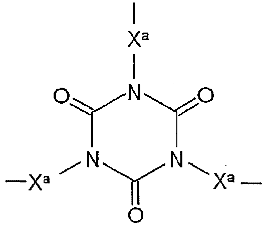 wherein X^{a} is a single bond or a divalent organic group.

X^{a} is a single bond or divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and containing at least one bond selected from the group consisting of an ether bond, an ester bond, an amide bond, and a sulfide bond.

X^{a} is even more preferably a group represented by the following formula:

-(CX¹²¹X¹²²)ₓ₁-(X^{a1})_{y1}-(CX¹²³X¹²⁴)_{z1}-

wherein X¹²¹ to X¹²⁴ are each independently H, OH, or - OSi(OR¹²¹)₃, where three R¹²¹ are each independently an alkyl group having 1 to 4 carbon atoms,
X^{a1} is -C(=O)NH-, -NHC(=O)-, -O-, -C(=O)O-, -OC(=O)-, -OC(=O)O-, -NH-, or -NHC(=O)NH- (left side of each bond binds to CX¹²¹X¹²²), and
x1 is an integer of 0 to 10, y1 is 0 or 1, and z1 is an integer of 1 to 10.

X^{a1} is preferably -O- or -C(=O)O-.

X^{a} is particularly preferably
a group represented by the following formula:

   -(CH₂)ₘ₁₂-O-(CH₂)ₘ₁₃-
wherein m12 is an integer of 1 to 3, and m13 is an integer of 1 to 3,
a group represented by

   -(CH₂)ₘ₁₅-O-CH₂CH(OH)-(CH₂)ₘ₁₆-
wherein m15 is an integer of 1 to 3, and m16 is an integer of 1 to 3,
a group represented by

   -(CH₂)ₘ₁₈-
wherein m18 is an integer of 1 to 3, and
a group represented by

   -(CH₂)ₘ₂₀-O-CH₂CH(OSi(OCH₃)₃)-(CH₂)ₘ₂₁-
wherein m20 is an integer of 1 to 3, and m21 is an integer of 1 to 3.

X^{a} is not limited, and specific examples include -CH₂-, -C₂H₄-, -C₃H₆-, -C₄H₈-, -C₄H₈-O-CH₂-, -CO-O-CH₂-CH(OH)-CH₂-, -S-, -NR¹²¹-, - (CH₂)ₘ₂₂-C(=O)-O-(CH₂)ₘ₂₃-, - (CH₂)ₘ₂₂-O-C(=O)-(CH₂)ₘ₂₃-, -(CH₂)ₘ₂₂-C(=O)-NR¹²¹-(CH₂)ₘ₂₃-, and -(CH₂)ₘ₂₂-NR¹²¹-C(=O)-(CH₂)ₘ₂₃-CH₂OCH₂CH(OSi(OCH₃)₃)CH₂-, wherein R¹²¹ is a hydrogen atom or a C₁₋₆ hydrocarbon chain, m22 is an integer of 1 to 10, and m23 is an integer of 1 to 10.

In a preferable embodiment, X^{1A} in the compound A is an alkylene group having 7 or more carbon atoms.

In a preferable embodiment, X^{1B} in the compound B is a group containing R^{S}.

In a preferable embodiment, X^{1A} in the compound A is an alkylene group having 7 or more carbon atoms, and X^{1B} in the compound B is a group containing R^{S}.

### [R^{Si}]

R^{Si} is a monovalent group containing a Si atom to which a hydroxyl group or a hydrolyzable group is bonded.

R^{Si} is preferably a group represented by the following formula (S1), (S2), (S3), (S4), or (S5):

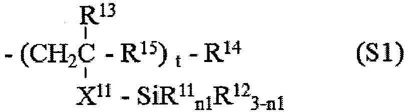

- SiR¹¹ₙ₁R¹²₃₋ₙ₁ (S2)

- SiR^{a1}ₖ₁R^{b1}ₗ₁R^{c1}ₘ₁ (S3)

- CR^{d1}ₖ₂R^{e1}ₗ₂R^{f1}ₘ₂ (S4)

- NR^{g1}R^{h1} (S5)

wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1}-R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
12 is each independently an integer of 0 to 3,
m2 is each independently an integer of 0 to 3,
provided that, in the formula (S4), at least two Si atoms to which a hydroxyl group or a hydrolyzable group is bogded are present,
R^{g1} and R^{h1} are each independently -Z⁴-SiR¹¹ₙ₁R¹²₃₋ₙ₁, - Z⁴-SiR^{a1}ₖ₁R^{b1}₁₁R^{c1}ₘ₁, or -Z⁴-CR^{d1}ₖ₂R^{e1}₁₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

In the formulae, R¹¹ is each independently a hydroxyl group or a hydrolyzable group.

R¹¹ is preferably, each independently, a hydrolyzable group.

R¹¹ is preferably, each independently, -OR^{h}, -OCOR^{k}, - O-N=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formulae, R¹² is each independently a monovalent organic group. Such a monovalent organic group is a monovalent organic group excluding the above hydrolyzable group.

In R¹², the monovalent organic group is preferably a C₁₋₂₀ alkyl group, more preferably a C₁₋₆ alkyl group, and even more preferably a methyl group.

In the formulae, n1 is each independently an integer of 0 to 3 for each (SiR¹¹ₙ₁R¹²₃₋ₙ₁) unit, provided that, in the formula (S1), at least two (SiR¹¹ₙ₁R¹²₃₋ₙ₁) units wherein n1 is 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and even more preferably 3 for each (SiR¹¹ₙ₁R¹²₃₋ₙ₁) unit.

In the formula, X¹¹ is each independently a single bond or a divalent organic group. Such a divalent organic group is preferably -R²⁸=Oₓ-R²⁹-, wherein R²⁸ and R²⁹ are each independently a single bond or a C₁₋₂₀ alkylene group, and x is 0 or 1. Such a C₁₋₂₀ alkylene group may be linear or may be branched, and is preferably linear. Such a C₁₋₂₀ alkylene group is preferably a C₁₋₁₀ alkylene group, more preferably a C₁₋₆ alkylene group, and even more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferable embodiment, X¹¹ is each independently a single bond or a linear C₁₋₆ alkylene group, preferably a single bond or a linear C₁₋₃ alkylene group, more preferably a single bond or a linear C₁₋₂ alkylene group, and even more preferably a linear C₁₋₂ alkylene group.

In the formula, R¹³ is each independently a hydrogen atom or a monovalent organic group. Such a monovalent organic group is preferably a C₁₋₂₀ alkyl group.

In a preferable embodiment, R¹³ is each independently a hydrogen atom or a linear C₁₋₆ alkyl group, preferably a hydrogen atom or a linear C₁₋₃ alkyl group, and preferably a hydrogen atom or a methyl group.

In the formula, R¹⁵ is each independently a single bond, an oxygen atom, an alkylene group having 1 to 6 carbon atoms, or an alkyleneoxy group having 1 to 6 carbon atoms.

In one embodiment, R¹⁵ is each independently an oxygen atom, an alkylene group having 1 to 6 carbon atoms, or an alkyleneoxy group having 1 to 6 carbon atoms.

In a preferable embodiment, R¹⁵ is a single bond.

In the formula, t is each independently an integer of 2 or more.

In a preferable embodiment, t is each independently an integer of 2 to 10, and preferably an integer of 2 to 6.

In the formula, R¹⁴ is each independently a hydrogen atom, a halogen atom, or -X¹¹-SiR¹¹ₙ₁R¹²₃₋ₙ₁. Such a halogen atom is preferably an iodine atom or a chlorine atom. In a preferable embodiment, R¹⁴ is a hydrogen atom.

In one embodiment, the formula (S1) is the following formula (S1-a): 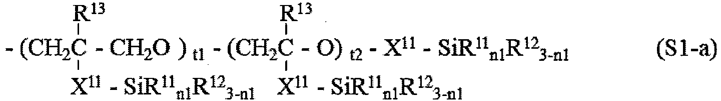 wherein
R¹¹, R¹², R¹³, X¹¹, and n1 have the same meanings as those described for the formula (S1),
t1 and t2 are each independently an integer of 1 or more, preferably an integer of 1 to 10, and more preferably an integer of 2 to 10, such as an integer of 1 to 5 or an integer of 2 to 5, and
the occurrence order of the respective repeating units enclosed in parentheses provided with t1 and t2 is not limited in the formula.

In a preferable embodiment, the formula (S1) is the following formula (S1-b): 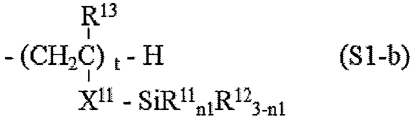 R¹¹, R¹², R¹³, X¹¹, n1, and t have the same meanings as those described for the formula (S1).

R^{a1} is each independently -Z¹-SiR²¹ₚ₁R²²_{q1}R²³r₁.

Z¹ is each independently an oxygen atom or a divalent organic group. Below, the right side of the structure denoted as Z¹ binds to (SiR²¹ₚ₁R²²_{q1}R²³ᵣ₁).

In a preferable embodiment, Z¹ is a divalent organic group.

In a preferable embodiment, Z¹ does not include a group that forms a siloxane bond with the Si atom to which Z¹ is bonded. Preferably, in the formula (S3), (Si-Z¹-Si) does not include a siloxane bond.

Z¹ is preferably a C₁₋₃₀ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}-(wherein z3 is an integer of 0 to 6 such as an integer of 1 to 6, and z4 is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₁₅ alkylene group or -(CH₂)_{z3}-phenylene-(CH₂)_{z4}-, and preferably - phenylene-(CH₂)_{z4}-.

In another preferable embodiment, Z¹ is a C₁₋₁₅ alkylene group.

R²¹ is each independently -Z^{1'}-SiR^{21'}_{p1'}R^{22'}_{q1'}R^{23'}_{r1'}.

Z^{1'} is each independently an oxygen atom or a divalent organic group. Below, the right side of the structure denoted as Z^{1'} binds to (SiR^{21'}_{p1'}R^{22'}_{q1'}R^{23'}_{r1'}).

In a preferable embodiment, Z^{1'} is a divalent organic group.

In a preferable embodiment, Z^{1'} does not include a group that forms a siloxane bond with the Si atom to which Z^{1'} is bonded. Preferably, in the formula (S3), (Si-Z^{1'}-Si) does not include a siloxane bond.

Z^{1'} is preferably a C₁₋₁₅ alkylene group, -(CH₂)_{z1'}-O-(CH₂)_{z2'}- (wherein z1' is an integer of 0 to 6 such as an integer of 1 to 6, and z2' is an integer of 0 to 6 such as an integer of 1 to 6), or -(CH₂)_{z3'}-phenylene-(CH₂)_{z4'}-(wherein z3' is an integer of 0 to 6 such as an integer of 1 to 6, and z4' is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or may be branched, and is preferably linear. These groups may be substituted with, for example, one or more substituents selected from, a C₁₋₆ alkyl group, a C₂₋₆ alkenyl group, and a C₂₋₆ alkynyl group, and are preferably unsubstituted.

In a preferable embodiment, Z^{1'} is a C₁₋₁₅ alkylene group or -(CH₂)_{z3'}-phenylene-(CH₂)_{z4'}-, and preferably - phenylene-(CH₂)_{z4'}-.

In another preferable embodiment, Z^{1'} is a C₁₋₁₅ alkylene group.

R^{21'} is each independently -Z^{1"}-SiR^{22"}_{q1"}R^{23"}r_{1"}.

Z^{1"} is each independently an oxygen atom or a divalent organic group. Below, the right side of the structure denoted as Z^{1"} binds to (SiR^{22"}_{q1}-R^{23"}_{r1"}).

In a preferable embodiment, Z^{1"} is a divalent organic group.

In a preferable embodiment, Z^{1"} does not include a group that forms a siloxane bond with the Si atom to which Z^{1"} is bonded. Preferably, in the formula (S3), (Si-Z^{1"}-Si) does not include a siloxane bond.

Z^{1"} is preferably a C₁₋₁₅ alkylene group, -(CH₂)_{z1"}-O-(CH₂)_{z2"}- (wherein z1" is an integer of 0 to 6 such as an integer of 1 to 6, and z2" is an integer of 0 to 6 such as an integer of 1 to 6), or -(CH₂)_{z3"}-phenylene-(CH₂)_{z4"}-(wherein z3" is an integer of 0 to 6 such as an integer of 1 to 6, and z4" is an integer of 0 to 6 such as an integer of 1 to 6). Such a C₁₋₆ alkylene group may be linear or may be branched, and is preferably linear. These groups may be substituted with, for example, one or more substituents selected from, a C₁₋₆ alkyl group, a C₂₋₆ alkenyl group, and a C₂₋₆ alkynyl group, and are preferably unsubstituted.

In a preferable embodiment, Z^{1"} is a C₁₋₁₅ alkylene group or -(CH₂)_{z3"}-phenylene-(CH₂)_{z4"}-, and preferably - phenylene-(CH₂)_{z4"}-. When Z^{1"} is such a group, light resistance, in particular ultraviolet resistance, can be more increased.

In another preferable embodiment, Z^{1"} is a C₁₋₁₅ alkylene group.

R^{22"} is each independently a hydroxyl group or a hydrolyzable group.

R^{22"} is preferably, each independently, a hydrolyzable group.

R^{22"} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23"} is each independently a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and even more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is preferably, each independently, an integer of 1 to 3, more preferably 2 to 3, and even more preferably 3 for each (SiR^{22"}_{q1"}R^{23"}r_{1"}) unit.

R^{22'} is each independently a hydroxyl group or a hydrolyzable group.

R^{22'} is preferably, each independently, a hydrolyzable group.

R^{22'} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23'} is each independently a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and even more preferably a methyl group.

p1' is each independently an integer of 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferable embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and even more preferably 3 for each (SiR^{21'}_{p1'}R^{22'}_{q1'}R^{23'}_{r1'}) unit.

R²² is each independently a hydroxyl group or a hydrolyzable group.

R²² is preferably, each independently, a hydrolyzable group.

R²² is preferably, each independently, -OR^{h}, -OCOR^{h}, - O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R²³ is each independently a monovalent organic group. Such a monovalent organic group is a monovalent organic group excluding the above hydrolyzable group.

In R²³, the monovalent organic group is preferably a C₁₋₂₀ alkyl group, more preferably a C₁₋₆ alkyl group, and even more preferably a methyl group.

p1 is each independently an integer of 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and even more preferably 3 for each (SiR²¹ₚ₁R²²_{q1}R²³ᵣ₁) unit.

In the formula, R^{b1} is each independently a hydroxyl group or a hydrolyzable group.

R^{b1} is preferably, each independently, a hydrolyzable group.

R^{b1} is preferably, each independently, -OR^{h}, -OCOR^{h}, - O-N=CR^{h}₂, -NR^{h}₂, -NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formula, R^{c1} is each independently a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and even more preferably a methyl group.

k1 is each independently an integer of 0 to 3, l1 is each independently an integer of 0 to 3, and m1 is each independently an integer of 0 to 3. The sum of k1, l1, and m1 is 3 in the (SiR^{a1} ₖ₁R^{d1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferable embodiment, k1 is 3.

In the formula (S3), at least two Si atoms to which a hydroxyl group or a hydrolyzable group is bonded are present.

In a preferable embodiment, in the terminal moiety of the formula (S3), at least two Si atoms to which a hydroxyl group or a hydrolyzable group is bonded are present.

In a preferable embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z¹'-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z¹', Z^{1"}, **R22,** R²³, R^{22'}, R^{23'}, R^{22"}, and R^{23"} have the same meanings as those described above.

In a preferable embodiment, when R^{21'} is present in the formula (S3), q1" is an integer of 1 to 3, preferably 2 or 3, and more preferably 3 in at least one and preferably all R^{21'} groups.

In a preferable embodiment, when R²¹ is present in the formula (S3), p1' is 0, and q1' is an integer of 1 to 3, preferably 2 or 3, and more preferably 3 in at least one and preferably all R²¹ groups.

In a preferable embodiment, when R^{a1} is present in the formula (S3), p1 is 0, and q1 is an integer of 1 to 3, preferably 2 or 3, and more preferably 3 in at least one and preferably all R^{a1} groups.

In a preferable embodiment, in the formula (S3), k1 is 2 or 3 and is preferably 3, p1 is 0, q1 is 2 or 3 and is preferably 3.

R^{d1} is each independently -Z²-CR³¹ₚ₂R³²_{q2}R³³ᵣ₂.

Z² is each independently a single bond, an oxygen atom, or a divalent organic group. Below, the right side of the structure denoted as Z² binds to (CR³¹ₚ₂R³²_{q2}R³³ᵣ₂).

In a preferable embodiment, Z² is a divalent organic group.

In a preferable embodiment, Z² does not include a siloxane bond.

Z² is preferably a C₁₋₃₀ alkylene group, -(CH₂)_{z5}-O-(CH₂)_{z6}- (wherein z5 is an integer of 0 to 6 such as an integer of 1 to 6, and z6 is an integer of 0 to 6 such as an integer of 1 to 6), or -(CH₂)_{z7}-phenylene-(CH₂)_{z8}-(wherein z7 is an integer of 0 to 6 such as an integer of 1 to 6, and z8 is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or may be branched, and is preferably linear. These groups may be substituted with, for example, one or more substituents selected from, a C₁₋₆ alkyl group, a C₂₋₆ alkenyl group, and a C₂₋₆ alkynyl group, and are preferably unsubstituted.

In a preferable embodiment, Z² is a C₁₋₁₅ alkylene group or -(CH₂)_{z7}-phenylene-(CH₂)_{z8}-, and preferably - phenylene-(CH₂)_{z8}-. When Z² is such a group, light resistance, in particular ultraviolet resistance, can be more increased.

In another preferable embodiment, Z² is a C₁₋₁₅ alkylene group. In one embodiment, Z² may be -CH₂CH₂CH₂-. In another embodiment, Z² may be -CH₂CH₂-. In another embodiment, Z² may be -CH₂CH₂CH₂CH₂CH₂CH₂CH₂CH₂CH₂CH₂CH₂-.

R³¹ is each independently -Z^{2'}-CR^{32'}_{q2'}R^{33'}_{r2'}.

Z^{2'} is each independently a single bond, an oxygen atom, or a divalent organic group. Below, the right side of the structure denoted as Z^{2'} binds to (CR^{32'}_{q2'}R^{33'}_{r2'}).

In a preferable embodiment, Z^{2'} does not include a siloxane bond.

Z^{2'} is preferably a C₁₋₃₀ alkylene group, -(CH₂)_{z5'}-O-(CH₂)_{z6'}- (wherein z5' is an integer of 0 to 6 such as an integer of 1 to 6, and z6' is an integer of 0 to 6 such as an integer of 1 to 6), or -(CH₂)_{z7'}-phenylene-(CH₂)_{z8'}-(wherein z7' is an integer of 0 to 6 such as an integer of 1 to 6, and z8' is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or may be branched, and is preferably linear. These groups may be substituted with one or more substituents selected from, for example, a C₁₋₆ alkyl group, a C₂₋₆ alkenyl group, and a C₂₋₆ alkynyl group, and are preferably unsubstituted.

In a preferable embodiment, Z^{2'} is a C₁₋₁₅ alkylene group or -(CH₂)_{z7'}-phenylene-(CH₂)_{z8'}-, and preferably - phenylene- (CH₂)_{z8'}-. When Z^{2'} is such a group, light resistance, in particular ultraviolet resistance, can be more increased.

In another preferable embodiment, Z^{2'} is a C₁₋₁₅ alkylene group. In one embodiment, Z^{2'} may be -CH₂CH₂CH₂-. In another embodiment, Z^{2'} may be -CH₂CH₂-.

R^{32'} is each independently -Z³-SiR³⁴ₙ₂R³⁵₃₋ₙ₂.

Z³ is each independently a single bond, an oxygen atom, or a divalent organic group. Below, the right side of the structure denoted as Z³ binds to (SiR³⁴ₙ₂R³⁵₃₋ₙ₂).

In one embodiment, Z³ is an oxygen atom.

In one embodiment, Z³ is a divalent organic group.

In a preferable embodiment, Z³ does not include a siloxane bond.

Z³ is preferably a C₁₋₃₀ alkylene group, -(CH₂)_{z5"}-O-(CH₂)_{z6"}- (wherein z5" is an integer of 0 to 6, for example, an integer of 1 to 6, and z6" is an integer of 0 to 6, for example, an integer of 1 to 6), -(CH₂)_{z7"}-phenylene-(CH₂)_{z8"}-(wherein z7" is an integer of 0 to 6, for example, an integer of 1 to 6, and z8" is an integer of 0 to 6, for example, an integer of 1 to 6) or -(CH₂)_{z9"}-OCONR^{z1}-(CH₂)_{z10"}-(wherein R^{z1} is a hydrogen atom or a C₁₋₆ alkyl group, in particular, a hydrogen atom, z9" is an integer of 0 to 6, for example, an integer of 1 to 6, and z10" is an integer of 0 to 6, for example, an integer of 1 to 6). Such a C₁₋₃₀ alkylene group is more preferably a C₁₋₂₀ alkylene group, and even more preferably a C₁₋₁₅ alkylene group, may be linear or may be branched, and is preferably linear. These groups may be substituted with, for example, one or more substituents selected from a C₁₋₆ alkyl group, a C₂₋₆ alkenyl group, and a C₂₋₆ alkynyl group, and are preferably unsubstituted.

In a preferable embodiment, Z³ is a C₁₋₁₅ alkylene group, -(CH₂)_{z7"}-phenylene-(CH₂)_{z8"}-, or -(CH₂)_{z9"}-OCONR^{z1}-(CH₂)_{z10"}-, and preferably -phenylene- (CH₂)_{z8"}- or -(CH₂)_{z9"}-OCONR^{z1}-(CH₂)_{z10"}-. When Z³ is such a group, light resistance, in particular ultraviolet resistance, can be more increased.

In another preferable embodiment, Z³ is a C₁₋₁₅ alkylene group.

R³⁴ is each independently a hydroxyl group or a hydrolyzable group.

R³⁴ is preferably, each independently, a hydrolyzable group.

R³⁴ is preferably, each independently, -OR^{h}, -OCOR^{h}, - O-N=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R³⁵ is each independently a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and even more preferably a methyl group.

n2 is each independently an integer of 0 to 3 for each (SiR³⁴ₙ₂R³⁵₃₋ₙ₂) unit, provided that, in the terminal moiety of the formula (S4), at least two (SiR³⁴ₙ₂R³³₃₋ₙ₂) units wherein n2 is 1 to 3 are present. In other words, in the terminal moiety of the formula (S4), at least two Si atoms to which a hydroxyl group or a hydrolyzable group is bonded are present.

n2 is each independently an integer of preferably 1 to 3, more preferably 2 to 3, and even more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and even more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R³³ is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and even more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group, a C₂₋₂₀ alkenyl group or -(CₛH₂ₛ)ₜ₁-(O-CₛH₂ₛ)ₜ₂H (wherein s is an integer of 1 to 6, and preferably an integer of 2 to 4, t1 is 1 or 0, and preferably 0, and t2 is an integer of 1 to 20, preferably an integer of 2 to 10, and more preferably an integer of 2 to 6), more preferably a C₁₋₂₀ alkyl group or a C₂₋₂₀ alkenyl group, even more preferably a C₁₋₆ alkyl group or a C₂₋₆ alkenyl group, and particularly preferably a methyl group, an ethyl group, or a 2-propenyl group.

In one embodiment, R^{f1} is a hydrogen atom.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently an integer of 0 to 3, l2 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In one embodiment, two or more such as 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each terminal moiety of the formula (S4).

In a preferable embodiment, when R³²**^{'}** is present in the formula (S4), n2 is an integer of 1 to 3, preferably 2 or 3, and more preferably 3 in at least one and preferably all R^{32'} groups.

In a preferable embodiment, when R³² is present in the formula (S4), n2 is an integer of 1 to 3, preferably 2 or 3, and more preferably 3 in at least one and preferably all R³² groups.

In a preferable embodiment, when R^{e1} is present in the formula (S4), n2 is an integer of 1 to 3, preferably 2 or 3, and more preferably 3 in at least one and preferably all R^{e1} groups.

In a preferable embodiment, in the formula (S4), k2 is 0, l2 is 2 or 3 and is preferably 3, and n2 is 2 or 3 and is preferably 3.

R^{g1} and R^{h1} are each independently -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 have the same meanings as above.

In a preferable embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Below, the right side of the structure denoted as Z⁴ binds to (SiR¹¹ₙ₁R¹²₃₋ₙ₁).

In one embodiment, Z⁴ is an oxygen atom.

In one embodiment, Z⁴ is a divalent organic group.

In a preferable embodiment, Z⁴ does not include a siloxane bond.

Z⁴ is preferably a C₁₋₃₀ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}-(wherein z7" is an integer of 0 to 6 such as an integer of 1 to 6, and z8" is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or may be branched, and is preferably linear. These groups may be substituted with, for example, one or more substituents selected from a C₁₋₆ alkyl group, a C₂₋₆ alkenyl group, and a C₂₋₆ alkynyl group, and are preferably unsubstituted.

In a preferable embodiment, Z⁴ is a C₁₋₁₅ alkylene group or -(CH₂)_{z7}"-phenylene-(CH₂)_{z8"}-, and preferably - phenylene- (CH₂)_{z8"}-. When Z³ is such a group, light resistance, in particular ultraviolet resistance, can be more increased.

In another preferable embodiment, Z⁴ is a C₁₋₁₅ alkylene group.

In one embodiment, none of the formulae (S1), (S2), (S3), and (S4) contains a siloxane bond.

In one embodiment, R^{Si} is a group represented by the formula (S2), (S3), (S4), or (S5).

In one embodiment, R^{Si} is a group represented by the formula (S2), (S3), or (S4).

In one embodiment, R^{Si} is a group represented by the formula (S3), (S4), or (S5).

In one embodiment, R^{Si} is a group represented by the formula (S3) or (S4).

In one embodiment, R^{Si} is a group represented by the formula (S4) or (S5).

In one embodiment, R^{Si} is a group represented by the formula (S1). In a preferable embodiment, n1 is 1 to 3, preferably 2 to 3, and even more preferably 3.

In one embodiment, R^{Si} is a group represented by the formula (S2). In a preferable embodiment, n1 is 1 to 3, preferably 2 to 3, and even more preferably 3.

In a preferable embodiment, the formula (S2) is the following formulae. In the following formulae, * represents the point of attachment to X^{1A} or X^{1B}.

*-Si(OCH₃)₃

*-Si(OCH₂CH₃)₃

In one embodiment, R^{Si} is a group represented by the formula (S3). In a preferable embodiment, the formula (S3) is -SiR^{a1}₂R^{c1} or -SiR^{a1}₃, R^{a1} is -Z¹-SiR²²_{q1}R²³ᵣ₁, Z¹ is a C₁₋₁₅ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or - (CH₂)_{z3}-phenylene-(CH₂)_{z4}- (wherein z3 is an integer of 0 to 6 such as an integer of 1 to 6, and z4 is an integer of 0 to 6 such as an integer of 1 to 6), preferably a C₁₋₁₅ alkylene group, and q1 is 1 to 3, preferably 2 to 3, and even more preferably 3.

In a preferable embodiment, the formula (S3) is the following formulae. In the following formulae, * represents the point of attachment to X^{1A} or X^{1B}.

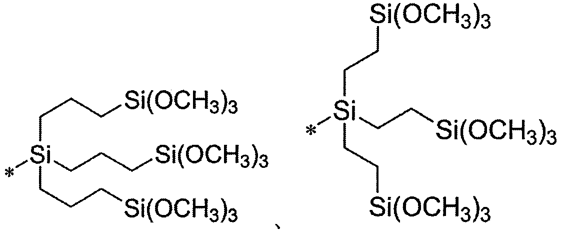

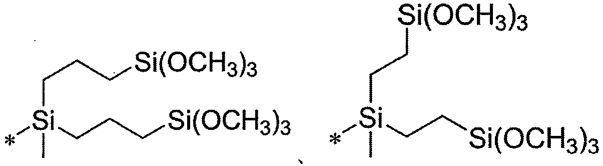

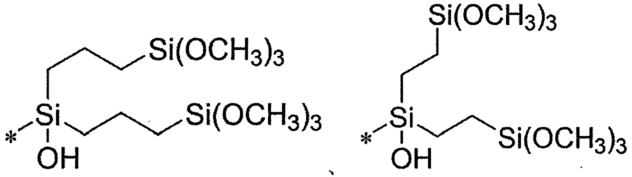

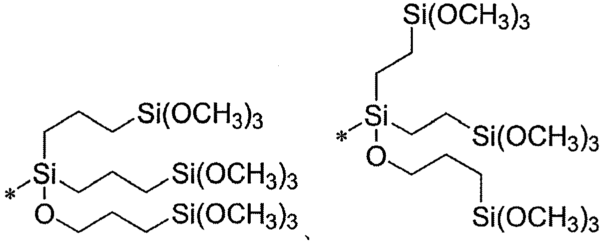

In one embodiment, R^{Si} is a group represented by the formula (S4). In a preferable embodiment, the formula (S4) is -CR^{e1}₂R^{f1} or -CR^{e1}₃, R^{e1} is -Z³-SiR³⁴ₙ₂R³⁵₃₋ₙ₂, Z³ is a C₁₋₁₅ alkylene group, -(CH₂)_{z5"}-O-(CH₂)z_{6"}- (wherein z5" is an integer of 0 to 6 such as an integer of 1 to 6, and z6" is an integer of 0 to 6 such as an integer of 1 to 6), or - (CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n2 is 1 to 3, preferably 2 to 3, and even more preferably 3.

In a preferable embodiment, the formula (S4) is the following formulae. In the following formulae, * represents the point of attachment to X^{1A} or X^{1B}.

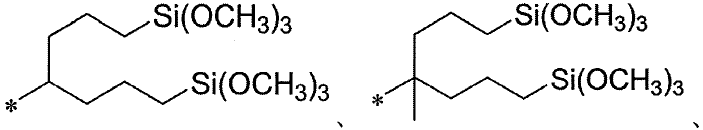

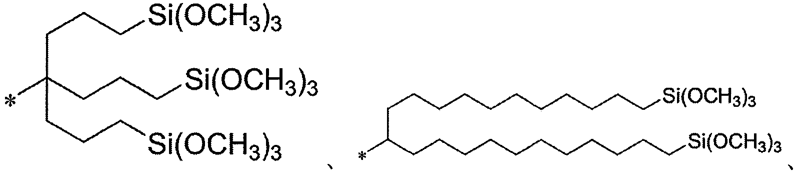

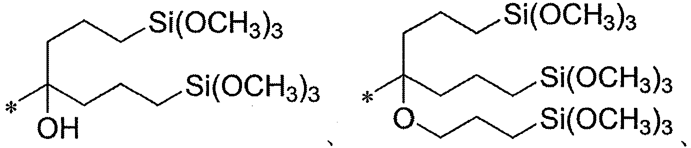

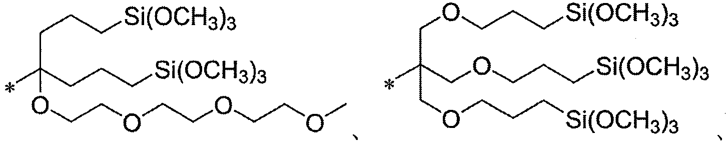

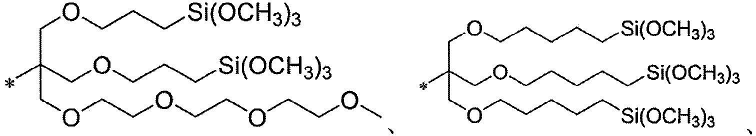

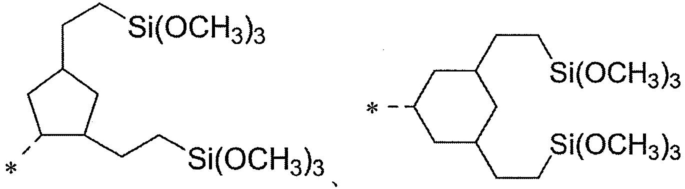

In one embodiment, R^{Si} is a group represented by the formula (S5). In a preferable embodiment, R^{g1} and R^{h1} are -Z⁴-SiR¹¹ₙ₁R¹²₃₋ₙ₁, Z⁴ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}-(wherein z7" is an integer of 0 to 6 such as an integer of 1 to 6, and z8" is an integer of 0 to 6 such as an integer of 1 to 6), preferably a C₁₋₁₅ alkylene group, and n1 is 1 to 3, preferably 2 to 3, and even more preferably 3.

In a preferable embodiment, formula (S5) is the following formulae. In the following formulae, * represents the point of attachment to X^{1A} or X^{1B}.

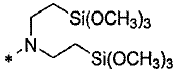

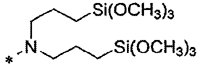

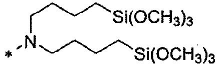

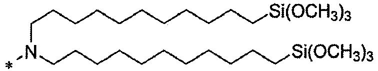

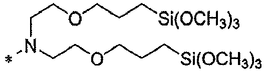

In a preferable embodiment, in the composition of the present disclosure,
the compound A is a silane compound represented by formula (1):
R^{A} is 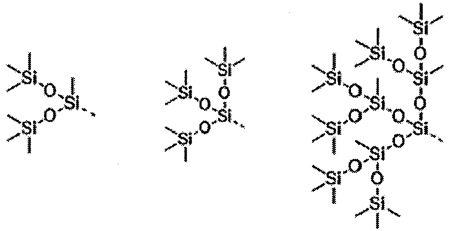 preferably, 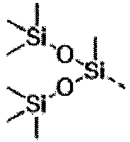
R^{Si} is -Si(OR^{h})₃,
R^{h} is an unsubstituted C₁₋₄ alkyl group,
X^{1A} is -X²¹-X²²-X²⁴-,
X²¹ is a C₁₈₋₂₄ alkylene group,
X²² is -CONH-,
X²⁴ is a C₃₋₆ alkylene group, and
α and β are each 1; and
the compound B is a silane compound represented by formula (2):
   R^{B} is R^{1b}-R^{S}-SiR^{2a}₂-, R^{1b}-R^{S}-SiR^{2a}₂-R^{Ar}-, 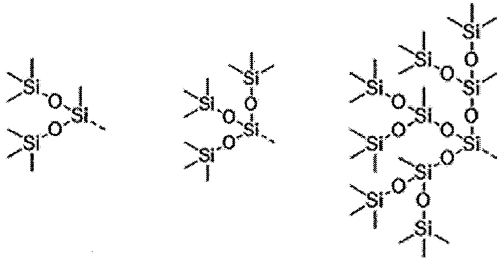
   R^{1b} is a C₁₋₄ alkyl group,
   R^{S} is -(Si(CH₃)₂-O-)ₓ-,
   x is an integer of 10 to 60,
   R^{2a} is a methyl group,
   R^{Ar}- is p-phenylene,
   R^{Si} is -Si(OR^{h})₃,
   R^{h} is an unsubstituted C₁₋₄ alkyl group,
   X^{1B} is a C₁₀₋₁₈ alkylene group, **-**X²¹-X²²-X²⁴-**,** or -X^{21'}-O-CH₂-CONH-X^{24'}-,
   X²¹ is a C₁₈₋₂₄ alkylene group,
   X²² is -CONH-,
   X²⁴ is a C₃₋₆ alkylene group,
   X^{21'} is a C₃₋₆ alkylene group,
   X^{24'} is a C₃₋₆ alkylene group, and
   α and β are each 1.

In a preferable embodiment, the silane compounds used in the composition of the present disclosure are compounds in which:
the compound A is selected from the following compounds:
·

   [(CH₃)₃SiO)]₂(CH₃)Si-O-[Si(CH₃)₂O]ₙ₁Si(CH₃)₂-(CH₂)_{H1}-C(=O)NHCH₂CH₂CH₂Si(OCH₃)₃
·

   [(CH₃)₃SiO)]₃Si-O-[Si(CH₃)₂O]ₙ₁Si(CH₃)₂-(CH₂)_{H1}-C (=O)NHCH₂CH₂CH₂Si(OCH₃)₃
·

   [(CH₃)₃SiO)]₂(CH₃)Si-O-[Si(CH₃)₂O]ₙ₁Si(CH3) 2- (CH₂)_{H1}-Si(OCH₃)₃
·

   [(CH₃)₃SiO)]₃Si-O-[Si(CH₃)₂O]ₙ₁Si(CH₃)₂-(CH₂)_{H1}-Si(OCH₃)₃
·

   [(CH₃)₃SiO)]₂(CH₃)Si-O-[Si(CH₃)₂O]ₙ₁Si(CH₃)₂-(CH₂)_{H1}-C (=O) NHCH₂CH[CH₂CH₂CH₂Si(OCH₃)₃]₂
·

   [(CH₃)₃SiO)]₃Si-O-[Si(CH₃)₂O]ₙ₁Si(CH₃)₂-(CH₂)_{H1}-C(=O)NHCH₂CH[CH₂CH₂CH₂Si(OCH₃)₃]₂
·

   [(CH₃)₃SiO)]₂(CH₃)Si-O-[Si(CH₃)₂O]ₙ₁Si(CH₃)₂-(CH₂)_{H1}-CH [CH₂CH₂CH₂Si(OCH₃)₃]₂
·

   [(CH₃)₃SiO)]₃Si-O-[Si(CH₃)₂O]ₙ₁Si(CH₃)2-(CH₂)_{H1}-CH [CH₂CH₂CH₂Si(OCH₃)₃]₂
·

   [(CH₃)₃SiO)]₂(CH₃)Si-O-[Si(CH₃)₂O]ₙ₁Si(CH₃)₂-(CH₂)_{H1}-C (=O) NHCH₂CH[CH₂CH₂CH₂CH₂CH₂CH₂CH₂CH₂CH₂CH₂CH₂Si(OCH₃)₃]₂
·

   [(CH₃)₃SiO)]₃Si-O-[Si(CH₃)₂O]ₙ₁Si(CH₃)₂-(CH₂)_{H1}-C (=O)NHCH₂CH[CH₂CH₂CH₂CH₂CH₂CH₂CH₂CH₂CH₂CH₂CH₂Si(OCH₃)₃]₂
·

   [(CH₃)₃SiO)]₂(CH₃)Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
·

   [(CH₃)₃SiO)]₃Si-O-[Si(CH₃)₂O]ₙ₁Si(CH₃)₂-(CH₂)_{H1}-CH [CH₂CH₂CH₂CH₂CH₂CH₂CH₂CH₂CH₂CH₂CH₂Si(OCH₃)₃]₂
·

   [(CH3) ₃SiO)]₂(CH₃)Si-O- [Si(CH3)₂O]ₙ₁Si(CH3) 2- (CH2) _{H1}-C(=O)N[CH₂CH₂CH₂Si(OCH₃)₃]₂
·

   [(CH₃)₃SiO)]₃Si-O-[Si(CH3)₂O]ₙ₁Si(CH₃)₂-(CH₂)_{H1}-C(=O)N[CH₂CH₂CH₂Si(OCH₃)₃]₂
·

   [(CH₃)₃SiO)]₂(CH₃)Si-O-[Si (CH₃)₂O]ₙ₁Si(CH₃)₂-(CH₂)_{H1}-N[CH₂CH₂CH₂Si(OCH₃)₃]₂
·

   [(CH₃)₃SiO)]₃Si-O-[Si(CH₃)₂O]ₙ₁Si(CH3) 2- (CH2)_{H1}-N[CH₂CH₂CH₂Si(OCH₃)₃]₂
·

   [(CH₃)₃SiO)]₂(CH₃)Si-O-[Si(CH₃)₂O]ₙ₁Si(CH₃)₂-(CH₂)_{H1}-C(=O)NHCH₂C[CH₂CH₂CH₂Si(OCH₃)₃]₃
·

   [(CH₃)₃SiO)]₃Si-O-[Si(CH₃)₂O]ₙ₁Si(CH3) 2- (CH₂)_{H1}-C (=O)NHCH₂C[CH₂CH₂CH₂Si(OCH₃)₃]₃
·

   [(CH₃)₃SiO)]₂(CH₃)Si-O-[Si (CH₃)₂O]ₙ₁Si(CH₃)₂-(CH₂)_{H1}- C [CH₂CH₂CH₂Si(OCH₃)₃]₃
·

   [(CH₃)₃SiO)]₃Si-O-[Si(CH₃)₂O]ₙ₁Si(CH₃)₂-(CH₂)_{H1}-C [CH₂CH₂CH₂Si(OCH₃)₃]₃
·

   [(CH₃)₃SiO)]₂(CH₃)Si-(CH₂)_{H1}-C(=O)NHCH₂CH₂CH₂Si(OCH₃)₃
· [(CH₃)₃SiO)]₃Si-(CH₂)_{H1}-C(=O)NHCH₂CH₂CH₂Si(OCH₃)₃
·

   [(CH₃)₃SiO)]₂(CH₃)Si-(CH₂)_{H1}-Si(OCH₃)₃
·

   [(CH₃)₃SiO)]₃Si-(CH₂)_{H1}-Si(OCH₃)₃
·

   [(CH₃)₃SiO)]₂(CH₃)Si-(CH₂)_{H1}-C (=O)NHCH₂CH[CH₂CH₂CH₂Si(OCH₃)₃]₂
·

   [(CH₃)₃SiO)]₃Si-(CH₂)_{H1}-C(=O)NHCH₂CH[CH₂CH₂CH₂Si(OCH₃)₃]₂
·

   [(CH₃)₃SiO)]₂(CH₃)Si-(CH₂)_{H1}-CH[CH₂CH₂CH₂Si(OCH₃)₃]₂
·

   [(CH₃)₃SiO)]₃Si-(CH₂)_{H1}-CH[CH₂CH₂CH₂Si(OCH₃)₃]₂
·

   [(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂
·

   [(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
·

   [(CH₃)₃SiO)]₂(CH₃)Si-(CH₂)_{H1}-CH[CH₂CH₂CH₂CH₂CH₂CH₂CH₂CH₂CH₂CH₂CH₂Si(OCH₃)₃]₂
·

   [(CH₃)₃SiO)]₃Si-(CH₂)_{H1}-CH[CH₂CH₂CH₂CH₂CH₂CH₂CH₂CH₂CH₂CH₂CH₂Si(OCH₃)₃]₂
·

   [(CH₃)₃SiO)]₂(CH₃)Si-(CH₂)_{H1}-C(=O)N[CH₂CH₂CH₂Si(OCH₃)₃]₂
·

   [(CH₃)₃SiO)]₃Si-(CH₂)_{H1}-C(=O)N[CH₂CH₂CH₂Si(OCH₃)₃]₂
·

   [(CH₃)₃SiO)]₂(CH₃)Si-(CH₂)_{H1}-N[CH₂CH₂CH₂Si(OCH₃)₃]₂
·

   [(CH₃)₃SiO)]₃Si-(CH₂)_{H1}-N[CH₂CH₂CH₂Si(OCH₃)₃]₂
·

   [(CH₃)₃SiO)]₂(CH₃)Si-(CH₂)_{H1}-C (=O)NHCH₂C[CH₂CH₂CH₂Si(OCH₃)₃]₃
·

   [(CH₃)₃SiO)]₃Si-(CH₂)_{H1}-C(=O)NHCH₂C[CH₂CH₂CH₂Si(OCH₃)₃]₃
·

   [(CH₃)₃SiO)]₂(CH₃)Si-(CH₂)_{H1}-C[CH₂CH₂CH₂Si(OCH₃)₃]₃
·

   [(CH₃)₃SiO)]₃Si-(CH₂)_{H1}-C[CH₂CH₂CH₂Si(OCH₃)₃]₃

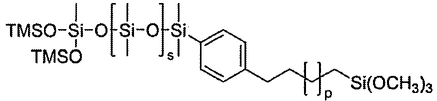

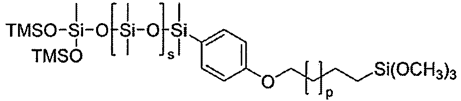

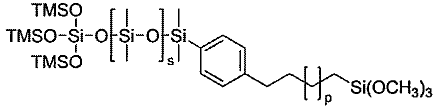

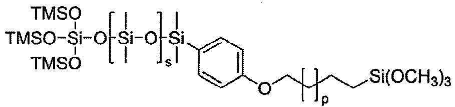

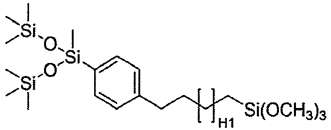

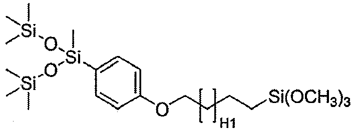

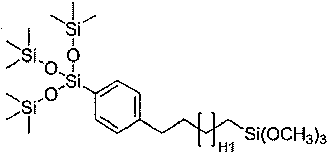

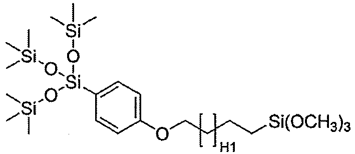

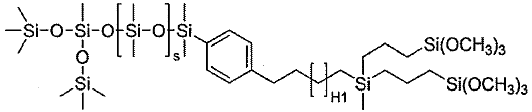

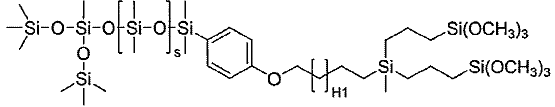

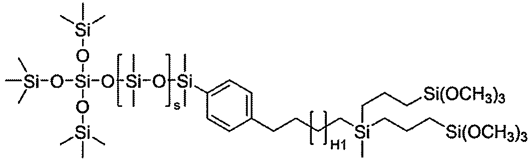

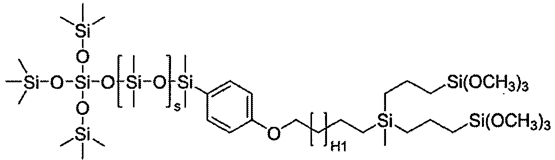

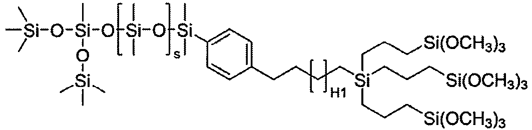

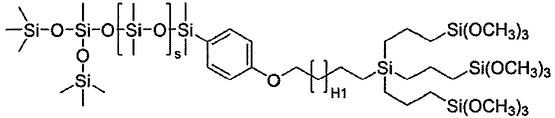

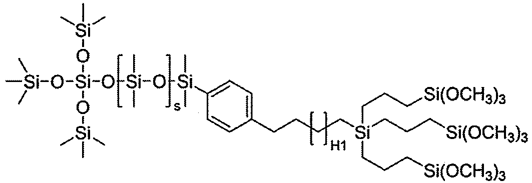

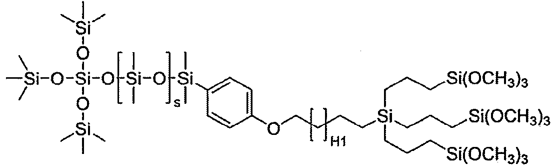

   wherein
   TMSO is a trimethylsilyloxy group,
   n1 and s are each independently an integer of 0 to 150, for example, 0 or 1, or an integer of 5 to 80,
   p is each independently an integer of 4 to 50, and preferably an integer of 8 to 40, and
   H1 is each independently an integer of 4 to 50, and preferably an integer of 8 to 40; and
   the compound B that is selected from the following compounds:
      ·

         CH₃-[Si(CH₃)₂O]ₙ₁Si(CH₃)₂-(CH₂)_{H1}-C(=O)NHCH₂CH₂CH₂Si(OCH₃)₃
      ·

         CH₃CH₂CH₂CH₂-[Si(CH₃)₂O]ₙ₁Si(CH₃)₂-(CH₂)_{H1}-C(=O)NHCH₂CH₂CH₂Si(OCH₃)₃
      ·

         [(CH₃)₃SiO)]₂(CH₃)Si-O-[Si(CH₃)₂O]ₙ₁Si(CH₃)₂-(CH₂)_{H1}-C (=O)NHCH₂CH₂CH₂Si(OCH₃)₃
      ·

         [(CH₃)₃SiO)]₃Si-O-[Si(CH₃)₂O]ₙ₁Si(CH₃)₂-(CH₂)_{H1}-C (=O) NHCH₂CH₂CH₂Si(OCH₃)₃
      ·

         CH₃-[Si(CH₃)₂O]ₙ₁Si(CH3)₂-(CH₂)_{H1}-O-(CH₂)_{H2}-C (=O)NHCH₂CH₂CH₂Si(OCH₃)₃
      ·

         CH₃CH₂CH₂CH₂-[Si(CH₃)₂O]ₙ₁Si(CH₃)₂-(CH₂)_{H1}-O-(CH₂)_{H2}-C(=O)NHCH₂CH₂CH₂Si(OCH₃)₃
      ·

         CH₃-[Si(CH₃)₂O]ₙ₁Si(CH₃)₂-(CH₂)_{H1}-Si(OCH₃)₃
      ·

         CH₃CH₂CH₂CH₂-[Si(CH₃)₂O]ₙ₁Si(CH₃)₂-(CH₂)_{H1}-Si(OCH₃)₃
      ·

         [(CH₃)₃SiO)]₂(CH₃)Si-O-[Si(CH₃)₂O]ₙ₁Si(CH₃)₂-(CH₂)_{H1}-Si(OCH₃)₃
      ·

         [(CH₃)₃SiO)]₃Si-O-[Si(CH₃)₂O]ₙ₁Si(CH₃)₂-(CH₂)_{H1}-Si(OCH₃)₃
      ·

         CH₃-[Si(CH₃)₂O]ₙ₁Si(CH3) 2- (CH2) _{H1}-C (=O) NHCH₂CH[CH₂CH₂CH₂Si(OCH₃)₃]₂
      ·

         CH₃CH₂CH₂CH₂-[Si(CH₃)₂O]ₙ₁Si(CH₃)₂-(CH₂)_{H1}-C(=O)NHCH₂CH[CH₂CH₂CH₂Si(OCH₃)₃]₂
      ·

         [(CH₃)₃SiO)]₂(CH₃)Si-O-[Si(CH₃)₂O]ₙ₁Si(CH3) 2- (CH2) _{H1}-C (=O)NHCH₂CH[CH₂CH₂CH₂Si(OCH₃)₃]₂
      ·

         [(CH₃)₃SiO)]₃Si-O-[Si(CH₃)₂O]ₙ₁Si(CH₃)₂-(CH₂)_{H1}-C(=O)NHCH₂CH[CH₂CH₂CH₂Si(OCH₃)₃]₂
      ·

         CH₃-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂
      ·

         CH₃CH₂CH2CH₂-[Si(CH₃)₂O]ₙ₁Si(CH₃)₂-(CH₂)_{H1}-O-(CH₂)_{H2}-C(=O)NHCH₂CH[CH₂CH₂CH₂Si(OCH₃)₃]₂
      ·

         CH₃-[Si(CH₃)₂O]ₙ₁Si(CH₃)2-(CH₂)n₁-CH[CH₂CH₂CH₂Si(OCH₃)₃]₂
      ·

         CH₃CH₂CH2CH₂-[Si(CH₃)2O]ₙ₁Si(CH₃)₂-(CH₂)_{H1}-CH[CH₂CH₂CH₂Si(OCH₃)₃]₂
      ·

         [(CH₃)₃SiO)]₂(CH₃)Si-O-[Si(CH₃)₂O]ₙ₁Si(CH₃)₂-(CH₂)_{H1}-CH[CH₂CH₂CH₂Si(OCH₃)₃]₂
      ·

         [(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂
      ·

         CH₃-[Si(CH₃)₂O]ₙ₁Si(CH₃)₂-(CH₂)-_{H1}-C(=O)NHCH₂CH[CH₂CH₂CH₂CH₂CH₂CH₂CH₂CH₂CH₂CH₂CH₂Si(OCH₃)₃]₂
      ·

         CH₃CH₂CH₂CH₂-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
      ·

         [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
      ·

         [(CH₃)₃SiO)₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
      ·

         CH₃-[Si(CH₃)₂O]ₙ₁Si(CH₃)2-(CH₂)_{H1}-O-(CH2)_{H2}-C(=O)NHCH₂CH[CH₂CH₂CH₂CH₂CH₂CH₂CH₂CH₂CH₂CH₂CH₂Si(OCH₃)₃]₂
      ·

         CH₃CH₂CH₂CH₂-[Si(CH₃)₂O]ₙ₁Si(CH₃)₂-(CH₂)_{H1}-O-(CH₂)_{H2}-C(=O)NHCH₂CH[CH₂CH₂CH₂CH₂CH₂CH₂CH₂CH₂CH₂CH₂CH₂Si(OCH₃)₃]₂
      ·

         CH₃-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
      ·

         CH₃CH₂CH₂CH₂-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
      ·

         [(CH₃)₃SiO)]₂(CH₃)Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
      ·

         [(CH₃)₃SiO)]₃Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
      ·

         CH₃-[Si(CH₃)₂O]ₙ₁Si(CH₃)₂-(CH₂)_{H1}-C(=O)N[CH₂CH₂CH₂Si(OCH₃)₃]₂
      ·

         CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂
      ·

         [(CH₃)₃SiO)]₂(CH₃)Si-O-[Si(CH₃)₂O]ₙ₁Si(CH₃)₂-(CH₂)_{H1}-C(=O)N[CH₂CH₂CH₂Si(OCH₃)₃]₂
      ·

         [(CH₃)₃SiO)]₃Si-O-[Si(CH₃)₂O]ₙ₁Si(CH₃)₂-(CH₂)_{H1}-C(=O)N[CH₂CH₂CH₂Si(OCH₃)₃]₂
      ·

         CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
      ·

         CH₃CH₂CH₂CH₂-[Si(CH₃)₂O]ₙ₁Si(CH₃)₂-(CH₂)ₙ₁-O-(CH₂)_{H2}-C(=O)N[CH₂CH₂CH₂Si(OCH₃)₃]₂
      ·

         CH₃-[Si(CH₃)₂O]ₙ₁Si(CH₃)₂-(CH₂)_{H1}-N[CH₂CH₂CH₂Si(OCH₃)₃]₂
      ·

         CH₃CH₂CH₂CH₂-[Si(CH₃)₂O]ₙ₁Si(CH₃)₂-(CH₂)_{H1}-N[CH₂CH₂CH₂Si(OCH₃)₃]₂
      ·

         [(CH₃)₃SiO)]₂(CH₃)Si-O-[Si(CH₃)₂O]ₙ₁Si(CH₃)₂-(CH₂)_{H1}-N[CH₂CH₂CH₂Si(OCH₃)₃]₂
      ·

         [(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂
      ·

         CH₃-[Si(CH₃)₂O]ₙ₁Si(CH₃)₂-(CH₂)_{H1}-C(=O)NHCH₂C[CH₂CH₂CH₂Si(OCH₃)₃]₃
      ·

         CH₃CH₂CH₂CH₂-[Si(CH₃)₂O]ₙ₁Si(CH₃)2-(CH₂)_{H1}-C(=O)NHCH₂C[CH₂CH₂CH₂Si(OCH₃)₃]₃
      ·

         [(CH₃)₃SiO)]₂(CH₃)Si-O-[Si(CH₃)₂O]ₙ₁Si(CH₃)₂-(CH₂)_{H1}- C(=O)NHCH₂C[CH₂CH₂CH₂Si(OCH₃)₃]₃
      ·

         [(CH₃)₃SiO)]₃Si-O-[Si(CH₃)₂O]ₙ₁Si(CH₃)₂-(CH₂)_{H1}-C(=O)NHCH₂C[CH₂CH₂CH₂Si(OCH₃)₃]₃
      ·

         CH₃-[Si(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
      ·

         CH₃CH₂CH₂CH₂-[Si(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
      ·

         CH₃-[Si(CH₃)₂O]ₙ₁Si(CH₃)₂-(CH₂)_{H1}-C[CH₂CH₂CH₂Si(OCH₃)₃]₃
      ·

         CH₃CH₂CH₂CH₂-[Si(CH₃)₂O]ₙ₁Si(CH₃)₂-(CH₂)_{H1}-C[CH₂CH₂CH₂Si(OCH₃)₃]₃
      ·

         [(CH₃)₃SiO)]₂(CH₃)Si-O-[Si(CH₃)₂O]ₙ₁Si(CH₃)₂-(CH₂)_{H1}-C[CH_{2C}H₂CH₂Si(OCH₃)₃]₃
      ·

         [(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃
      ·

         [(CH₃)₃SiO)]₂(CH₃)Si-(CH₂)_{H1}-C(=O)NHCH₂CH₂CH₂Si(OCH₃)₃
      ·

         [(CH₃)₃SiO)]₃Si-(CH₂)_{H1}-C(=O)NHCH₂CH₂CH₂Si(OCH₃)₃
      ·

         [(CH₃)₃SiO)]₂(CH₃)Si-(CH₂)_{H1}-Si(OCH₃)₃
      ·

         [(CH₃)₃SiO)]₃Si-(CH₂)_{H1}-Si(OCH₃)₃
      ·

         [(CH₃)₃SiO)]₂(CH₃)Si-(CH₂)_{H1}-C(=O)NHCH₂CH[CH_{2C}H₂CH₂Si(OCH₃)₃]₂
      ·

         [(CH₃)₃SiO)]₃Si-(CH₂)_{H1}-C(=O)NHCH₂CH[CH₂CH₂CH₂Si(OCH₃)₃]₂
      ·

         [(CH₃)₃SiO)]₂(CH₃)Si-(CH₂)_{H1}-CH[CH₂CH₂CH₂Si(OCH₃)₃]₂
      ·

         [(CH₃)₃SiO)]₃Si-(CH₂)_{H1}-CH[CH₂CH₂CH₂Si(OCH₃)₃]₂
      ·

         [(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂
      ·

         [(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
      ·

         [(CH₃)₃SiO)]₂(CH₃)Si-(CH₂)_{H1}-CH[CH₂CH₂CH₂CH₂CH₂CH₂CH₂CH₂CH₂CH₂CH₂Si(OCH₃)₃]₂
      ·

         [(CH₃)₃SiO)]₃Si-(CH₂)_{H1}-CH[CH₂CH₂CH₂CH₂CH₂CH₂CH₂CH₂CH₂CH₂CH₂Si(OCH₃)₃]₂
      ·

         [(CH₃)₃SiO)]₂(CH₃)Si-(CH₂)n₁-C(=O)N[CH₂CH₂CH₂Si(OCH₃)₃]₂
      ·

         [(CH₃)₃SiO)]₃Si-(CH₂)_{H1}-C(=O)N[CH_{2C}H₂CH₂Si(OCH₃)₃]₂
      ·

         [(CH₃)₃SiO)]₂(CH₃)Si-(CH₂)_{H1}-N[CH₂CH₂CH₂Si(OCH₃)₃]₂
      ·

         [(CH₃)₃SiO)]₃Si-(CH₂)_{H1}-N[CH₂CH₂CH₂Si(OCH₃)₃]₂
      ·

         [(CH₃)₃SiO)]₂(CH₃)Si-(CH₂)_{H1}-C(=O)NHCH₂C[CH_{2C}H₂CH₂Si(OCH₃)₃]₃
      ·

         [(CH₃)₃SiO)₃]₃Si-(CH₂)_{H1}-C(=O)NHCH₂C[CH_{2C}H₂CH₂Si(OCH₃)₃]₃
      ·

         [(CH₃)₃SiO)₃]₂(CH₃)Si-(CH₂)_{H1}-C[CH₂CH₂CH₂Si(OCH₃)₃]₃
      ·

         [(CH₃)₃SiO)₃]₃Si-(CH₂)_{H1}-C[CH₂CH₂CH₂Si(OCH₃)₃]₃ 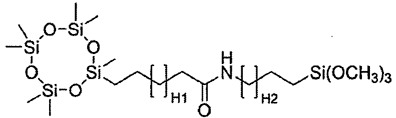 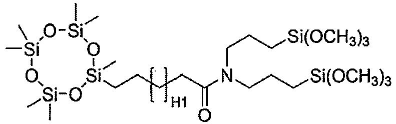 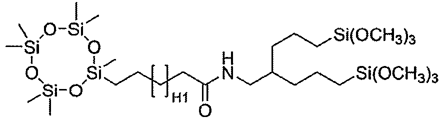 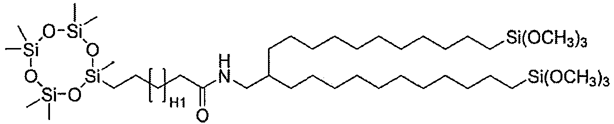 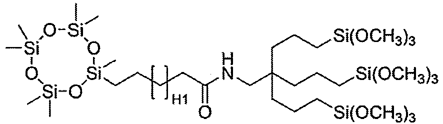
      ·

         CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂
      ·

         CH₃-[Si(CH₃)₂O]ₙ₁Si(CH₃)₂-(CH₂)_{H1}-O-(CH₂)_{H2}-C(CH₂CH₃)[CH₂OC(=O)NHCH₂CH₂CH₂Si(OCH₃)₃]₂
      ·

         CH₃CH₂CH₂CH₂-[Si(CH₃)₂O]ₙ₁Si(CH₃)2-(CH₂)_{H1}-O-(CH₂)_{H2}-C(CH₂CH₃)[CH₂OC(=O)NHCH₂CH₂OC(=O)CH(CH₃)CH₂Si(OCH₃)₃]₂
      ·

         CH₃-[Si(CH₃)₂O]ₙ₁Si(CH₃)₂-(CH₂) _{H1}-O-(CH₂)_{H2}-C(CH₂CH₃)[CH₂OC(=O)NHCH₂CH₂OC(=O)CH(CH₃)CH₂Si(OCH₃)₃]₂
      ·

         CH₃CH₂CH₂CH₂-[Si(CH₃)₂O]ₙ₁Si(CH₃)2--(CH₂)_{H1}-O-(CH₂)_{H2}-C[CH₂OC(=O)NHCH₂CH₂CH₂Si(OCH₃)₃]₃
      ·

         CH₃-[(Si(CH₃)₂O)]ₙ₁Si(CH₃)₂-(CH₂)H₁-O-(CH₂)H₂-C[CH₂OC(=O)NHCH₂CH₂CH₂Si(OCH₃)₃]₃
      ·

         [CH₃CH₂CH₂CH₂-[(Si(CH₃)₂O)]ₙ₁Si(CH₃)₂-(CH₂)_{H1}-O-(CH₂)_{H2}-]₂-C[CH₂OC(=O)NHCH₂CH₂CH₂Si(OCH₃)₃]₂
      ·

         [CH₃-[(Si(CH₃)₂O)]ₙ₁Si(CH₃)₂-(CH₂)_{H1}-O-(CH₂)_{H2}-]₂-C[CH₂OC(=O)NHCH₂CH₂CH₂Si(OCH₃)₃]₂
      ·

         CH₃CH₂CH₂CH₂-[Si(CH₃)₂O]ₙ₁Si(CH₃)₂-(CH₂)_{H1}-O-(CH₂)_{H2}-OC(=O)NHCH_{2C}H₂CH₂Si(OCH₃)₃
      ·

         CH₃-[Si(CH₃)₂O]ₙ₁Si(CH₃)₂-(CH2)_{H1}-O-(CH₂)H₂-OC(=O)NHCH_{2C}H₂CH₂Si(OCH₃)₃
      ·

         CH₃CH₂CH₂CH₂-[Si(CH₃)₂O]ₙ₁Si(CH₃)₂-(CH₂)_{H1}-O-(CH₂)_{H2}-OC(=O)NHCH₂CH₂OC(=O)CH(CH₃)CH₂Si(OCH₃)₃
      ·

         CH₃-[Si(CH₃)₂O]ₙ₁Si(CH₃)₂-(CH₂)_{H1}-O-(CH₂)_{H2}-OC(=O)NHCH₂CH₂OC(=O)CH(CH₃)CH₂Si(OCH₃)₃
      ·

         [CH₃CH₂CH₂CH₂-[Si(CH₃)₂O]ₙ₁Si(CH₃)₂-(CH₂)_{H1}-O-(CH₂)_{H2}-]₃C-CH₂OC(=O)NHCH_{2C}H₂CH₂Si(OCH₃)₃
      ·

         [CH₃-[Si(CH₃)₂O]ₙ₁Si(CH₃)₂-(CH₂)_{H1}-O-(CH₂)_{H2}-]₃C-CH₂OC(=O)NHCH₂CH₂CH₂Si(OCH₃)₃
      ·

         [CH₃CH₂CH₂CH₂-[(Si(CH₃)₂O)]ₙ₁Si(CH₃)₂-(CH₂)_{H1}-O-(CH₂)_{H2}-]₂C(CH₂CH₃)[CH₂OC(=O)NHCH₂CH₂CH₂Si(OCH₃)₃]
      ·

         [CH₃-[(Si(CH₃)₂O)]ₙ₁Si(CH₃)₂-(CH₂)_{H1}-O-(CH₂)_{H2}-]₂C(CH₂CH₃)[CH₂OC(=O)NHCH₂CH₂CH₂Si(OCH₃)₃] 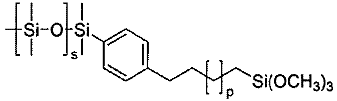 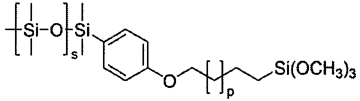 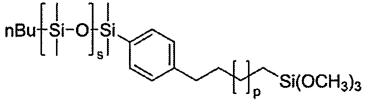 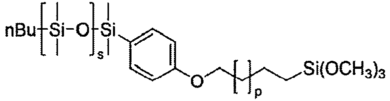 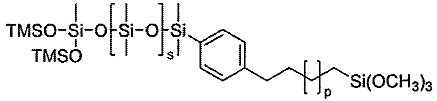 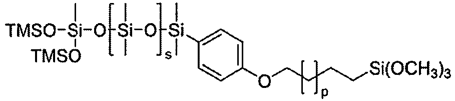 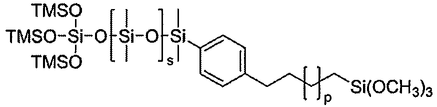 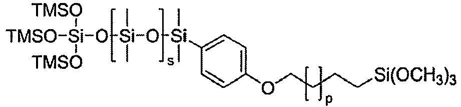 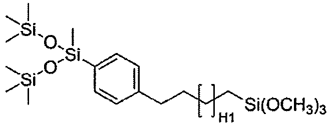 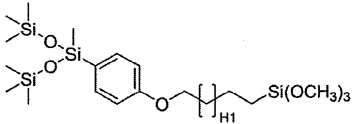 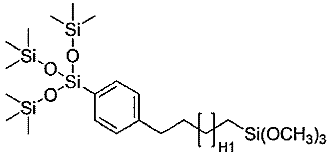 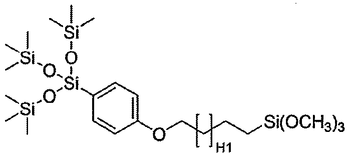 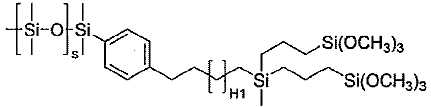 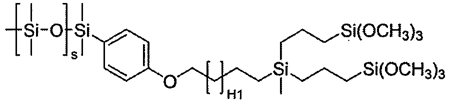 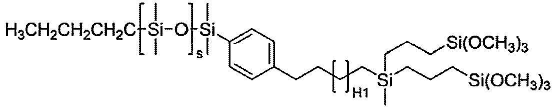 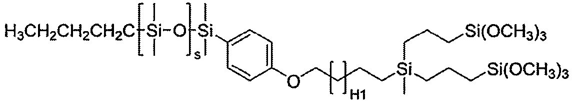 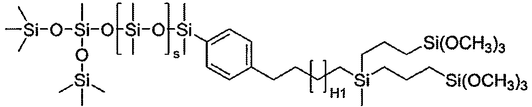 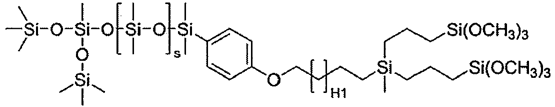 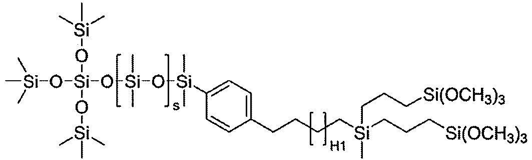 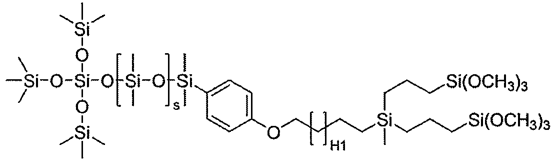 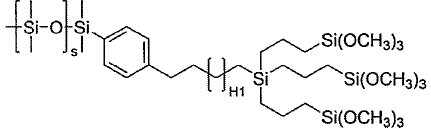 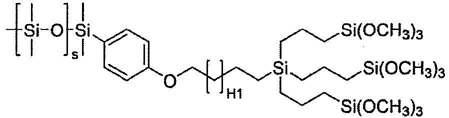 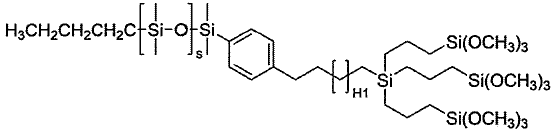 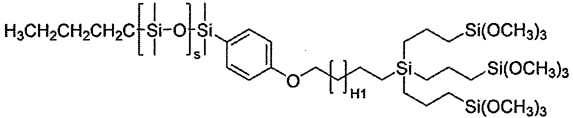 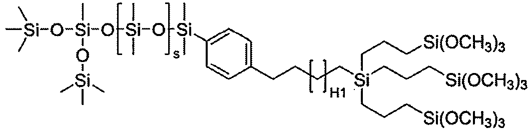 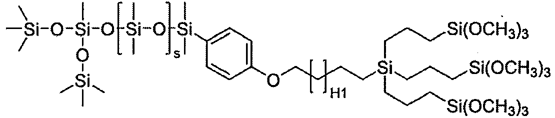 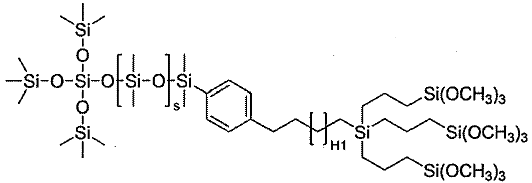 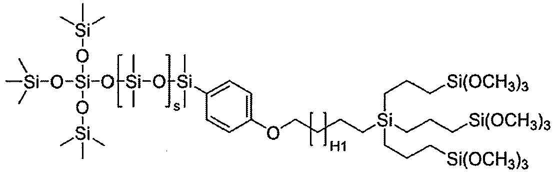 wherein
         TMSO is a trimethylsilyloxy group,
         n1 and s are each independently an integer of 0 to 150, for example, 0 or 1, or an integer of 5 to 80,
         p is each independently an integer of 1 to 50, and preferably an integer of 8 to 40,
         H1 and H2 are each independently an integer of 1 to 50, H1 is preferably an integer of 8 to 40, and H2 is preferably an integer of 1 to 10.

In a more preferable embodiment, the silane compounds used in the composition of the present disclosure are compounds in which
the compound A is selected from the following compounds: 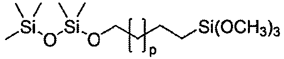 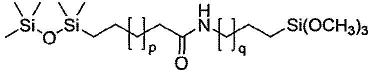 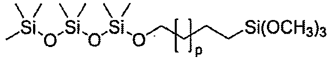 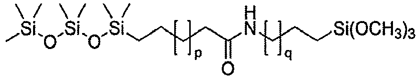 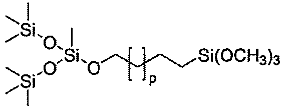 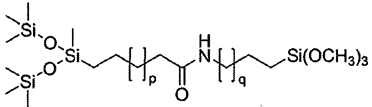 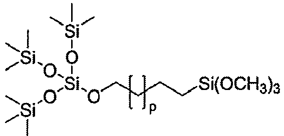 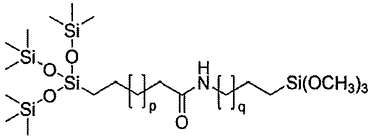 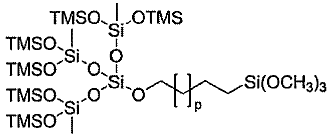 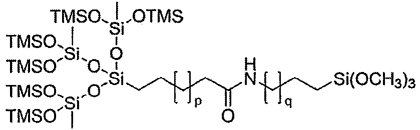 wherein TMSO is a trimethylsilyloxy group,
p is each independently an integer of 1 to 30, and
q is each independently an integer of 1 to 30; and
the compound B is selected from the following compounds:

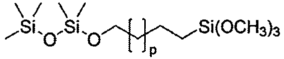

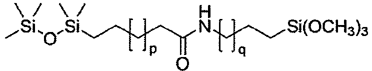

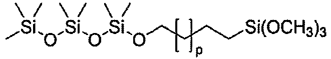

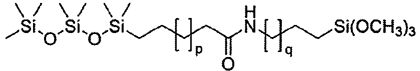

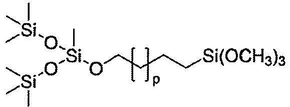

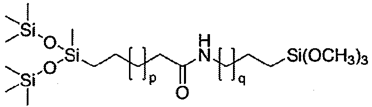

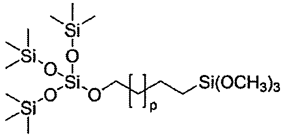

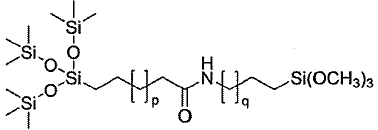

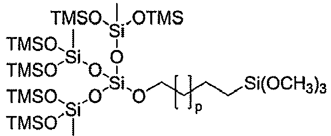

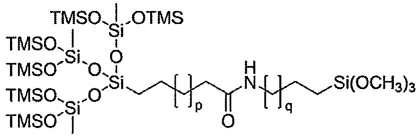

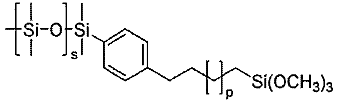

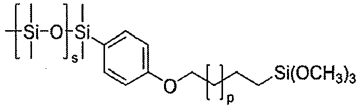

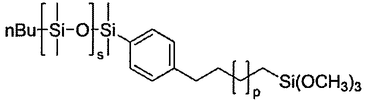

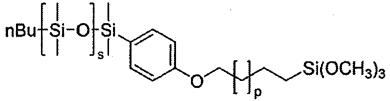

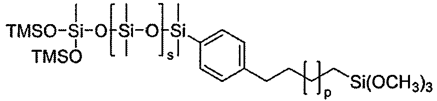

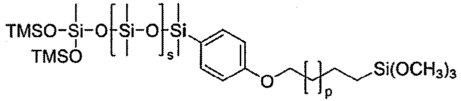

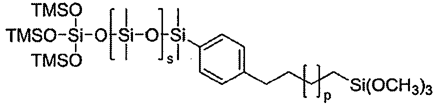

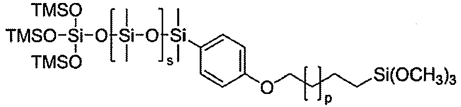

   CH₃Si(CH₃)₂O(Si(CH₃)₂O)ₙSi(CH₃)₂(CH₂)₁₀CONHCH₂CH₂CH₂Si(O CH₃)₃

   (CH₃CH₂CH₂CH₂Si(CH₃)₂(OSi(CH₃)₂)ₙ-(CH₂)₃-OCH₂-CONH-CH₂C{CH₂CH₂CH₂Si(OCH₃)₃}₃

   wherein
   TMSO is a trimethylsilyloxy group,
   p is each independently an integer of 1 to 30,
   q is each independently an integer of 1 to 30,
   s is each independently an integer of 1 to 60, and
   n is each independently an integer of 10 to 70.

In a yet more preferable embodiment, the silane compounds used in the composition of the present disclosure are compounds in which:
the compound A is

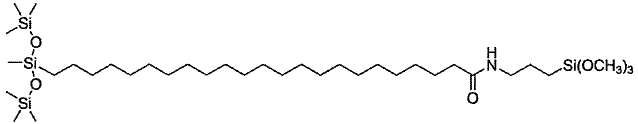

[(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH_{2C}H₂CH₂Si (OCH₃)₃]₂

(n = 26)

[(CH₃)₃SiO]₃SiO(Si(CH₃)₂O)ₙSi(CH₃)₂CH₂CH₂CH₂CH₂CH₂CH₂CH₂CH₂CH₂ CH₂CONHCH₂C[CH_{2C}H₂CH₂Si(OCH₃)₃]₃

(n = 23) and
the compound B is a compound selected from

CH₃Si(CH₃)₂O(Si(CH₃)₂O)ₙSi(CH₃)₂(CH₂)₁₀CONHCH₂CH₂CH₂Si(OCH₃)₃

(n is an integer of 10 to 30)

(CH₃CH₂CH₂CH₂Si(CH₃)₂(OSi(CH₃)₂)₅₇-(CH₂)₃-OCH₂-CONH-CH₂C{CH₂CH₂CH₂Si(OCH₃)₃}₃ 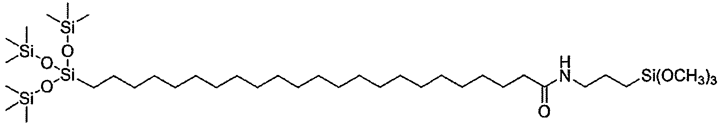 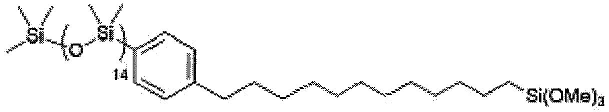 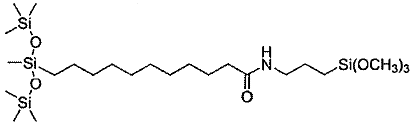 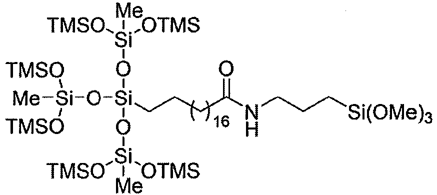 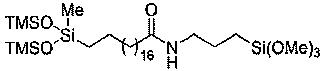
wherein TMSO is trimethylsilyloxy, and Me is a methyl group.

   CH₃[Si(CH₃)2O]ₙSi(CH₃)₂(CH₂) ₂₂CONH-CH₂CH[CH_{2C}H₂CH₂Si(OCH₃)₃]₂
(n = 57)

   [(CH₃)₃SiO]2CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH₂CH₂CH₂CH ₂CH₂CH₂CH₂CH₂CH₂CH₂CH₂Si(OCH₃)₃]₂

   (n = 17)

The silane compound may have a number average molecular weight of 5 × 10² to 1 × 10⁵ without any limitation. The silane compound represented by the formula (1) or (2) preferably has a number average molecular weight of 1,000 to 30,000, and more preferably 1,500 to 10,000, from the viewpoint of abrasion durability. Note that such a "number average molecular weight" is a value measured by ¹H-NMR.

The compound represented by the formula (1) and (2) can be obtained by, for example, reacting a compound represented by the following formula:

R¹⁶¹-COOH

wherein R¹⁶¹ is an R^{1ab}-R^{S}-containing group,
   R^{1ab} is a hydrocarbon group, a group A or a group B, and
   R^{S} has the same meaning as above,
with a compound represented by the following formula:

   NH₂-R¹⁶²
wherein R¹⁶² is an allyl group-containing group,
to obtain the following formula:

   R¹⁶¹-CONH-R¹⁶³-R¹⁶⁴
wherein
   R¹⁶¹ is an R^{1ab}-R^{S}-containing group,
   R¹⁶³ is a (n+1)-valent linker group, and
   R¹⁶⁴ is an allyl group;
and then reacting the resulting allyl compound with a compound represented by

   HSiR¹⁶⁵ₘR¹⁶⁶₃₋ₘ
wherein
   R¹⁶⁵ is, each independently at each occurrence, a hydroxyl group or a hydrolyzable group,
   R¹⁶⁶ is, each independently at each occurrence, a monovalent organic group, and
   m is 1 to 3.

Alternatively, the compound represented by the formula (1) and (2) can be obtained as follows, for example.

First, an unsaturated carboxylic acid or an unsaturated carboxylic acid ester such as a compound represented by the formula:

CH₂=CH-R¹⁷¹-COOR¹⁷²

(wherein
R¹⁷¹ is an alkylene group, and
R¹⁷² is a hydrogen atom or a C₁₋₃ alkyl group)
   is reacted with a silane compound such as a compound represented by the formula:

   R^{1ab}-R^{S}-SiR^{2a}₂-H

   (wherein
   R^{1ab} is a hydrocarbon group, a group A or a group B, and
   R^{2a} is each independently a hydrocarbon group) to give a compound represented by the formula:

      R^{1ab}-R^{S}-SiR^{2a}₂-CH₂CH₂-R¹⁷¹-COOR¹⁷².

      Then, the resulting compound is reacted with an amine derivative having a carbon-carbon double bond at a terminal, such as a compound represented by the formula:

      NH₂-R¹⁷³

      (wherein
      R¹⁷³ is -R¹⁷⁴-CH=CH₂, or -R¹⁷⁵(-R¹⁷⁴-CH=CH₂)₃,
      R¹⁷⁴ is a single bond or a C₁₋₆ alkylene group,
      R¹⁷⁵ is -R¹⁷⁶-C, and
      R¹⁷⁴ is a single bond or a C₁₋₆ alkylene group) to give a compound represented by the formula:
         R^{1ab}-R^{S}-SiR^{2a}₂-CH₂CH₂-R¹⁷¹-CONH₂-R¹⁷⁴-CH=CH₂, or
         R^{1ab}-R^{S}-SiR^{2a}₂-CH₂CH₂-R¹⁷¹-CONH₂-R¹⁷⁵(-R¹⁷⁴-CH=CH₂)₃. Eventually, the compound obtained above is reacted with, for example, a compound represented by the formula:

            HSi(R¹⁷⁶)₃

            (wherein R¹⁷⁶ is a hydrolyzable group)
            and thus the compounds represented by the formulae (1) and (2) can be obtained.

Next, the surface-treating agent of the present invention will now be described.

The surface-treating agent of the present disclosure contains the above compound A and compound B. The surface-treating agent of the present disclosure may be used for coating, and the surface-treating agent to be used in coating is also simply referred to as "coating liquid".

In one embodiment, the surface-treating agent (coating liquid) of the present disclosure is the composition itself containing the above compound A and compound B.

In one embodiment, the mass ratio of the contents of the compound A and the compound B contained in the composition of the present disclosure (compound A : compound B) is preferably 0.1:99.9 to 99.9:0.1, more preferably 10:90 to 90:10, even more preferably 20:80 to 80:20, and may be, for example, 30:70 to 70:30, or 40:60 to 60:40.

In one embodiment, the surface-treating agent (coating liquid) of the present disclosure may contain the composition and at least one of a compound composed of a condensate in which at least a part of the silane compounds contained in the composition is condensed. In other words, the surface-treating agent of the present disclosure may contain the silane compound and a condensate in which at least a part of the silane compounds is condensed.

In the above embodiment, the content of the condensate may be preferably 40% by mass or less and more preferably 30% by mass or less based on the sum of the silane compound and the condensate of the silane compound. Here, the content of the condensate can be determined from, for example, the abundance ratio of the peak position to the area in GPC (gel permeation chromatography).

The surface-treating agent (coating liquid) of the present disclosure may further contain a solvent, a (nonreactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent (coating liquid) of the present disclosure further contains a compound represented by R⁹⁰-OH.

R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, and preferably a C₁₋₃ alkyl group, such as a methyl group.

In one embodiment, the surface-treating agent (coating liquid) of the present disclosure may further contain a solvent selected from the compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉,
wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferable embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group contains a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is to say, R⁸³ₙ₈C₆H₆₋ₙ₈ is benzene substituted with n8 R⁸³.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed of multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and even more preferably a methyl group.

m8 is preferably an integer of 1 to 6, more preferably an integer of 1 to 5, and even more preferably 1 to 2.

m9 is preferably an integer of 3 to 6, and more preferably an integer of 3 to 5.

In one embodiment, examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirit, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl-2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

Examples of the silicone oil include, but are not limited to, compounds represented by the following general formula (3a):

R^{101a}-(SiR^{103a}₂-O)ₐ₁-SiR^{103a}₂-R^{101a} (3a)

wherein
R^{101a} is each independently a hydrogen atom or a hydrocarbon group,
R^{103a} is each independently a hydrogen atom or a hydrocarbon group, and
a1 is 2 to 3,000.

R^{103a} is each independently a hydrogen atom or a hydrocarbon group. Such a hydrocarbon group may be substituted.

R^{103a} is, each independently, preferably an unsubstituted hydrocarbon group or a hydrocarbon group substituted with a halogen atom.

R^{103a} is, each independently, preferably a C₁₋₆ alkyl group or an aryl group optionally substituted with a halogen atom, and more preferably a C₁₋₆ alkyl group or an aryl group.

The C₁₋₆ alkyl group may be linear or may be branched, and is preferably linear.
The C₁₋₆ alkyl group is preferably a C₁₋₃ alkyl group, and more preferably a methyl group.

The aryl group is preferably a phenyl group.

In one embodiment, R^{103a} is each independently a C₁₋₆ alkyl group, preferably a C₁₋₃ alkyl group, and more preferably a methyl group.

In another embodiment, R^{103a} is a phenyl group.

In another embodiment, R^{103a} is a methyl group or a phenyl group, and preferably a methyl group.

R^{101a} is each independently a hydrogen atom or a hydrocarbon group, and has the same meanings as those described for R^{3a}.

R^{101a} is, each independently, preferably a C₁₋₆ alkyl group or an aryl group optionally substituted with a halogen atom, and more preferably a C₁₋₆ alkyl group or an aryl group.

In one embodiment, R^{101a} is each independently a C₁₋₆ alkyl group, preferably a C₁₋₃ alkyl group, and more preferably a methyl group.

In another embodiment, R^{101a} is a phenyl group.

In another embodiment, R^{101a} is a methyl group or a phenyl group, and preferably a methyl group.

a1 is 2 to 1,500. a1 may be preferably 5 or more, more preferably 10 or more, and even more preferably 15 or more, such as 30 or more or 50 or more. a1 may be preferably 1,000 or less, more preferably 500 or less, even more preferably 200 or less, and yet more preferably 150 or less, such as 100 or less or 80 or less.

a1 may be preferably 5 to 1,000, more preferably 10 to 500, even more preferably 15 to 200, and yet more preferably 15 to 150.

Other examples of the silicone oil include compounds represented by (3b) below:

R^{101a}-R^{SO2}-R^{103a} (3b)

wherein
R^{101a} is each independently a hydrocarbon group,
R^{103a} is each independently a hydrocarbon group, and
R^{SO2} is -R^{S}-SiR⁵₂-, wherein R^{S} and R⁵ have the same meanings as above.

The silicone oil may have an average molecular weight of 500 to 1,000,000, and preferably 1,000 to 100,000. The molecular weight of the silicone oil may be measured using GPC.

The silicone oil may be, for example, a linear or cyclic silicone oil in which a1 in -(SiR^{3a}₂-O)ₐ₁- is 30 or less. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. The cyclic silicone oil may be, for example, cyclic dimethylsiloxane oil.

The silicone oil may be contained in an amount of, for example, 0 to 50% by mass, preferably 0.001 to 30% by mass, and more preferably 0.1 to 5% by mass, based on the surface-treating agent (coating liquid) of the present disclosure.

In the surface-treating agent (coating liquid) of the present disclosure, such a silicone oil may be contained in an amount of, for example, 0 to 300 parts by mass, preferably 0 to 100 parts by mass, more preferably 0 to 50 parts by mass, and even more preferably 0 to 10 parts by mass, based on total 100 parts by mass of the compound contained in the composition of the present disclosure (in the case of two or more kinds, the total thereof, and the same applies below).

The silicone oil contributes to increasing the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. Such an alcohol added to the composition improves the stability of the composition.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compound include diethylamine and triethylamine. Examples of the aromatic amine compound include aniline and pyridine.

In a preferable embodiment, the transition metal is contained as a transition metal compound represented by M-R, wherein M is a transition metal atom and R is a hydrolyzable group. By using a compound obtained by bonding a transition metal and a hydrolyzable group as the transition metal compound, the transition metal atom can be contained in the surface-treating layer more efficiently, and the abrasion durability and the chemical resistance of the surface-treating layer can be more increased.

The hydrolyzable group means a group that can undergo a hydrolysis reaction in the same manner as the hydrolyzable group concerning the above compound, i.e., means a group that can be removed from the transition metal atom by a hydrolysis reaction. Examples of the hydrolyzable group include -OR^{m}, -OCOR^{m}, -O-N=CR^{m}₂, -NR^{m}₂, -NHR^{m}, -NCO, and a halogen (in these formulae, R^{m} represents a substituted or unsubstituted C₁₋₄ alkyl group).

In a preferable embodiment, the hydrolyzable group is -OR^{m}, and preferably methoxy or ethoxy. By using an alkoxy group as the hydrolyzable group, the transition metal atom can be contained in the surface-treating layer more efficiently, and the abrasion durability and the chemical resistance of the surface-treating layer can be more increased.

In one embodiment, the hydrolyzable group may be the same as the hydrolyzable group contained in the above compound. By causing the hydrolyzable groups in the compound and in the transition metal compound to be the same group, the influence of such hydrolyzable groups being mutually exchanged, if ever, can be minimized.

In another embodiment, the hydrolyzable group may be different from the hydrolyzable group contained in the above compound. By causing the hydrolyzable groups in the above compound and in the transition metal compound to be different, the reactivity of hydrolysis can be controlled.

In one embodiment, the above hydrolyzable group and the hydrolyzable group contained in the above compound may be mutually exchanged in the composition.

In a preferable embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be contained in an amount of, for example, 0.0002% by mass or more based on the entirety of the surface-treating agent (coating liquid). The catalyst may be contained in an amount of preferably 0.02% by mass or more, and more preferably 0.04% by mass or more, based on the entirety of the surface-treating agent (coating liquid). The catalyst may be contained in an amount of, for example, 10% by mass or less based on the entirety of the surface-treating agent (coating liquid) and, in particular, is contained in an amount of 1% by mass or less. The surface-treating agent (coating liquid) of the present disclosure can contribute to the formation of a surface-treating layer having better durability when the catalyst is contained in the concentration as described above.

The content of the catalyst is preferably 0 to 10% by mass, more preferably 0 to 5% by mass, and particularly preferably 0 to 1% by mass, based on the compound contained in the composition of the present disclosure.

The catalyst promotes hydrolysis and dehydrative condensation of the compound contained in the composition of the present disclosure, and promotes formation of a layer formed of the composition of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent (coating liquid) of the present disclosure may contain, in addition to the components described above, trace amounts of Pt, Rh, Ru, 1,3-divinyltetramethyldisiloxane, triphenylphosphine, NaCl, KCl, silane condensates, and the like as impurities.

In one embodiment, the surface-treating agent (coating liquid) of the present disclosure is for a dry coating method, and preferably for vacuum deposition.

In one embodiment, the surface-treating agent (coating liquid) of the present disclosure is for a wet coating method, and preferably for dip coating.

The surface-treating agent (coating liquid) of the present disclosure can be formed into pellets by impregnating a porous material such as a porous ceramic material or a metal fiber such as a fiber obtained by, for example, solidifying steel wool in a cotton-like form with composition. Such pellets can be used in, for example, vacuum deposition.

The composition of the present disclosure is preferably used as a surface-treating agent or as a component of a surface-treating agent.

Below, the article of the present disclosure will now be described.

The article of the present disclosure includes a substrate and a layer (a surface-treating layer) on the substrate surface, the layer being formed of the surface-treating agent (coating liquid) of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more kinds thereof may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The form of the substrate is not limited, and may be, for example, a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) that forms a natural oxidized film or a thermal oxidized film on its surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H groups or alkoxysilane.

In a preferable embodiment, the substrate is glass. Such glass is preferably sapphire glass, soda-lime glass, alkali aluminosilicate glass, borosilicate glass, alkali-free glass, crystal glass, quartz glass, or crystallized glass, and is particularly preferably chemically strengthened soda-lime glass, chemically strengthened alkali aluminosilicate glass, or chemically bonded borosilicate glass.

In one embodiment, the article of the present disclosure may include a silicon oxide-containing intermediate layer between glass and the surface-treating layer. By providing such an intermediate layer, adhesion between glass and the surface-treating layer is increased, and durability is increased.

In a preferable embodiment, the intermediate layer may contain an alkali metal in addition to silicon oxide.

Examples of the alkali metal include lithium, sodium, and potassium. The alkali metal is preferably sodium.

The thickness of the intermediate layer is not limited, and is preferably 1 to 200 nm and particularly preferably 1 to 20 nm. By causing the thickness of the intermediate layer to be at the lower limit of the above range or greater, the effect of increasing adhesion provided by the intermediate layer is more increased.

The concentration of alkali metal atoms in the intermediate layer can be measured by various surface analysis apparatuses such as TOF-SIMS, XPS, and XRF.

The proportion of alkali metal atoms to all atoms in the entirety of the intermediate layer can be obtained by XPS depth profile analysis using ion sputtering, wherein measurement by XPS and surface etching by ion sputtering using an ion gun provided in an XPS apparatus are alternately performed.

In the intermediate layer, the average alkali metal concentration in a region having a depth of 1 nm or less from the surface that is in contact with the surface-treating layer is determined by obtaining a depth profile of the alkali metal atom concentration by TOF-SIMS (time-of-flight secondary ion mass spectrometry) depth analysis using ion sputtering, and then calculating the average alkali metal atom concentration in the profile. TOF-SIMS depth profile analysis by ion sputtering is performed by alternately repeating measurement by TOF-SIMS and surface etching by ion sputtering using an ion gun provided in a TOF-SIMS apparatus.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent to the surface of the substrate so as to coat the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, high-frequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirit, benzene, toluene, xylene, naphthalene, methyl acetate, ethyl acetate, propyl acetate, n-butyl acetate, isopropyl . acetate, isobutyl acetate, cellosolve acetate, propylene glycol methyl ether acetate, carbitol acetate, diethyl oxalate, ethyl pyruvate, ethyl-2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

In one embodiment, the solvent when the wet coating method is used may be, for example, a compound represented by R⁹⁰-OH. R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, and preferably a C₁₋₃ alkyl group, such as a methyl group.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used in a deposition (usually vacuum deposition) treatment, or a pellet-like material may be used in a deposition (usually vacuum deposition) treatment, wherein pellets are obtained by impregnating a porous body of metal such as iron or copper with the surface-treating agent of the present disclosure to which the catalyst has been added.

The catalyst may be any suitable acid or base, transition metal (such as Ti, Ni, Sn, Zr, Al, or B), sulfur-containing compound or nitrogen-containing compound having an unshared electron pair in the molecular structure (such as a sulfoxide compound, an aliphatic amine compound, an aromatic amine compound, a phosphoric acid amide compound, an amide compound, or an urea compound), or the like. The acid catalyst may be, for example, acetic acid, formic acid, trifluoroacetic acid, hydrochloric acid, nitric acid, sulfuric acid, phosphoric acid, sulfonic acid, methanesulfonic acid, or p-toluenesulfonic acid. Also, the base catalyst may be, for example, ammonia, sodium hydroxide, potassium hydroxide, or an organic amine such as triethylamine or diethylamine. Examples of the transition metal, the aliphatic amine compound, and the aromatic amine compound include those described above.

The surface-treating layer contained in the article of the present disclosure may have high abrasion durability. Moreover, the surface-treating layer may have not only high abrasion durability but also have, depending on the composition of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grime such as fingerprints, and excellent tactile sensations to the fingers), chemical resistance, and the like, and may be suitably used as a functional thin film.

Accordingly, the present disclosure further relates to an optical material having the surface-treating layer as the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material are as follows: windows, light covers, and external camera covers. Examples of the interior material are as follows: instrument panel covers, navigation system touch panels, and decorative interior materials.

The thickness of the layer is not limited. The thickness of the layer in the case of an optical member may be in the range of, for example, 1 to 50 nm, preferably 1 to 30 nm, and more preferably 1 to 15 nm, from the viewpoint of optical performance, abrasion durability, and antifouling properties.

The apparatus for performing X-ray photoelectron spectroscopy for measuring the atomic composition and the ratio of constitutional atoms of the surface-treating layer may be XPS or PHI 5000 VersaProbe II manufactured by ULVAC-PHI, Inc. Usable measurement conditions for XPS analysis may be an X-ray source of 25 W monochromatic AlKa radiation, a photoelectron detection surface of 1,400 µm × 300 µm, a photoelectron detection angle in a range of 20° to 90° (for example, 20°, 45°, 90°), a pass energy of 23.5 eV, and sputtering with a gas cluster ion beam or Ar ions. The compositions of the surface-treating layer and the intermediate layer can be determined by observing the peak areas of F1s, C1s, O1s, and Si2p under the above apparatus and measurement conditions, and calculating the atomic ratio of fluorine, carbon, oxygen, and silicon.

Also, depth profile analysis may be performed as well. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and Ar ions, gas cluster ions, C60 ions, or the like as sputtering ions. Etching may be performed to 1 to 100 nm by sputtering, and the composition in the coating film at each etching depth may be obtained as well.

By adjusting the photoelectron detection angle of the XPS analysis, the detection depth can be suitably adjusted. For example, a shallow angle close to 20 degrees allows a detection depth of about 3 nm, while a deep angle close to 90 degrees allows a detection depth of about 10 nm.

The silicon oxide-containing intermediate layer described above can be formed by applying a silicon oxide precursor to the substrate surface. When the intermediate layer contains an alkali metal, the intermediate layer can be formed by applying a composition containing a silicon oxide precursor and an alkali metal source to the substrate surface.

Examples of the silicon oxide precursor include silicic acid, a partial condensate of silicic acid, an alkali metal silicate, a silane compound having a hydrolyzable group that is bonded to a silicon atom, and a partially hydrolyzed condensate of such a silane compound. Silicic acid and a partial condensate thereof can be converted to silicon oxide by dehydrative condensation, and an alkali metal silicate can be converted to silicon oxide by being converted first to silicic acid or a partial condensate thereof with an acid or a cation exchange resin and then dehydratively condensing the resulting silicic acid or partial condensate thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source includes alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide and an alkali metal carbonate, more preferably an alkali metal hydroxide, and even more preferably Na.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide containing a predetermined amount of alkali metal atoms to be obtained.

The thickness of the intermediate layer is not limited, and is in the range of, for example, 1 to 50 nm, preferably 1 to 30 nm, more preferably 2 to 15 nm, and even more preferably 3 to 10 nm.

So far, the compound, the composition, and the article of the present disclosure have been described in detail. The compound, the composition, the article, and the like of the present disclosure are not limited to those exemplified above.

### Examples

The present invention will now be further specifically described by way of the following Examples, but the present invention is not limited thereto.

In the following Examples, the number n of repeating units of siloxane was calculated by ¹H-NMR.

### (Synthetic Example 1)

Stearoyl chloride (5 g), allylamine (2.5 mL), and dichloromethane (15 mL) were mixed, and stirred at room temperature for 16 hours. The mixture was diluted with dichloromethane, washed with hydrochloric acid and water, and then concentrated under reduced pressure to give compound (1) C₁₇H₃₅-CONHCH₂CH₂CH=CH₂ (5.0 g).

¹H-NMR (CDCl₃, 400 MHz) δ [ppm]: 0.85-0.88 (m, 3H), 1.23-27 (m, 28H), 1.60-1.70 (m, 2H), 2.15-2.22 (m, 2H), 3.85-3.89 (m, 2H), 5.01-5.15 (m, 2H), 5.78-5.86 (m, 1H).

### (Synthetic Example 2)

Compound (1) C₁₇H₃₅-CONHCH₂CH₂CH=CH₂ (5 g), toluene (70 mL), a xylene solution of Karstedt's catalyst (2%, 3.5 mL), aniline (0.5 g), and trimethoxysilane (5.9 mL) were mixed, and the mixture was stirred at room temperature for 16 hours and then concentrated under reduced pressure to give compound (2) C₁₇H₃₅-CONH-CH₂CH₂CH₂Si(OCH₃)₃ (6.3 g).

¹H-NMR (CDCl₃, 400 MHz) δ [ppm]: 0.53-0.65 (m, 2H) 0.85-0.91 (m, 3H), 1.24-27 (m, 28H), 1.60-1.648 (m, 4H), 2.12-2.24 (m, 2H), 3.21-3.26 (m, 2H) 3.56-3.60 (m, 9H)

### (Synthetic Example 3)

Tricosanoic acid (2.16 g), allylamine (1.47 g), 1-(3-dimethylaminopropyl)-3-ethylcarbodiimide hydrochloride (1.85 g), 4-dimethylaminopyridine (83.2 mg), and dichloromethane (21.6 g) were mixed, and the mixture was stirred at room temperature for 16 hours. The mixture was diluted with dichloromethane, washed with hydrochloric acid and water, and then concentrated under reduced pressure to give compound (3) CH₃(CH₂)₂₁CONHCH₂CH=CH₂ (1.39 g).

¹H-NMR (CDCl₃, 400 MHz) δ [ppm]: 0.86-0.90 (m), 1.25-1.29 (m), 1.62-1.67 (m), 2.17-2.21 (m), 3.87-3.91 (m) 3.87-3.91 (m), 5.12-5.21 (m), 5.44 (m), 5.79-5.89 (m)

### (Synthetic Example 4)

First, 1.0 g of Compound (3) CH₃(CH₂)₂₁CONHCH₂CH=CH₂ obtained in Synthetic Example 15, 3.0 g of toluene, 0.1 mL of pyridine, and a xylene solution of Karstedt's catalyst (2%, 0.3 mL) were each added, then 1.0 mL of trimethoxysilane was added, and the mixture was stirred at room temperature for 16 hours. Thereafter, the mixture was purified to give compound (4) CH₃(CH₂)₂₁CONHCH₂CH₂CH₂Si(OCH₃)₃ (1.10 g).

### Compound (4)

¹H-NMR (CDCl₃, 400 MHz) δ [ppm]: 0.014-0.146 (m), 0.49-0.59 (m), 0.63-0.69 (m), 0.86-0.95 (m), 1.16-1.40 (m), 1.47-1.67 (m), 2.12-2.17 (m), 3.19-3.27 (m), 3.57-3.64 (m)

### (Synthetic Example 5)

First, 0.50 g of methyl tricosenoate, 10.0 mL of toluene, 0.05 mL of pyridine, and 0.3 mL of a xylene solution containing a 2% Pt complex of 1,3-divinyl-1,1,3,3-tetramethyldisiloxane were each added, and then 1.2 mL of 1,1,1,3,5,5,5-heptamethyltrisiloxane was added dropwise. After being stirred at room temperature for 17 hours, the mixture was purified to give 0.87 g of the following compound (5).

¹H-NMR (CDCl₃, 400 MHz) δ [ppm]: 0.033-0.241 (m), 0.438-0.550 (m), 1.191-1.413 (m), 1.607-1.642 (m), 2.242-2.325 (m), 3.669 (s)

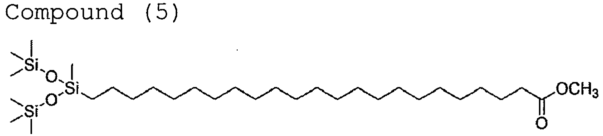

### (Synthetic Example 6)

First, 0.86 g of compound (5), 5.0 mL of allylamine, and 0.20 g of 1,5,7-triazabicyclo[4.4.0]deca-5-ene were each added, and then the mixture was stirred at 75°C for 3 hours. Thereafter, the mixture was washed with an aqueous hydrochloric acid solution, dehydrated over magnesium sulfate, and concentrated under reduced pressure to give 0.72 g of compound (6).

¹H-NMR (CDCl₃, 400 MHz) δ [ppm]: 0.076-0.128 (m), 0.413-0.465 (t), 1.183-1.1.404 (m), 1.604-1.677 (m), 2.173-2.248 (t), 3.841-3.942 (m), 5.122-5.210 (m), 5.809-5.877 (m)

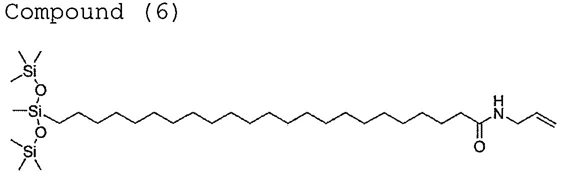

### (Synthetic Example 7)

First, 0.72 g of compound (6), 6.0 mL of toluene, 0.04 mL of pyridine, and 0.26 mL of a xylene solution containing a 2% Pt complex of 1,3-divinyl-1,1,3,3-tetramethyldisiloxane were each added, then 1.4 mL of trimethoxysilane was added, and the mixture was stirred at room temperature for 16 hours. Thereafter, the mixture was purified to give 0.48 g of compound (7).

¹H-NMR (CDCl₃, 400 MHz) δ [ppm]: 0.054-0.149 (m), 0.425-0.464 (t), 0.628-0.681 (m), 1.181-1.402 (m), 1.544-1.768 (m), 2.125-2.164 (t), 3.558-3.646 (m)

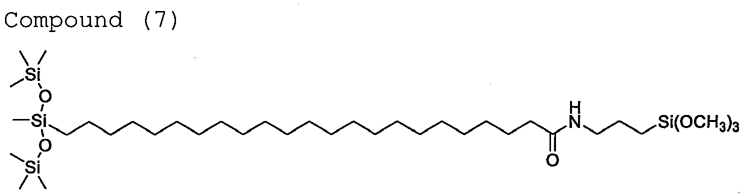

### (Synthetic Example 8)

First, 1.25 g of methyl tricosenoate, 20.0 mL of toluene, 0.1 mL of pyridine, and 0.65 mL of a xylene solution containing a 2% Pt complex of 1,3-divinyl-1,1,3,3-tetramethyldisiloxane were each added, and then 1.01 g of tris(trimethylsilyloxy)silane was added dropwise. After being stirred at room temperature for 16 hours, the mixture was purified to give 1.36 g of compound (8).

¹H-NMR (CDCl₃, 400 MHz) δ [ppm]: 0.013-0.142 (m), 0.408 (t), 1.137-1.378 (m), 1.591 (quin), 2.275 (t), 3.639 (s)

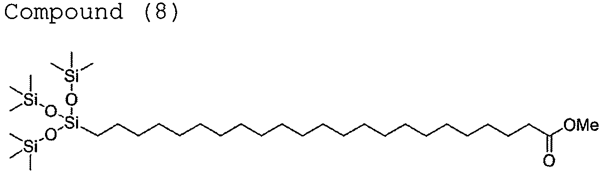

### (Synthetic Example 9)

First, 0.64 g of compound (8), 2.8 mL of allylamine, and 0.12 g of 1,5,7-triazabicyclo[4.4.0]dec-5-ene were each added, and the mixture was then stirred at 75°C for 3 hours. Thereafter, the mixture was washed with an aqueous hydrochloric acid solution, dehydrated over magnesium sulfate, and concentrated under reduced pressure to give 0.68 g of compound (9).

¹H-NMR (CDCl₃, 400 MHz) δ [ppm]: 0.011-0.217 (m), 0.407 (t), 1.153-1.378 (m), 1.612 (quin), 2.163 (t), 3.865 (tt), 5.090-5.182 (m), 5.409 (br), 5.770-5.866 (m)

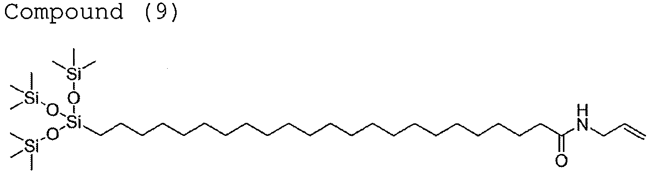

### (Synthetic Example 10)

First, 0.56 g of compound (9), 10.0 mL of toluene, 0.022 mL of aniline, and 0.46 mL of a xylene solution containing a 2% Pt complex of 1,3-divinyl-1,1,3,3-tetramethyldisiloxane were each added, then 0.2 mL of trimethoxysilane was added, and the mixture was stirred at 45°C for 2 hours. Thereafter, the mixture was purified to give 0.57 g of the compound (10).

¹H-NMR (CDCl₃, 400 MHz) δ [ppm]: 0.010-0.141 (m), 0.408 (t), 0.629 (t), 1.150-1.376 (m), 1.519-1.652 (m), 2.121 (t), 3.172 (q), 3.516-3.589 (m), 5.607 (br)

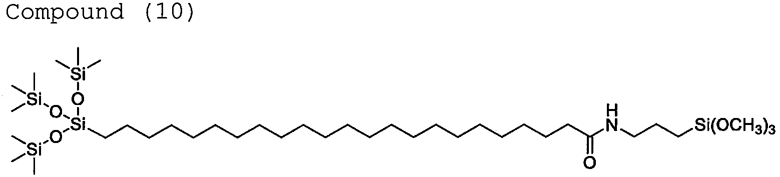

### (Synthetic Example 11)

First, 5.01 g of CH₃Si(CH₃)₂O(Si (CH₃)₂O)ₙSi(CH₃)₂(CH₂)₁₀COOH, 15.0 g of tetrahydrofuran, 0.99 g of 1-(3-dimethylaminopropyl)-3-ethylcarbodiimide hydrochloride, 0.047 g of 4-dimethylaminopyridine, and 0.38 mL of allylamine were each added, and the mixture was stirred at room temperature for 16 hours. Thereafter, the mixture was purified to give 4.80 g of compound (11) CH₃Si(CH₃)₂O(Si (CH₃)₂O)ₙSi(CH₃)₂(CH₂)₁₀CONHCH₂CH=CH₂ (n ≈ 16).

¹H-NMR (CDCl₃, 400 MHz) δ [ppm]: -0.124-0.279 (m), 0.486-0.523 (t), 1.243-1.269 (m), 1.617 (bs), 2.161-2.196 (t), 3.859 (bs), 5.083-5.175 (m), 5.781-5.848 (m)

### (Synthetic Example 12)

First, 4.34 g of compound (11) CH₃Si(CH₃)₂O(Si (CH₃)₂O)ₙSi(CH₃)₂(CH₂)₁₀CONHCH₂CH=CH₂, 13.09 g of toluene, 0.035 g of triacetoxymethylsilane, and 0.15 ml of a xylene solution containing a 2% Pt complex of 1,3-divinyl-1,1,3,3-tetramethyldisiloxane were each added, and then 0.61 mL of trichlorosilane was added, and the mixture was heated to 60°C and stirred for 4 hours. Thereafter, volatiles were distilled off under reduced pressure, then a mixed solution of 0.280 g of methanol and 6.340 g of trimethyl orthoformate was added, and the mixture was then heated to 50°C and stirred for 3 hours. Thereafter, the mixture was purified to give 4.24 g of compound (12) CH₃Si(CH₃)₂O(Si (CH₃)₂O)ₙSi(CH₃)₂(CH₂)₁₀CONHCH₂CH₂CH₂Si(OCH₃)₃ (n ≈ 16).

¹H-NMR (CDCl₃, 400 MHz) δ [ppm]: -0.010-0.157 (m), 0.495-0.666 (m), 1.251-1.274 (m), 1.578-1.654 (m), 2.123-2.312 (m), 3.218-3.267 (m), 3.420-3.605 (m)

### (Synthetic Example 13)

Compound (13) was obtained according to the method described in Example 4 of JP 2023-25695 A.

Compound (13) (CH₃CH₂CH₂CH₂Si(CH₃)₂(OSi(CH₃)₂)₅₇-(CH₂)₃-OCH₂-CONH-CH₂C{CH₂CH₂CH₂Si(OCH₃)₃}₃

### (Synthetic Example 14)

First, 2.4 g of magnesium and 260 ml of tetrahydrofuran were added, a solution in which 25.1 g of 11-bromo-1-undecene was dissolved in 62 ml of tetrahydrofuran was added dropwise, and the mixture was stirred at 35 to 38°C for 1 hour to prepare a Grignard reagent (B). Subsequently, 29.1 g of 4-bromobenzyl bromide and 10 ml of tetrahydrofuran were stirred at -52°C, the Grignard reagent (B) obtained above and 10 ml of dilithium tetrachlorocopper(II) (about 2.5% tetrahydrofuran solution) were sequentially added dropwise, and the mixture was stirred for 16 hours with the temperature being gradually raised. Thereafter, the mixture was cooled to 5°C, an aqueous ammonium chloride solution was added to quench the reaction, tetrahydrofuran was distilled off by an evaporator, and then ethyl acetate and brine were added for separation. Magnesium sulfate was added to the resulting ethyl acetate layer to perform drying, and the mixture was concentrated by an evaporator and then purified by silica gel chromatography to give 7.9 g of compound (14) 1-bromo-4-(11-dodecen-1-yl)benzene as a colorless liquid.

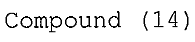

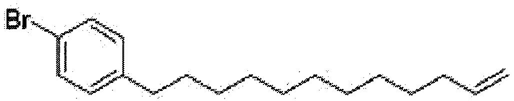

¹H-NMR (400 MHz, CHLOROFORM-D) δ7.37 (d, J=20.1Hz, 2H), 7.04 (d, 2H), 5.87-5.76 (m, 1H), 5.05-4.91 (m, 2H), 2.60-2.48 (m, 2H), 2.07-2.01 (m, 2H), 1.64-1.49 (m, 2H), 1.43-1.16 (m, 14H)

### (Synthetic Example 15)

First, 1.5 g of compound (14) and 16 mL of tetrahydrofuran were added, then 2.9 mL of a hexane solution containing 15% n-butyllithium was added dropwise at -78°C, and the mixture was stirred at -78°C for 1 hour. Thereafter, 21 mL of a tetrahydrofuran solution containing 4.6 g of hexamethylcyclotrisiloxane was added dropwise, and the mixture was stirred at room temperature for 4 hours. Thereafter, 1.8 mL of chlorotrimethylsilane was added dropwise, and the mixture was stirred at room temperature for 16 hours. Thereafter, water and toluene were added to remove the aqueous layer, then the toluene layer was washed twice with water, and the toluene layer was concentrated to give 5.1 g of compound (15).

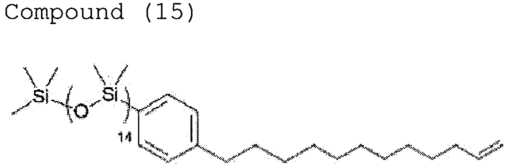

¹H-NMR (400 MHz, CHLOROFORM-D) δ7.50 (d, J=7.8Hz, 2H), 7.19 (d, J=7.8Hz, 2H), 5.87-5.79 (m, 1H), 5.04-4.94 (m, 2H), 2.62 (t, J=7.8Hz, 2H), 2.06 (q, J=7.0Hz, 2H), 1.65-1.60 (m, 2H), 1.42-1.30 (m, 14H), 0.36 (s, 6H), 0.27--0.04 (m)

### (Synthetic Example 16)

First, 2.0 g of compound (15), 6.0 mL of toluene, 17 µL of pyridine, and 117 µL of a xylene solution containing a 2% Pt complex of 1,3-divinyl-1,1,3,3-tetramethyldisiloxane were each added, then 0.59 mL of trimethoxysilane was added, and the mixture was stirred at room temperature for 3 hours. Thereafter, the mixture was concentrated under reduced pressure to give 1.9 g of compound (16).

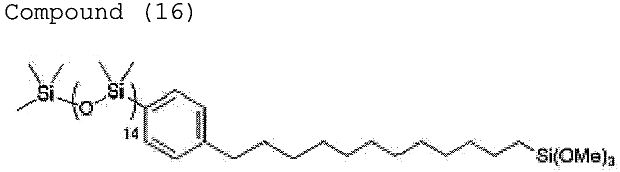

### (Synthetic Example 17)

First, 2.25 mL of methyl 10-undecenoate, 30.0 mL of toluene, and 2.3 mL of a xylene solution containing a 2% Pt complex of 1,3-divinyl-1,1,3,3-tetramethyldisiloxane were each added, and then 3.3 mL of 1,1,1,3,5,5,5-heptamethyltrisiloxane was added dropwise. After being stirred at room temperature for 6 hours, the mixture was purified to give 4.55 g of the following compound (17).

¹H-NMR (toluene, 400 MHz) δ [ppm]: 0.388-0.434 (m), 0.813-0.854 (m), 1.287-1.325 (t), 1.398-1.624 (m), 1.664-1.767 (m), 3.583 (s)

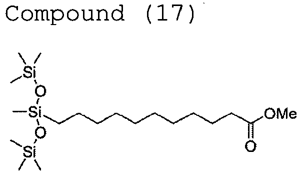

### (Synthetic Example 18)

First, 4.0 g of compound (17), 38 mL of allylamine, and 1.4 g of 1,5,7-triazabicyclo[4.4.0]deca-5-ene were each added, and then the mixture was stirred at 75°C for 6 hours. Thereafter, the mixture was washed with an aqueous hydrochloric acid solution, dehydrated over magnesium sulfate, and concentrated under reduced pressure to give 3.49 g of compound (18).

¹H-NMR (toluene, 400 MHz) δ [ppm]: 0.361-0.487 (m), 0.794-0.941 (m), 1.410-1.599 (m), 1.650-1.723 (m), 1.826-1.877 (m), 3.934-4.064 (m), 5.168-5.300 (m), 5.891-5.987 (m)

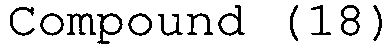

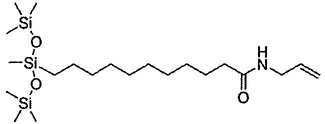

### (Synthetic Example 19)

First, 2.0 g of compound (18), 25 mL of toluene, 0.17 mL of pyridine, and 1.0 mL of a xylene solution containing a 2% Pt complex of 1,3-divinyl-1,1,3,3-tetramethyldisiloxane were each added, then 5.5 mL of trimethoxysilane was added, and the mixture was stirred at room temperature for 16 hours. Thereafter, the mixture was purified to give 2.42 g of compound (19).

¹H-NMR (toluene, 400 MHz) δ [ppm]: 0.327-0.513 (m), 0.769-0.956 (m), 1.438-1.774 (m), 1.790-1.991 (m), 3.382-3.451 (m), 3.642-3.770 (m)

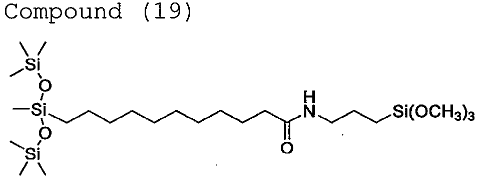

### (Synthetic Example 20)

First, 4.94 g of 18-bromo-1-octadecene: CH₂=CH(CH₂)₁₆Br, 28.5 ml of toluene, 0.01 g of pyridine, 0.66 ml of a xylene solution containing a 2% Pt complex of 1,3-divinyl-1,1,3,3-tetramethyldisiloxane, and 2.85 ml of trimethoxysilane were each added, and the mixture was stirred at room temperature for 6 hours. Thereafter, the mixture was purified to give the compound (20): (CH₃O)₃Si(CH₂)₁₈Br (4.79 g).

¹H-NMR (CDCl₃, 400 MHz) δ [ppm]: 0.620-0.660 (t), 1.247 (brs), 1.363-1.433 (m), 1.811-1.883 (m), 3.381-3.416 (t), 3.561 (s)

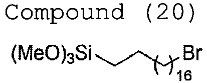

### (Synthetic Example 21)

First, 4.79 g of the compound (20) : (CH₃O)₃Si(CH₂)₁₈Br, 5.5 ml of toluene, 9.17 ml of 1,1,1,3,5,5,5-heptamethyltrisiloxane, and 0.27 g of tris (pentafluorophenyl) borane were each added, and the mixture was stirred at room temperature for 1 hour. Thereafter, the mixture was purified to give the compound (20): (((CH₃)₃SiO)₂SiCH₃O)₃Si(CH₂)₁₈Br (10.81 g).

¹H-NMR (CDCl₃, 400 MHz) δ [ppm]: 0.046 (s), 0.101 (s), 0.513-0.555 (m), 1.260 (brs), 1.360-1.442 (m), 1.819-1.891 (m), 3.388-3.423 (t)

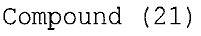

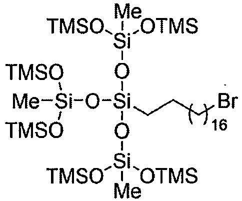

### (Synthetic Example 22)

First, 4.00 g of the compound (21): (((CH₃)₃SiO)₂SiCH₃O)₃Si(CH₂)₁₈Br, 5.6 ml of tetrahydrofuran, 0.10 g of magnesium, and 0.02 g of iodine were each added, and the mixture was stirred at 60°C for 3 hours. Subsequently, the gaseous phase was purged with carbon dioxide gas in an ice bath, and the mixture was stirred at room temperature for 16 hours. Thereafter, the mixture was purified to give the compound (22): (((CH₃)₃SiO)₂SiCH₃O)₃Si(CH₂)₁₈COOH (1.52 g).

¹H-NMR (CDCl₃, 400 MHz) δ [ppm]: 0.041 (s), 0.097 (s), 0.507-0.549 (m), 1.252 (brs), 1.351-1.392 (m), 1.594-1.668 (m), 2.325-2.363 (t)

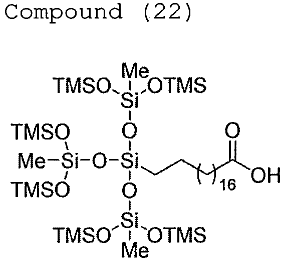

### (Synthetic Example 23)

First, 1.30 g of the compound (22): (((CH₃)₃SiO)₂SiCH₃O)₃Si(CH₂)₁₈COOH, 20.0 ml of dichloromethane, 0.03 g of 4-dimethylaminopyridine, and 0.33 g of 1-(3-dimethylaminopropyl)-3-ethylcarbodiimide hydrochloride were each added, 0.28 ml of allylamine was added in an ice bath, and then the mixture was stirred at room temperature for 3 hours. Thereafter, the mixture was purified to give 1.15 g of the compound (23): (((CH₃)₃SiO)₂SiCH₃O)₃Si(CH₂)₁₉CONHCH₂CH=CH₂.

¹H-NMR (CDCl₃, 400 MHz) δ [ppm]: 0.038 (s), 0.094 (s), 0.505-0.546 (m), 1.248 (brs), 1.347-1.390 (m), 1.597-1.671 (m), 2.166-2.204 (t), 3.867-3.903 (m), 5.109-5.203 (m), 5.482 (brs), 5.790-5.887 (m)

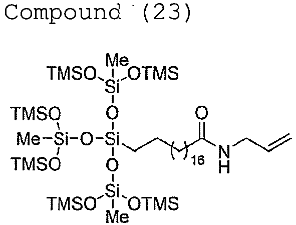

### (Synthetic Example 24)

First, 1.10 g of the compound (23): (((CH₃)₃SiO)₂SiCH₃O)₃Si(CH₂)₁₈CONHCH₂CH=CH₂, 6.5 ml of toluene, 0.01 g of pyridine, and 0.05 ml of a xylene solution containing a 2% Pt complex of 1,3-divinyl-1,1,3,3-tetramethyldisiloxane were each added, then 0.19 mL of trimethoxysilane was added, and the mixture was heated to 55°C and stirred for 3 hours. Thereafter, the mixture was purified to give 1.18 g of the compound (24): (((CH₃)₃SiO)₂SiCH₃O)₃Si(CH₂)₁₆CONH(CH₂)₃Si(OCH₃)₃.

¹H-NMR (CDCl₃, 400 MHz) δ [ppm]: 0.038 (s), 0.094 (s), 0.504-0.546 (m), 0.626-0.668 (m), 1.248 (brs), 1.349-1.388 (m), 1.581-1.673 (m), 2.123-2.161 (t), 3.187-3.269 (m), 3.570 (s), 5.641 (brs)

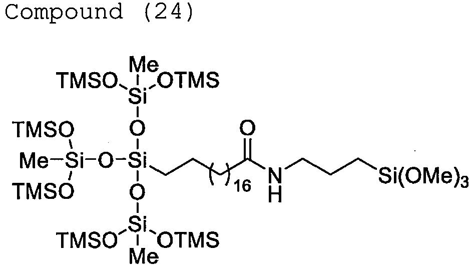

### (Synthetic Example 25)

First, 4.13 g of 18-bromo-1-octadecene CH₂=CH(CH₂)₁₆Br, 24.0 ml of toluene, 0.01 g of pyridine, 0.55 ml of a xylene solution containing a 2% Pt complex of 1,3-divinyl-1,1,3,3-tetramethyldisiloxane, and 5.10 ml of 1,1,1,3,5,5,5-heptamethyltrisiloxane were each added, and the mixture was stirred at room temperature for 4 hours. Thereafter, the mixture was purified to give 6.74 g of compound (25) ((CH₃)₃SiO)₂SiCH₃(CH₂)₁₈Br.

¹H-NMR (CDCl₃, 400 MHz) δ [ppm]: 0.003 (s), 0.085 (s), 0.428-0.466 (t), 1.258 (brs), 1.386-1.440 (m), 1.817-1.888 (m), 3.388-3.423 (t)

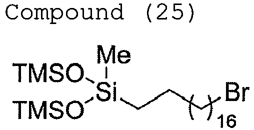

### (Synthetic Example 26)

Compound (26) ((CH₃)₃SiO)₂SiCH₃(CH₂)₁₉CONH(CH₂)₃Si(OCH₃)₃ was obtained in the same manner as in Synthetic Examples 21 to 24 except that the raw material was changed to use compound (25) ((CH₃)₃SiO)₂SiCH₃(CH₂)₁₈Br.

¹H-NMR (CDCl₃, 400 MHz) δ [ppm]: -0.014 (s), 0.078 (s), 0.420-0.458 (t), 0.624-0.665 (t), 1.247 (brs), 1.578-1.654 (m), 2.121-2.160 (t), 3.184-3.266 (m), 3.568 (s), 5.658 (brs)

### Compound (26)

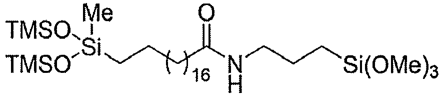

### (Synthetic Example 27)

First, 2.00 g of [(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH(CH₂CH=CH₂)₂ (n≈26), 10 ml of toluene, 0.05 ml of a xylene solution containing a 2% Pt complex of 1,3-divinyl-1,1,3,3-tetramethyldisiloxane, and 0.01 ml of aniline were added, the mixture was stirred, 0.24 ml of trimethoxysilane was added dropwise at room temperature, and then the mixture was heated to 45°C and stirred for 2 hours. Thereafter, volatile components were distilled off under reduced pressure, and the mixture was purified to give 2.0 g of compound (27): [(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH₂CH₂CH₂Si (OCH₃)₃]₂ (n≈26).

¹H-NMR (CDCl₃, 400 MHz) δ [ppm]: -0.089-0.207 (m), 0.492-0.531 (m), 0.595-0.635 (t), 1.200-1.308 (m), 1.378-1.681 (m), 2.123-2.160 (t), 3.157-3.187 (t), 3.517-3.592 (m), 3.494-3.602 (m), 5.465-5.492 (m)

### (Synthetic Example 28)

First, 4.03 g of 22-tricosenoic acid perfluorophenol and 5.0 ml of THF were each added and stirred, 1.30 ml of dimethylchlorosilane and 0.080 ml of a xylene solution containing a 2% Pt complex of 1,3-divinyl-1,1,3,3-tetramethyldisiloxane were added at room temperature, and the mixture was stirred at room temperature for 16 hours. Thereafter, volatile components were distilled off under reduced pressure, and the mixture was purified to give 4.6 g of compound (28-1), chlorodimethylsilyltricosenoic acid ester.

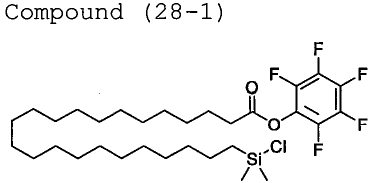

In another reactor, 1.33 g of hexamethyldisiloxane and 10 ml of THF were each added and stirred, and 2.57 ml of a hexane solution of 15% n-butyllithium was added in a warm-water bath at 30°C. After cooling in an ice bath, 17.79 g of hexamethylcyclotrisiloxane and 20 ml of THF were added in the form of a solution, and furthermore stirred for 8 hours. While being cooled in an ice bath, 2.3 g of compound (28-1) chlorodimethylsilyltricosenoic acid ester synthesized above and 10 ml of THF were added in the form of a solution, the solution was stirred for 1 hour, furthermore 1.50 g of 2-allylpent-4-ene-1-amine was added, and the mixture was stirred for 16 hours with being placed in an ice bath. Thereafter, the reaction solution was partially purified to give 2.8 g of compound (28-2) CH₃[Si (CH₃)₂O]ₙSi(CH₃)₂(CH₂)₂₂CONH-CH₂CH[CH₂CH=CH₂]₂. The average number n is 57.

¹H-NMR (CDCl₃, 400 MHz) δ [ppm]: -0.089-0.211 (m), 0.494-0.533 (t), 1.242-1.335 (m), 1.586-1.623 (m), 1.692-1.758 (m), 2.000-2.160 (m), 3.193-3.224 (t), 5.023-5.077 (m), 5.455 (br), 5.728-5.832 (m)

### (Synthetic Example 29)

First, 2.74 g of compound (28-2), 5.5 mL of toluene, 14 µL of pyridine, and 70 µL of a xylene solution containing a 2% Pt complex of 1,3-divinyl-1,1,3,3-tetramethyldisiloxane were each added, then 0.29 mL of trimethoxysilane was added, and the mixture was stirred at room temperature for 16 hours. Thereafter, the mixture was purified to give 2.63 g of compound (29) CH₃[Si(CH₃)₂O]ₙSi(CH₃)₂(CH₂)₂₂CONH-CH₂CH[CH₂CH₂CH₂Si(OCH₃)₃]₂ (n ≈ 57). The average number of repeating units of dimethylsiloxane is 57.

¹H-NMR (CDCl₃, 400 MHz) δ [ppm]: -0.104-0.196 (m), 0.498 (t), 0.604 (t), 1.226-1.339 (m), 1.404 (quin), 1.568-1.664 (m), 2.130 (t), 3.160 (t), 3.496-3.584 (m), 5.471 (br)

### (Synthetic Example 30)

First, 2.00 g of [(CH₃)₃SiO]₃SiO(Si(CH₃)20)ₙSi(CH₃)₂CH₂CH₂CH₂CH₂CH₂CH₂CH₂CH₂CH₂ CH₂CONHCH₂C(CH₂CH=CH₂)₃ (n ≈ 23), 10 ml of toluene, 0.08 ml of a xylene solution containing a 2% Pt complex of 1,3-divinyl-1,1,3,3-tetramethyldisiloxane, and 0.02 ml of aniline were added and stirred, 0.80 ml of trimethoxysilane was added dropwise at room temperature, and the mixture was heated to 45°C and stirred for 2 hours. Thereafter, volatile components were distilled off under reduced pressure, and the mixture was purified to give 1.7 g of compound (30) [(CH₃)₃SiO]₃SiO(Si(CH₃)20)ₙSi(CH₃)₂CH₂CH₂CH₂CH₂CH₂CH₂CH₂CH₂CH₂ CH₂CONHCH₂C[CH₂CH₂CH₂Si (OCH₃)₃]₃ (n ≈ 23).

¹H-NMR (CDCl₃, 400 MHz) δ [ppm]: -0.24-0.22 (m), 0.45 (t), 0.53 (t), 1.02-1.32 (m), 1.42-1.61 (m), 2.12 (t), 3.46 (d), 5.66 (d)

### (Synthetic Example 31)

First, 2.00 g of [(CH₃)₃SiO]₂CH₃SiO(Si(CH₃)20)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH(CH₂CH₂CH₂CH ₂CH₂CH₂CH₂CH₂CH₂CH=CH₂)₂ (n ≈ 17), 10 ml of toluene, 0.05 ml of a xylene solution containing a 2% Pt complex of 1,3-divinyl-1,1,3,3-tetramethyldisiloxane, and 0.01 ml of aniline were added and stirred, 0.48 ml of trimethoxysilane was added dropwise at room temperature, and then the mixture was heated to 45°C and stirred for 2 hours. Thereafter, volatile components were distilled off under reduced pressure, and the mixture was purified to give 2.2 g of compound (31) [(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH₂CH₂CH₂CH ₂CH₂CH₂CH₂CH₂CH₂CH₂CH₂Si(OCH₃)₃]₂ (n ≈ 17).

¹H-NMR (CDCl₃, 400 MHz) δ [ppm] : -0.091-0.204 (m), 0.491-0.529 (m), 0.612-0.652 (t), 1.199-1.274 (m), 1.354-1.465 (m), 1.505-1.624 (m), 2.125-2.163 (t), 3.152-3.182 (t), 3.517-3.593 (m), 5.292-5.320 (m)

### <Preparation of surface-treating agent>

The compound and a solvent were combined as shown in Table 1 below to prepare a surface-treating agent. The solid content concentration relative to the solvent was 20 wt%. Components A and B were stirred at room temperature for 30 minutes so as to be sufficiently mixed, and were allowed to stand still for 12 hours.

**[Table 1]**

| Surface-treating agent No. | Compound (A) | | Compound (B) | | Solvent |
|---|---|---|---|---|---|
| | Compound No. | wt% | Compound No. | wt% | |
| Surface-treating agent 1 | Compound 7 | 45 | Compound 10 | 65 | heptane |
| Surface-treating agent 2 | Compound 7 | 45 | Compound 12 | 65 | heptane |
| Surface-treating agent 3 | Compound 7 | 45 | Compound 13 | 65 | heptane |
| Surface-treating agent 4 | Compound 7 | 45 | Compound 16 | 65 | heptane |
| Surface-treating agent 5 | Compound 7 | 45 | Compound 19 | 65 | heptane |
| Surface-treating agent 6 | Compound 7 | 45 | Compound 24 | 65 | heptane |
| Surface-treating agent 7 | Compound 7 | 45 | Compound 26 | 65 | heptane |
| Surface-treating agent 8 | Compound 2 | 45 | Compound 12 | 65 | heptane |
| Surface-treating agent 9 | Compound 4 | 45 | Compound 10 | 65 | ethanol |
| Surface-treating agent 10 | Compound 4 | 45 | Compound 12 | 65 | ethanol |
| Surface-treating agent 11 | Compound 4 | 45 | Compound 13 | 65 | ethanol |
| Surface-treating agent 12 | Compound 4 | 45 | Compound 16 | 65 | ethanol |
| Surface-treating agent 13 | Compound 4 | 45 | Compound 19 | 65 | ethanol |
| Surface-treating agent 14 | Compound 27 | 45 | Compound 29 | 65 | heptane |
| Surface-treating agent 15 | Compound 30 | 45 | Compound 31 | 65 | heptane |

### <Production of Na-containing intermediate layer forming material>

First, 2.2 g of sodium hydroxide (manufactured by FUJIFILM Wako Pure Chemical Corporation) was dissolved in 24 g of distilled water to give a 8.4% by mass aqueous sodium hydroxide solution. Then, 24 g of this 8.4% by mass aqueous sodium hydroxide solution and 20 g of MS gel (M.S. GELD-100-60A (manufactured by AGC Si-Tech Co., Ltd.)) were mixed so that the aqueous sodium hydroxide solution was absorbed into the MS gel. The MS gel that had absorbed the aqueous sodium hydroxide solution was dried at 25°C for 8 hours, then molded with a tableting machine (4 MPa for 1 minute), and fired at 1,000°C for 1 hour to give a formed article 1 (pellets).

### <Formation of surface-treating layer>

### (Na-containing SiO₂ intermediate layer)

The surface-treating agents prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0 × 10⁻³ Pa or lower. Thereafter, vapor deposition by the electron beam deposition scheme was performed using the formed article 1 to form a Na-containing silicon dioxide film having a thickness of 5 nm, followed by heating the boat by the resistance heating scheme to form a surface-treating layer. Thereafter, heat treatment was performed in an oven at 150°C for 2 hours to give a surface-treating layer.

### (SiO₂ intermediate layer)

The surface-treating agents prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0 × 10⁻³ Pa or lower. Thereafter, a silicon dioxide film having a thickness of 5 nm was formed, followed by heating the boat by the resistance heating scheme to form a surface-treating layer. Thereafter, heat treatment was performed in an oven at 150°C for 2 hours to give a surface-treating layer.

### <Evaluation>

### [Measurement of oil droplet contact angle after film deposition]

First, the surface-treating layer-attached substrate surface made by the above method was sufficiently wiped with Kimwipes S-200 (product name, NIPPON PAPER CRECIA CO., LTD.) impregnated with ethanol, and then the oil droplet contact angle was measured.

### (Method for measuring contact angle)

For contact angle measurement, a fully automatic contact angle meter DropMaster 700 (manufactured by Kyowa Interface Science Co., Ltd.) was used under an environment of 25°C. Specifically, the substrate having the measurement target, i.e., the surface-treating layer, was placed horizontally, 2 µL of oleic acid was dripped from a microsyringe onto the surface, and a static image was taken with a video microscope one second after the dropwise addition to thereby measure the static contact angle. The static contact angle was measured at five different points on the surface-treating layer of the substrate, and the average value calculated therefrom was used.

### (Determination criteria of oleic acid contact angle)

Good (circle): 53° or more
Poor (cross mark): 53° or less

### [Evaluation of fingerprint removability by wiping]

The surface-treating layer formed above was evaluated with respect to fingerprint removability by wiping, according to the following procedure.

### (Adhering of artificial fingerprint stamp)

After the surface-treating layer was formed, excessive matter on the surface was wiped off. An artificial fingerprint liquid was stamped on a surface of the surface-treating layer.

The composition of the artificial fingerprint liquid, and stamping conditions are shown below.

### (Method for preparing artificial fingerprint liquid)

The artificial fingerprint liquid was prepared as follows with reference to JP 2006-120317 A.

First, 1.6 g of Kanto Loam (Powder 1 for JIS test (Class 11), The Association of Powder Process Industry and Engineering, JAPAN) and 32 g of methoxypropanol (manufactured by Tokyo Chemical Industry Co., Ltd.) were mixed. Furthermore, 4 g of triolein (manufactured by Tokyo Chemical Industry Co., Ltd.) was added, and the mixture was stirred.

### (Method for making artificial fingerprint sheet)

A glass plate (Gorilla Glass, manufactured by Corning Incorporated, thickness 0.7 mm) was cleaned with UV for 10 minutes. The glass plate was spin-coated (5000 rpm for 10 seconds) with 1.1 mL of the artificial fingerprint liquid adjusted above. Thereafter, the glass was heated in a drying furnace at 60°C for 3 minutes.

### (Stamping conditions)

Stamp: silicone rubber (stamping surface Φ16 mm)
The stamp was pushed to the artificial fingerprint sheet produced above at a load of 5 kgw for 10 seconds to allow an artificial fingerprint to be transferred. The stamp to which the artificial fingerprint was transferred was pushed to a sample for evaluation of removability by wiping at a load of 5 kgw for 10 seconds to allow the artificial fingerprint liquid to adhere.

### (Method for wiping off artificial fingerprint)

The surface-treating layer on which the artificial fingerprint was stamped was subjected to a wiping-off operation ten times under the following conditions with a Rubbing Tester (manufactured by Imoto machinery Co., LTD.).
· Wiping method:
   Friction block: Bemcot M-3II (product name, manufactured by Asahi Kasei Corp.)
   Traveling distance (one way): 60 mm
   Traveling speed: 8,400 mm/min
   Load: 1000 g/3 cm2

After the above wiping operation was performed, the degree of adhering of the artificial fingerprint to the stamped portion was visually confirmed and scored.

The determination criteria of evaluation of fingerprint removability by wiping are as follows.

### (Evaluation of fingerprint removability by wiping, determination criteria)

5 Not confirmed at all
4 Almost not confirmed at all
3 Only slightly confirmed
2 Confirmed
1 Clearly confirmed

Table 2 shows the measurement results of the oleic acid contact angle, and the results of evaluation of fingerprint removability by wiping.

**[Table 2]**

| Example/ Comparative Example No. | Surface-treating agent No. | Intermediate layer | Fingerprint removability by wiping | Oleic acid contact angle |
|---|---|---|---|---|
| Example 1 | Surface-treating agent 1 | Na-containing silicon dioxide film | 4 | ○ |
| Example 2 | Surface-treating agent 2 | Na-containing silicon dioxide film | 5 | ○ |
| Example 3 | Surface-treating agent 3 | Na-containing silicon dioxide film | 5 | ○ |
| Example 4 | Surface-treating agent 4 | Na-containing silicon dioxide film | 5 | ○ |
| Example 5 | Surface-treating agent 5 | Na-containing silicon dioxide film | 4 | ○ |
| Example 6 | Surface-treating agent 6 | Na-containing silicon dioxide film | 5 | ○ |
| Example 7 | Surface-treating agent 7 | Na-containing silicon dioxide film | 5 | ○ |
| Comparative Example 1 | Surface-treating agent 8 | Na-containing silicon dioxide film | 3 | × |
| Comparative Example 2 | Surface-treating agent 9 | Na-containing silicon dioxide film | 2 | × |
| Comparative Example 3 | Surface-treating agent 10 | Na-containing silicon dioxide film | 2 | × |
| Comparative Example 4 | Surface-treating agent 11 | Na-containing silicon dioxide film | 3 | × |
| Comparative Example 5 | Surface-treating agent 12 | Na-containing silicon dioxide film | 2 | × |
| Comparative Example 6 | Surface-treating agent 13 | Na-containing silicon dioxide film | 1 | × |
| Example 8 | Surface-treating agent 1 | Silicon dioxide film | 4 | ○ |
| Example 9 | Surface-treating agent 2 | Silicon dioxide film | 5 | ○ |
| Comparative Example 7 | Surface-treating agent 9 | Silicon dioxide film | 2 | × |
| Comparative Example 8 | Surface-treating agent 10 | Silicon dioxide film | 2 | × |
| Example 10 | Surface-treating agent 14 | Na-containing silicon dioxide film | 5 | ○ |
| Example 11 | Surface-treating agent 15 | Na-containing silicon dioxide film | 5 | ○ |

### Industrial Applicability

The surface-treating agent of the present disclosure can be suitably utilized in a variety of applications.

## Claims

1. A composition comprising silane compounds represented by formula (1) and formula (2):
(Compound A)
R^{A}_{α}-X^{1A}-R^{Si}_{β} (1)
(Compound B)
R^{B}_{α}-X^{1B}-R^{Si}_{β} (2)
wherein
R^{A} is a group containing a group represented by the following group A or group B:
R⁵¹ₙₐR⁵²₃₋ₙₐSi-(O)_{Z} - (A) 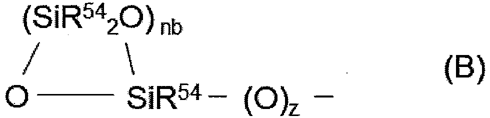
wherein
R⁵¹ is each independently a group represented by R⁵³-(SiR⁵³₂-R⁶⁶)ₘₐ-,
R⁶⁶ is each independently a single bond, an oxygen atom, or a C₁₋₆ alkylene group,
R⁵³ is each independently a hydrocarbon group or R^{51'},
R^{51'} has the same meaning as R⁵¹,
ma is each independently an integer of 1 to 5, provided that the number of R^{51'} in R⁵¹ is 20 or less,
R⁵² is each independently a hydrocarbon group,
na is an integer of 1 to 3,
R⁵⁴ is each independently a hydrocarbon group,
nb is an integer of 1 to 5, and
z is 0 or 1;
R^{B} is a monovalent group containing one or more Si atoms to which neither a hydroxyl group nor a hydrolyzable group is directly bonded, or a hydrocarbon group;
provided that R^{A} and R^{B} are different groups;
R^{Si} is each independently a monovalent group containing a Si atom to which a hydroxyl group or a hydrolyzable group is bonded;
X^{1A} is each independently a di- to decavalent group containing an alkyl group having 7 or more carbon atoms;
X^{1B} is each independently a di- to decavalent group;
α is each independently an integer of 1 to 9; and
β is each independently an integer of 1 to 9.

2. The composition according to claim 1, wherein R^{A} is a group represented by the followingformula:
R^{1a}-(R^{S})_{γ1}-(SiR^{2a}₂)_{γ2}-(R^{Ar})_{γ3}-
wherein
R^{1a} is each independently the group A or the group B,
R^{s} is each independently a group represented by the following formula: 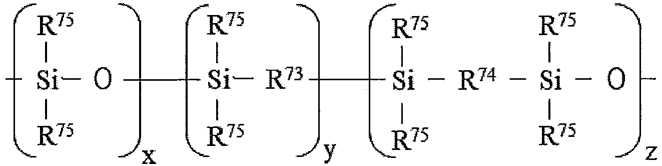 (wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted arylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula),
R^{2a} is each independently a hydrocarbon group,
R^{Ar} is each independently a divalent aromatic group,
γ1 is 0 or 1,
γ2 is 0 or 1, and
γ3 is 0 or 1.

3. The composition according to claim 1 or 2, wherein R^{A} is a group containing a group A.

4. The composition according to claims 1 to 3, wherein R^{A} is a group containing at least one branched structure described below.

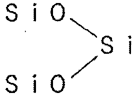

5. The composition according to any one of claims 1 to 4, wherein R^{B} is a group represented by the following formula:
R^{1b}-(R^{S})_{γ1}-(SiR^{2a}₂)_{γ2}-(R^{Ar})_{γ3}-
wherein
R^{1b} is each independently a hydrocarbon group, the group A or the group B,
R^{S} is each independently a group represented by the following formula: 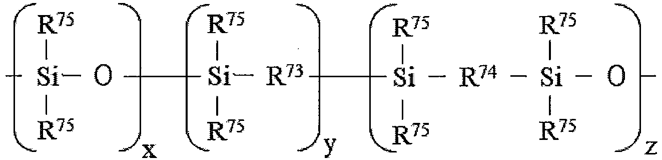 (wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted arylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula),
R^{2a} is each independently a hydrocarbon group,
R^{Ar} is each independently a divalent aromatic group,
γ1 is 0 or 1,
γ2 is 0 or 1, and
γ3 is 0 or 1.

6. The composition according to claim 5, wherein R^{1b} in R^{B} is a hydrocarbon group and γ1 is 1.

7. The composition according to claim 5, wherein R^{1b} in R^{B} is a group A, γ1 is 0, γ2 is 0, and γ3 is 0.

8. The composition according to any one of claims 1 to 7, wherein X^{1A} and X^{1B} are each independently a group represented by the following formula:
-[(X²¹)ₓ₁-(X²²)ₓ₂]-:
wherein
X²¹ is each independently a single bond or a C₁₋₆₀ alkylene group,
X²² is each independently a single bond, -CO-, -COO-, -OCO-, -NR⁴¹-, -CONR⁴¹-, -NR⁴¹CO-, -OCONR⁴¹-, -NR⁴¹COO-, - NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)ₓ₃-CO-,
R⁴¹ is a hydrogen atom or a C₁₋₆ alkyl group,
x3 is an integer of 1 to 30,
x1 is an integer of 0 to 6,
x2 is an integer of 0 to 6, and
the occurrence order of the respective repeating units enclosed in parentheses provided with x1 or x2 is not limited in the formula.

9. The composition according to any one of claims 1 to 8, wherein X^{1A} and X^{1B} are each independently a group represented by the following formula:
-X²¹-[(X²²)_{y1}-(X²³)_{y2}]-X²⁴-:
wherein
X²¹ is a C₁₋₆₀ alkylene group,
X²² is each independently -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, or -O-(CH₂)ₓ₃-CO-,
R⁴¹ is a hydrogen atom or a C₁₋₆ alkyl group,
x3 is an integer of 1 to 30,
X²³ is each independently a C₁₋₆ alkylene group,
X²⁴ is a single bond or a C₁₋₆₀ alkylene group,
y1 is an integer of 1 to 3,
y2 is an integer of 0 to 3, and
the occurrence order of X²² and X²³ in [(X²²)_{y1}-(X²³)_{y2}] is not limited.

10. The composition according to any one of claim 8 or 9, wherein at least one X²¹ in the compound A is a C₇₋₆₀ alkylene group.

11. The composition according to any one of claims 8 to 10, wherein X²² is -CO-, -COO-, -OCO-, -NR⁴¹-, -CONR⁴¹-, - NR⁴¹CO-, -OCONR⁴¹-, -NR⁴¹COO-, -NR⁴¹-CO-NR⁴¹-, -O-, or -S-.

12. The composition according to any one of claims 8 to 11, wherein X²² is -O- or -CONR⁴¹-.

13. The composition according to any one of claims 8 to 12, wherein X²² is -CONR⁴¹-.

14. The composition according to any one of claims 1 to 7, wherein X^{1A} and X^{1B} are each independently a group represented by the following formula:
-(X¹²¹)ₐ₀-X¹¹⁰-[(X¹¹¹)ₐ₁-(X¹¹²)ₐ₂]-
wherein
X¹²¹ is R⁶¹_{b1}R⁶²_{3-b1}C-, R⁶³_{b2}R⁶⁴_{3-b2}Si-, or R⁶⁵₂N-,
R⁶¹ is each independently a single bond or a divalent organic group,
R⁶² is each independently a hydrogen atom or a monovalent organic group,
R⁶³ is each independently a single bond or a divalent organic group,
R⁶⁴ is each independently a hydrogen atom or a monovalent organic group,
R⁶⁵ is each independently a single bond or a divalent organic group,
b1 is 2 or 3,
b2 is 2 or 3,
X¹¹⁰ is a single bond or an alkylene group having 3 or more carbon atoms,
X¹¹¹ is a single bond or a divalent organic group,
X¹¹² is -CO-, -COO-, -OCO-, -NR⁴¹-, -CONR⁴¹-, -NR⁴¹CO-, -OCONR⁴¹-, -NR⁴¹COO-, -NR⁴¹-CO-NR⁴¹-, -O-, -S-, -O-(CH₂)ₓ₃-CONR⁴¹-, -O-(CH₂)ₓ₃-NR⁴¹CO-, -O-(CH₂)ₓ₃-CO-, -CON= or R^{S},
R⁴¹ is a hydrogen atom or a C₁₋₆ alkyl group,
x3 is an integer of 1 to 30,
R^{S} is a group represented by the following formula: 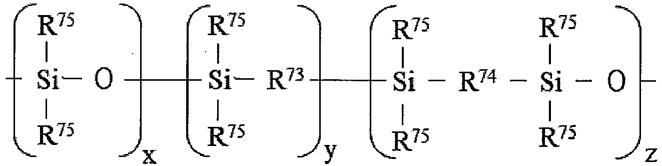 (wherein
R⁷³ is each independently a single bond, a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted arylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula),
a0 is 0 or 1,
a1 is an integer of 1 to 5,
a2 is an integer of 0 to 5, and
the occurrence order of the respective repeating units enclosed in parentheses provided with a1 or a2 is not limited in the formula; or
a group represented by the following formula: 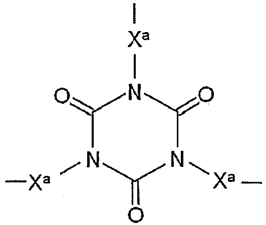 wherein X^{a} is each independently a single bond or a divalent linking group.

15. The composition according to any one of claims 1 to 14, wherein α is 1 and β is 1.

16. The composition according to any one of claims 1 to 15, wherein R^{Si} is a group represented by the following formula (S1), (S2), (S3), (S4) or (S5): 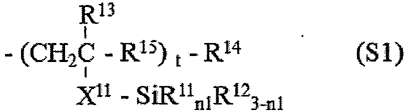
- SiR¹¹ₙ₁R¹²₃₋ₙ₁ (S2)
- SiR^{a1}ₖ₁R^{b1}₁₁R^{c1}ₘ₁ (83)
- CR^{d1}ₖ₂R^{e1}ₗ₂R^{f1}ₘ₂ (S4)
**-** NR^{g1}R^{h1} (S5)
wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom or -X¹¹-SiR¹¹ₙ₁R¹²₃₋ₙ₁,
R¹⁵ is each independently a single bond, an oxygen atom, an alkylene group having 1 to 6 carbon atoms or an alkyleneoxy group having 1 to 6 carbon atoms,
R^{a1} is each independently -Z¹-SiR²¹ₚ₁R²²_{q1}R²³ᵣ₁;
Z¹ is each independently a divalent organic group,
R²¹ is each independently -Z^{1'}-SiR^{21'}_{p1'}R^{22'}_{q1'}R^{23'}_{r1'};
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"};
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
11 is each independently an integer of 0 to 3,
m1 iseach independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom or a divalent organic group,
R^{32'} is each independently -Z³-SiR³⁴ₙ₂R³⁵₃₋ₙ₂,
R^{33'} is each independently a hydrogen atom, a hydroxyl group or a monovalent organic group,
q2' is each independently an integer of 0 to 3,
r2' is each independently an integer of 0 to 3,
Z³ is each independently a single bond, an oxygen atom or a divalent organic group;
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group or a monovalent organic group,
k2 is each independently an integer of 0 to 3,
12 is each independently an integer of 0 to 3,
m2 is each independently an integer of 0 to 3.
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, - Z⁴-SiR^{a1}ₖ₁R^{b1}₁₁R^{c1}ₘ₁, or -Z⁴-CR^{d1}ₖ₂R^{e1}₁₂R^{f1}ₘ₂, and
Z⁴ is each independently a single bond, an oxygen atom or a divalent organic group,
provided that, in the formula (S5), at least two Si atoms to which a hydroxyl group or a hydrolyzable group is bonded are present.

17. The composition according to any one of claims 1 to 16, wherein the compound A is a silane compound represented by formula (1), wherein
R^{A} is 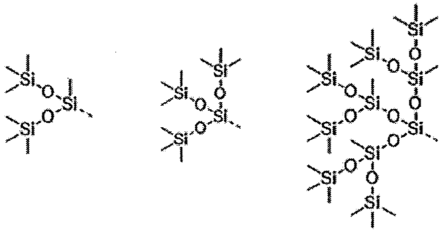
R^{Si} is -Si(OR^{h})₃,
R^{h} is an unsubstituted C₁₋₄ alkyl group,
X^{1A} is -X²¹-X²²-X²⁴-,
X²¹ is a C₁₈₋₂₄ alkylene group,
X²² is -CONH-,
X²⁴ is a C₃₋₆ alkylene group, and
α and β are each 1; and
the compound B is a silane compound represented by formula (2),
wherein
R^{B} is R^{1b}-R^{S}-SiR^{2a}₂-, R^{1b}-R^{S}-SiR^{2a}₂-R^{Ar}-, 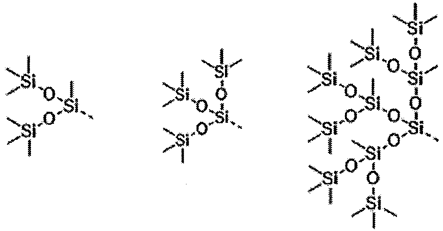
R^{1b} is a C₁₋₄ alkyl group,
R^{S} is -(Si(CH₃)₂-O)ₓ-,
x is an integer of 10 to 60,
R^{2a} is a methyl group,
R^{Ar}- is p-phenylene,
R^{Si} is -Si(OR^{h})₃,
R^{h} is an unsubstituted C₁₋₄ alkyl group,
X^{1B} is a C₁₀₋₁₈ alkylene group, -X²¹-X²²-X²⁴-, or - X^{21'}-O-CH₂-CONH-X^{24'}-,
X²¹ is a C₁₈₋₂₄ alkylene group,
X²² is -CONH-,
X²⁴ is a C₃₋₆ alkylene group,
X^{21'} is a C₃₋₆ alkylene group,
X^{24'} is a C₃₋₆ alkylene group, and
α and β are each 1.

18. The article according to any one of claims 1 to 17, wherein the compound A is selected from the following compounds:
·
[(CH₃)₃SiO)]₂(CH₃)Si-O-[Si (CH₃)₂O]ₙ₁Si(CH₃)2- (CH₂)_{H1}-C(=O)NHCH₂CH₂CH₂Si(OCH₃)₃
·
[(CH₃)₃SiO)]₃Si-O-[Si (CH₃)₂O]ₙ₁Si(CH₃)₂-(CH₂)_{H1}-C (=O)NHCH₂CH₂CH₂Si(OCH₃)₃
·
[(CH₃)₃SiO)]₂(CH3) Si-O- [Si (CH₃)₂O]ₙ₁Si(CH₃)2- (CH₂)_{H1}-Si (OCH₃)₃
·
[(CH₃)₃SiO)]₃Si-O-[Si (CH₃)₂O]ₙ₁Si(CH₃)₂-(CH₂)_{H1}-Si(OCH₃)3
·
[(CH₃)₃SiO)]₂(CH₃)Si-O- [Si (CH₃)₂O]ₙ₁Si(CH₃)2- (CH₂)_{H1}-C (=O) NHCH₂CH[CH₂CH₂CH₂Si (OCH₃)₃]₂
·
[(CH₃)₃SiO)]₃Si-O-[Si (CH₃)₂O]ₙ₁Si(CH₃)2- (CH₂)_{H1}-C(=O)NHCH₂CH[CH₂CH₂CH₂Si (OCH₃)₃]₂
·
[(CH₃)₃SiO)]₂(CH₃)Si-O-[Si (CH₃)₂O]ₙ₁Si(CH₃)2- (CH₂)_{H1}-CH[CH₂CH₂CH₂Si(OCH₃)₃]₂
·
[(CH₃)₃SiO)]₃Si-O-[Si (CH₃)₂O]ₙ₁Si(CH₃)2- (CH₂)_{H1}-CH[CH₂CH₂CH₂Si (OCH₃)₃]₂
·
[(CH₃)₃SiO)]₂(CH₃)Si-O-[Si (CH₃)₂O]ₙ₁Si(CH₃)2- (CH₂)_{H1}-C (=O)NHCH₂CH[CH₂CH₂CH₂CH₂CH₂CH₂CH₂CH₂CH₂CH₂CH₂Si(OCH₃)₃]₂
·
[(CH₃)₃SiO)]₃Si-O-[Si (CH₃)₂O]ₙ₁Si(CH₃)2- (CH₂)_{H1}-C (=0) NHCH₂CH[CH₂CH₂CH₂CH₂CH₂CH₂CH₂CH₂CH₂CH₂CH₂Si(OCH₃)₃]₂
·
[(CH₃)₃SiO)]₂(CH₃)Si-O-[Si(CH₃)₂O]ₙ₁Si(CH₃)₂-(CH₂)_{H1}-CH [CH₂CH₂CH₂CH₂CH₂CH₂CH₂CH₂CH₂CH₂CH₂Si(OCH₃)₃]₂
·
[(CH₃)₃SiO)]3Si-O- [Si (CH₃)₂O]ₙ₁Si(CH₃)2- (CH₂)_{H1}- CH[CH₂CH₂CH₂CH₂CH₂CH₂CH₂CH₂CH₂CH₂CH₂Si(OCH₃)₃]₂
·
[(CH₃)₃SiO)]₂(CH₃)Si-O- [Si (CH₃)₂O]ₙ₁Si(CH₃)2- (CH₂)_{H1}-C (=O)N [CH₂CH₂CH₂Si (OCH₃)₃]₂
·
[(CH₃)₃SiO)]3Si-O- [Si (CH₃)₂O]ₙ₁Si(CH₃)2- (CH₂)_{H1}-C (=O)N [CH₂CH₂CH₂Si (OCH₃)₃]₂
·
[(CH₃)₃SiO)]2 (CH₃)Si-O- [Si (CH₃)₂O]ₙ₁Si(CH₃)2- (CH₂)_{H1}-N [CH₂CH₂CH₂Si (OCH₃)₃]₂
·
[(CH₃)₃SiO)]3Si-O- [Si (CH₃)₂O]ₙ₁Si(CH₃)₂-(CH₂)_{H1}-N [CH₂CH₂CH₂Si (OCH₃)₃]₂
·
[(CH₃)₃SiO)]2 (CH₃)Si-O- [Si (CH₃)₂O]ₙ₁Si(CH₃)2- (CH₂)_{H1}-C (=O)NHCH₂C[CH₂CH₂CH₂Si (OCH₃)₃]₃
·
[(CH₃)₃SiO)]3Si-O- [Si (CH₃)₂O]ₙ₁Si(CH₃)₂-(CH₂)_{H1}-C (=O)NHCH₂C[CH₂CH₂CH₂Si (OCH₃)₃]₃
·
[(CH₃)₃SiO)]₂(CH₃)Si-O- [Si (CH₃)₂O]ₙ₁Si(CH₃)₂-(CH₂)_{H1}-C [CH₂CH₂CH₂Si (OCH₃)₃]₃
·
[(CH₃)₃SiO)]3Si-O- [Si (CH₃)₂O]ₙ₁Si(CH₃)2- (CH₂)_{H1}-C [CH₂CH₂CH₂Si (OCH₃)₃]₃
·
[(CH₃)₃SiO)]₂(CH₃)Si- (CH₂)_{H1}-C(=O)NHCH₂CH₂CH₂Si(OCH₃)₃
·
[(CH₃)₃SiO)]₃Si-(CH₂)_{H1}-C(=O)NHCH₂CH₂CH₂Si(OCH₃)₃
·
[(CH₃)₃SiO)]₂(CH₃)Si- (CH₂)_{H1}-Si(OCH₃)₃
·
[(CH₃)₃SiO)]₃Si-(CH₂)_{H1}-Si(OCH₃)₃
·
[(CH₃)₃SiO)]₂(CH₃)Si- (CH₂)_{H1}-C (=O)NHCH₂CH[CH₂CH₂CH₂Si (OCH₃)₃]₂
·
[(CH₃)₃SiO)]₃Si-(CH₂)_{H1}-C(=O)NHCH₂CH[CH₂CH₂CH₂Si (OCH₃)₃]₂
·
[(CH₃)₃SiO)]₂(CH₃)Si- (CH₂)_{H1}-CH[CH₂CH₂CH₂Si (OCH₃)₃]₂
·
[(CH₃)₃SiO)]₃Si-(CH₂)_{H1}-CH[CH₂CH₂CH₂Si (OCH₃)₃]₂
·
[(CH₃)₃SiO)]₂(CH₃)Si- (CH₂)_{H1}- C(=O)NHCH₂CH[CH₂CH₂CH₂CH₂CH₂CH₂CH₂CH₂CH₂CH₂CH₂Si(OCH₃)₃]₂
·
[(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
·
[(CH₃)₃SiO)]₂(CH₃)Si-(CH₂)_{H1}-CH[CH₂CH₂CH₂CH₂CH₂CH₂CH₂CH₂CH₂CH₂CH₂Si(OCH₃)₃]₂
·
[(CH₃)₃SiO)]₃Si-(CH₂)_{H1}-CH[CH₂CH₂CH₂CH₂CH₂CH₂CH₂CH₂CH₂CH₂CH₂Si(OCH₃)₃]₂
·
[(CH₃)₃SiO)]₂(CH₃)Si-(CH₂)_{H1}-C(=O)N[CH₂CH₂CH₂Si(OCH₃)₃]₂
·
[(CH₃)₃SiO)]₃Si-(CH₂)_{H1}-C(=O)N[CH₂CH₂CH₂Si(OCH₃)₃]₂
·
[(CH₃)₃SiO)]₂(CH₃)Si-(CH₂)_{H1}-N[CH₂CH₂CH₂Si(OCH₃)₃]₂
· [(CH₃)₃SiO)]₃Si-(CH₂)_{H1}-N[CH₂CH₂CH₂Si(OCH₃)₃]₂
·
[(CH₃)₃SiO)]₂(CH₃)Si-(CH₂)_{H1}-C(=O)NHCH₂C[CH₂CH₂CH₂Si(OCH₃)₃]₃
·
[(CH₃)₃SiO)]₃Si-(CH₂)_{H1}-C(=O)NHCH₂C[CH₂CH₂CH₂Si(OCH₃)₃]₃
·
[(CH₃)₃SiO)]₂(CH₃)Si-(CH₂)_{H1}-C[CH₂CH₂CH₂Si(OCH₃)₃]₃
·
[(CH₃)₃SiO)]₃Si-(CH₂)_{H1}-C[CH₂CH₂CH₂Si(OCH₃)₃]₃ 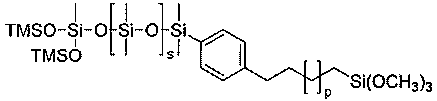 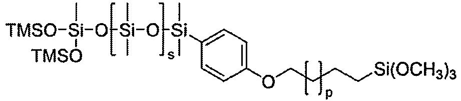 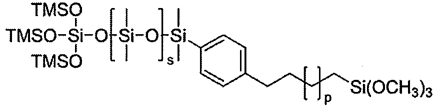 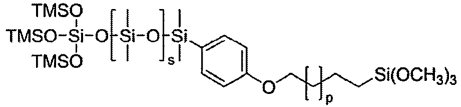 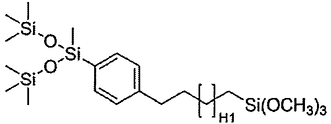 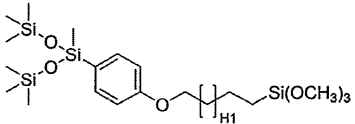 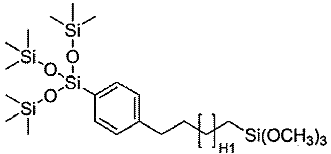 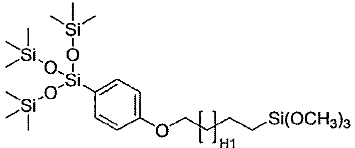 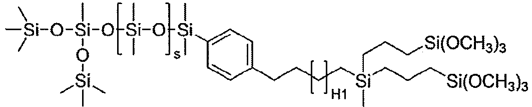 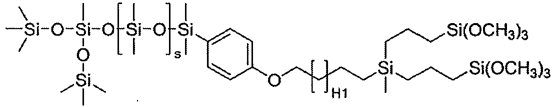 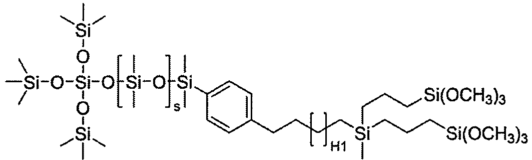 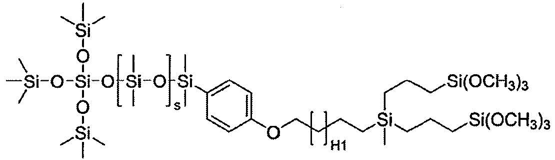 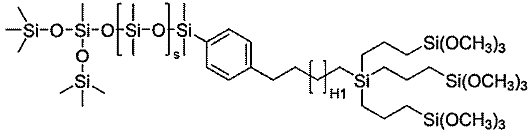 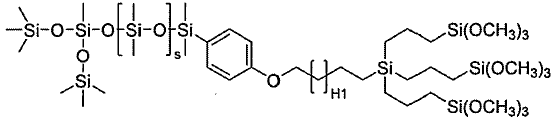 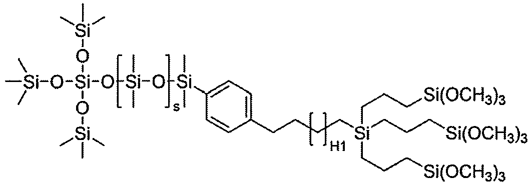 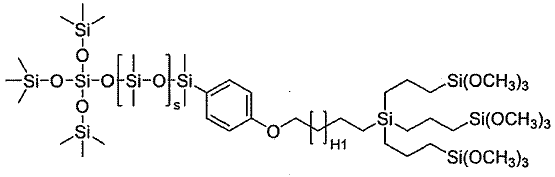
wherein
TMSO is a trimethylsilyloxy group,
n1 and s are each independently an integer of 0 to 150,
p is each independently an integer of 4 to 50, and
H1 is each independently an integer of 4 to 50; and
the compound B is selected from the following compounds:
·
CH₃-[Si(CH₃)₂O]ₙ₁Si(CH₃)₂-(CH₂)_{H1}-C(=O)NHCH₂CH₂CH₂Si(OCH₃)₃
·
CH₃CH₂CH₂CH₂-[Si(CH₃)₂O]ₙ₁Si(CH₃)₂-(CH₂)_{H1}-C(=O)NHCH₂CH₂CH₂Si(OCH₃)₃
·
[(CH₃)₃SiO)]₂(CH₃)Si-O-[Si(CH₃)₂O]ₙ₁Si(CH₃)₂-(CH₂)_{H1}-C(=O)NHCH₂CH₂CH₂Si(OCH₃)₃
·
[(CH₃)₃SiO)]₃Si-O-[Si(CH₃)₂O]ₙ₁Si(CH₃)₂-(CH₂)_{H1}-C(=O)NHCH₂CH₂CH₂Si(OCH₃)₃
·
CH₃-[Si(CH₃)₂O]ₙ₁Si(CH₃)₂-(CH₂)n₁-O-(CH₂)_{H2}-C(=O)NHCH₂CH₂CH₂Si(OCH₃)₃
·
CH₃CH₂CH₂CH₂-[Si(CH₃)₂O]ₙ₁Si(CH₃)₂-(CH₂)_{H1}-O-(CH₂)_{H2}-C(=O)NHCH₂CH₂CH₂Si(OCH₃)₃
·
CH₃-[Si(CH₃)₂O]ₙ₁Si(CH₃)₂-(CH₂)_{H1}-Si(OCH₃)₃
·
CH₃CH₂CH₂CH₂-[Si(CH₃)₂O]ₙ₁Si(CH₃)₂-(CH₂)_{H1}-Si(OCH₃)₃
·
[(CH₃)₃SiO)]₂(CH₃)Si-O-[Si(CH₃)₂O]ₙ₁Si(CH₃)₂-(CH₂)_{H1}-Si(OCH₃)₃
·
[(CH₃)₃SiO)]₃Si-O-[Si(CH₃)₂O]ₙ₁Si(CH₃)₂-(CH₂)_{H1}-Si(OCH₃)₃
·
CH₃-[Si(CH₃)₂O]ₙ₁Si(CH₃)₂-(CH₂)_{H1}-C(=O)NHCH₂CH[CH₂CH₂CH₂Si(OCH₃)₃]₂
·
CH₃CH₂CH₂CH₂-[Si(CH₃)₂O]ₙ₁Si(CH₃)₂-(CH₂)_{H1}-C(=O)NHCH₂CH[CH₂CH₂CH₂Si(OCH₃)₃]₂
·
[(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂Si(OCH₃)₃]₂
·
[(CH₃)₃SiO)]₃Si-O-[Si(CH₃)₂O]ₙ₁Si(CH₃)₂-(CH₂)_{H1}-C(=O)NHCH₂CH[CH₂CH₂CH₂Si(OCH₃)₃]₂
·
CH₃-[Si(CH₃)₂O]ₙ₁Si(CH₃)₂-(CH₂)_{H1}-O-(CH₂)_{H2}-C(=O)NHCH₂CH[CH₂CH₂CH₂Si(OCH₃)₃]₂
·
CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂
·
CH₃-[Si(CH₃)₂O]ₙ₁Si(CH₃)₂-(CH₂)_{H1}-CH[CH₂CH₂CH₂Si(OCH₃)₃]₂
·
CH₃CH₂CH₂CH₂-[Si(CH₃)₂O]ₙ₁Si(CH₃)₂-(CH₂)_{H1}-CH[CH₂CH₂CH₂Si(OCH₃)₃]₂
·
[(CH₃)₃SiO)]₂(CH₃)Si-O-[Si(CH₃)₂O]ₙ₁Si(CH₃)₂-(CH₂)_{H1}-CH[CH₂CH₂CH₂Si(OCH₃)₃]₂
·
[(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂
·
CH₃-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
·
CH₃CH₂CH₂CH₂-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
·
[(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
·
[(CH₃)₃SiO)]₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂
·
CH₃-[Si(CH₃)₂O]ₙ₁Si(CH₃)₂-(CH₂)_{H1}-O-(CH₂)_{H2}-C(=O)NHCH₂CH[CH₂CH₂CH₂CH₂CH₂CH₂CH₂CH₂CH₂CH₂CH₂Si(OCH₃)₃]₂
·
CH₃CH₂CH₂CH₂-[Si(CH₃)₂O]ₙ₁Si(CH₃)₂-(CH₂)_{H1}-O-(CH₂)_{H2}-C(=O)NHCH₂CH[CH₂CH₂CH₂CH₂CH₂CH₂CH₂CH₂CH₂CH₂CH₂Si(OCH₃)₃]₂
·
CH₃-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
·
CH₃CH₂CH₂CH₂-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
·
[(CH₃)₃SiO)]₂(CH₃)Si-O-[Si(CH₃)₂O]ₙ₁Si(CH₃)₂-(CH₂)_{H1}-CH[CH₂CH₂CH₂CH₂CH₂CH₂CH₂CH₂CH₂CH₂CH₂Si(OCH₃)₃]₂
·
[(CH₃)₃SiO)]₃Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
·
CH₃-[Si(CH₃)₂O]ₙ₁Si(CH₃)₂-(CH₂)_{H1}-C(=O)N[CH₂CH₂CH₂Si(OCH₃)₃]₂
·
CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂
·
[(CH₃)₃SiO)]₂(CH₃)Si-O-[Si(CH₃)₂O]ₙ₁Si(CH₃)₂-(CH₂)_{H1}-C(=O)N[CH₂CH₂CH₂Si(OCH₃)₃]₂
·
[(CH₃)₃SiO)]₃Si-O-[Si(CH₃)₂O]ₙ₁Si(CH₃)₂-(CH₂)_{H1}-C(=O)N[CH₂CH₂CH₂Si(OCH₃)₃]₂
·
CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
·
CH₃CH₂CH₂CH₂-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
·
CH₃-[Si(CH₃)₂O]ₙ₁Si(CH₃)₂-(CH₂)_{H1}-N[CH₂CH₂CH₂Si(OCH₃)₃]₂
·
CH₃CH₂CH₂CH₂-[Si(CH₃)₂O]ₙ₁Si(CH₃)₂-(CH₂)_{H1}-N[CH₂CH₂CH₂Si(OCH₃)₃]₂
·
[(CH₃)₃SiO)]₂(CH₃)Si-O-[Si(CH₃)₂O]ₙ₁Si(CH₃)₂-(CH₂)_{H1}-N[CH₂CH₂CH₂Si(OCH₃)₃]₂
·
[(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂
·
CH₃-[Si(CH₃)₂O]ₙ₁Si(CH₃)₂-(CH₂)_{H1}-C(=O)NHCH₂C[CH₂CH₂CH₂Si(OCH₃)₃]₃
·
CH₃CH₂CH₂CH₂-[Si(CH₃)₂O]ₙ₁Si(CH₃)₂-(CH₂)_{H1}-C(=O)NHCH₂C[CH₂CH₂CH₂Si(OCH₃)₃]₃
·
[(CH₃)₃SiO)]₂(CH₃)Si-O-[Si(CH₃)₂O]ₙ₁Si(CH₃)₂-(CH₂)_{H1}-C(=O)NHCH₂C[CH₂CH₂CH₂Si(OCH₃)₃]₃
·
[(CH₃)₃SiO)]₃Si-O-[Si(CH₃)₂O]ₙ₁Si(CH₃)₂-(CH₂)_{H1}- C(=O)NHCH₂C[CH₂CH₂CH₂Si(OCH₃)₃]₃
·
CH₃-[Si(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
·
CH₃CH₂CH₂CH₂-[Si(CH₃)₂O]ₙ₁Si(CH₃)₂-(CH₂)_{H1}-O-(CH₂)_{H2}-C(=O)NHCH₂C[CH₂CH₂CH₂Si(OCH₃)₃]₃
·
CH₃-[Si(CH₃)₂O]ₙ₁Si(CH₃)₂-(CH₂)_{H1}-C[CH₂CH₂CH₂Si(OCH₃)₃]₃
·
CH₃CH₂CH₂CH₂-[Si(CH₃)₂O]ₙ₁Si(CH₃)₂-(CH₂)_{H1}-C[CH₂CH₂CH₂Si(OCH₃)₃]₃
·
[(CH₃)₃SiO)]₂(CH₃)Si-O-[Si(CH₃)₂O]ₙ₁Si(CH₃)₂-(CH₂)_{H1}-C[CH₂CH₂CH₂Si(OCH₃)₃]₃
·
[(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃
·
[(CH₃)₃SiO)]₂(CH₃)Si-(CH₂)n₁-C(=O)NHCH₂CH₂CH₂Si(OCH₃)₃
·
[(CH₃)₃SiO)]₃Si-(CH₂)_{H1}-C(=O)NHCH₂CH₂CH₂Si(OCH₃)₃
·
[(CH₃)₃SiO)]₂(CH₃)Si-(CH₂)_{H1}-Si(OCH₃)₃
·
[(CH₃)₃SiO)]₃Si-(CH₂)n₁-Si(OCH₃)₃
·
[(CH₃)₃SiO)]₂(CH₃)Si-(CH₂)_{H1}-C(=O)NHCH₂CH[CH₂CH₂CH₂Si(OCH₃)₃]₂
·
[(CH₃)₃SiO)]₃Si-(CH₂)_{H1}-C(=O)NHCH₂CH[CH₂CH₂CH₂Si(OCH₃)₃]₂
·
[(CH₃)₃SiO)]₂(CH₃)Si-(CH₂)_{H1}-CH[CH₂CH₂CH₂Si(OCH₃)₃]₂
·
[(CH₃)₃SiO)]₃Si-(CH₂)_{H1}-CH[CH₂CH₂CH₂Si(OCH₃)₃]₂
·
[(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂
·
[(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂
·
[(CH₃)₃SiO)]₂(CH₃)Si-(CH₂)_{H1}-CH[CH₂CH₂CH₂CH₂CH₂CH₂CH₂CH₂CH₂CH₂CH₂Si(OCH₃)₃]₂
·
[(CH₃)₃SiO)]₃Si-(CH₂)_{H1}-CH[CH₂CH₂CH₂CH₂CH₂CH₂CH₂CH₂CH₂CH₂CH₂Si(OCH₃)₃]₂
·
[(CH₃)₃SiO)]₂(CH₃)Si-(CH₂)_{H1}-C(=O)N[CH₂CH₂CH₂Si(OCH₃)₃]₂
·
[(CH₃)₃SiO)]₃Si-(CH₂)_{H1}-C(=O)N[CH₂CH₂CH₂Si(OCH₃)₃]₂
·
[(CH₃)₃SiO)]₂(CH₃)Si-(CH₂)_{H1}-N[CH₂CH₂CH₂Si(OCH₃)₃]₂
·
[(CH₃)₃SiO)]₃Si-(CH₂)_{H1}-N[CH₂CH₂CH₂Si(OCH₃)₃]₂
·
[(CH₃)₃SiO)]₂(CH₃)Si-(CH₂)_{H1}-C(=O)NHCH₂C[CH₂CH₂CH₂Si(OCH₃)₃]₃
·
[(CH₃)₃SiO)]₃Si-(CH₂)_{H1}-C(=O)NHCH₂C[CH₂CH₂CH₂Si(OCH₃)₃]₃
·
[(CH₃)₃SiO)]₂(CH₃)Si-(CH₂)_{H1}-C[CH₂CH₂CH₂Si(OCH₃)₃]₃
·
[(CH₃)₃SiO)]₃Si-(CH₂)_{H1}-C[CH₂CH₂CH₂Si(OCH₃)₃]₃ 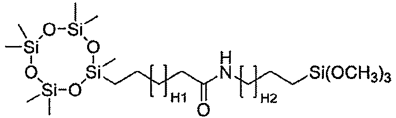 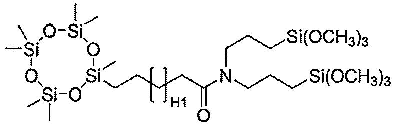 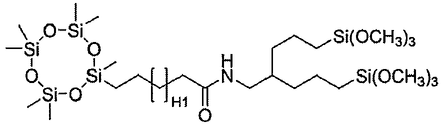 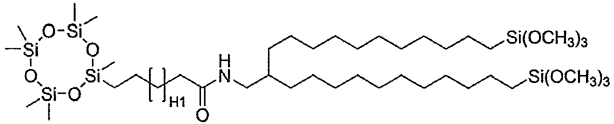 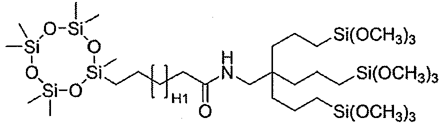
·
CH₃CH₂CH₂CH₂-[Si(CH₃)₂O]ₙ₁Si(CH₃)₂-(CH₂)_{H1}-O-(CH₂)_{H2}-· C(CH₂CH₃)[CH₂OC(=O)NHCH₂CH₂CH₂Si(OCH₃)₃]₂
·
CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂
·
CH₃CH₂CH₂CH₂-[Si(CH₃)₂O]ₙ₁Si(CH₃)₂-(CH₂)_{H1}-O-(CH₂)_{H2}-C(CH₂CH₃)[CH₂OC(=O)NHCH₂CH₂OC(=O)CH(CH₃)CH₂Si(OCH₃)₃]₂
·
CH₃-[Si(CH₃)₂O]ₙ₁Si(CH₃)₂-(CH₂)_{H1}-O-(CH₂)_{H2}-C(CH₂CH₃)[CH₂OC(=O)NHCH₂CH₂OC(=O)CH(CH₃)CH₂Si(OCH₃)₃]₂
·
CH₃CH₂CH₂CH₂-[Si(CH₃)₂O]ₙ₁Si(CH₃)₂--(CH₂)_{H1}-O-(CH₂)_{H2}-C[CH₂OC(=O)NHCH₂CH₂CH₂Si(OCH₃)₃]₃
·
CH₃-[(Si(CH₃)₂O)]ₙ₁Si(CH₃)2-(CH₂)_{H1}-O-(CH₂)_{H2}-C[CH₂OC(=O)NHCH₂CH₂CH₂Si(OCH₃)₃]₃.
·
[CH₃CH₂CH₂CH₂-[(Si(CH₃)₂O)]ₙ₁Si(CH₃)₂-(CH₂)_{H1}-O-(CH₂)_{H2}-]₂-C[CH₂OC(=O)NHCH₂CH₂CH₂Si(OCH₃)₃]₂
·
[CH₃-[(Si(CH₃)₂O)]ₙ₁Si(CH₃)₂-(CH₂)_{H1}-O-(CH₂)_{H2}-]₂-C[CH₂OC(=O)NHCH₂CH₂CH₂Si(OCH₃)₃]₂
·
CH₃CH₂CH₂CH₂-[Si(CH₃)₂O]ₙ₁Si(CH₃)2-(CH₂)_{H1}-O-(CH₂)_{H2}-OC(=O)NHCH₂CH₂CH₂Si(OCH₃)₃
·
CH₃-[Si(CH₃)₂O]ₙ₁Si(CH₃)2-(CH₂)_{H1}-O-(CH₂)_{H2}-OC(=O)NHCH₂CH₂CH₂Si(OCH₃)₃
·
CH₃CH₂CH₂CH₂-[Si(CH₃)₂O]ₙ₁Si(CH₃)₂-(CH₂)_{H1}-O-(CH₂)_{H2}-OC(=O)NHCH₂CH₂OC(=O)CH(CH₃)CH₂Si(OCH₃)₃
·
CH₃-[Si(CH₃)₂O]ₙ₁Si(CH₃)2-(CH₂)_{H1}-O-(CH₂)_{H2}-OC(=O)NHCH₂CH₂OC(=O)CH(CH₃)CH₂Si(OCH₃)₃
·
[CH₃CH₂CH₂CH₂-[Si(CH₃)₂O]ₙ₁Si(CH₃)₂-(CH₂)_{H1}-O-(CH₂)_{H2}-]₃C-CH₂OC(=O)NHCH₂CH₂CH₂Si(OCH₃)₃
·
[CH₃-[Si(CH₃)₂O]ₙ₁Si(CH₃)₂-(CH₂)_{H1}-O-(CH₂)_{H2}-]₃C-CH₂OC(=O)NHCH₂CH₂CH₂Si(OCH₃)₃
·
[CH₃CH₂CH₂CH₂-[(Si(CH₃)₂O)]ₙ₁Si(CH₃)₂-(CH₂)_{H1}-O-(CH₂)_{H2}-]₂C(CH₂CH₃)[CH₂OC(=O)NHCH₂CH₂CH₂Si(OCH₃)₃]
·
[CH₃-[(Si(CH₃)₂O)]ₙ₁Si(CH₃)₂-(CH₂)_{H1}-O-(CH₂)_{H2}-]₂C(CH₂CH₃)[CH₂OC(=O)NHCH₂CH₂CH₂Si(OCH₃)₃] 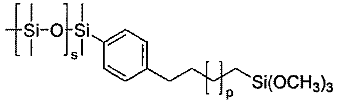 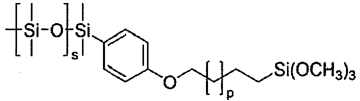 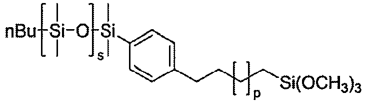 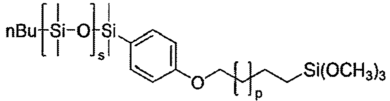 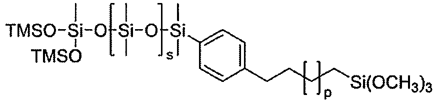 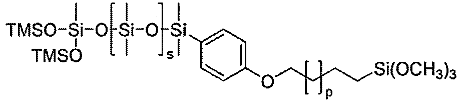 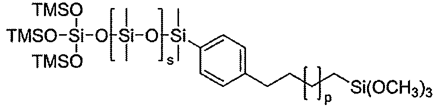 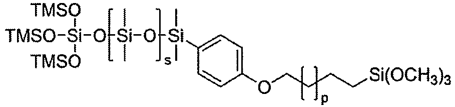 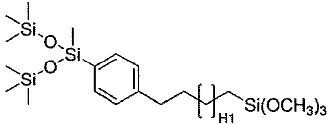 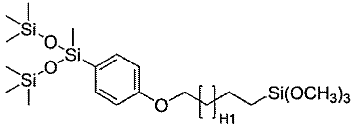 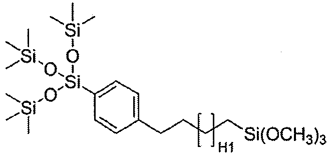 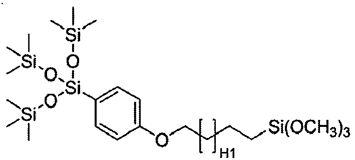 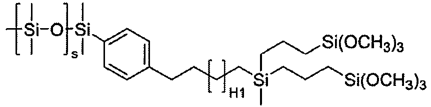 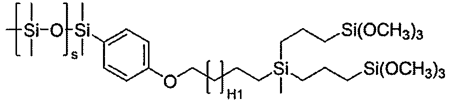 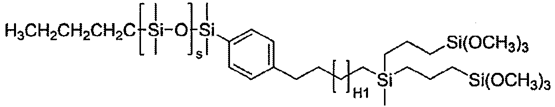 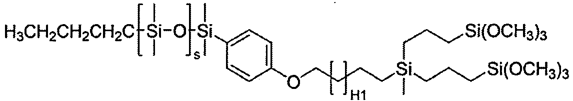 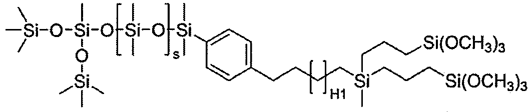 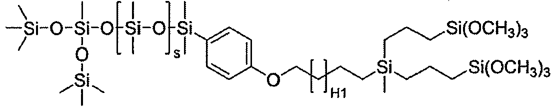 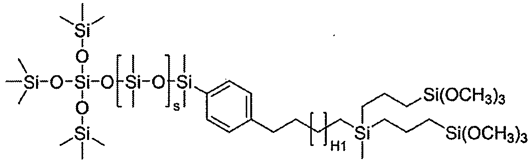 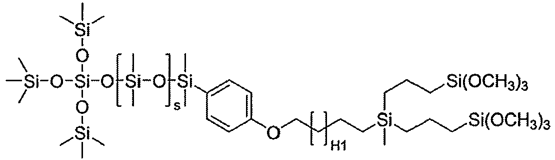 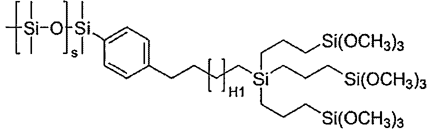 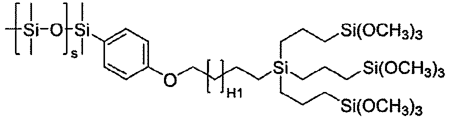 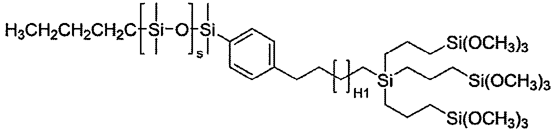 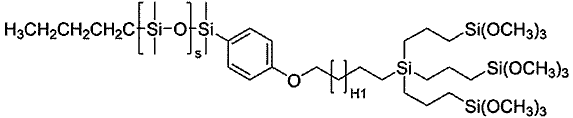 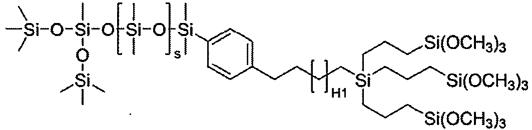 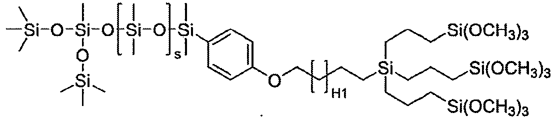 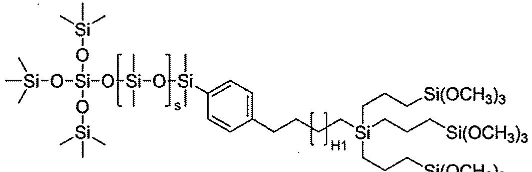 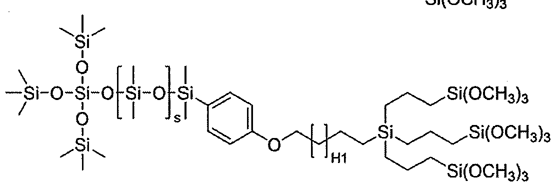 wherein
TMSO is a trimethylsilyloxy group,
n1 and s are each independently an integer of 0 to 150,
p is each independently an integer of 1 to 50, and
H1 and H2 are each independently an integer of 1 to 50.

19. The article according to claim 1, wherein, in the compound A:
n1 and s are each independently 0 or 1,
p is each independently an integer of 8 to 40, and
H1 is each independently an integer of 8 to 40; and
in the compound B:
n1 and s are each independently 0 or 1,
p is each independently an integer of 8 to 40,
H1 is each independently an integer of 8 to 40, and
H2 is each independently an integer of 1 to 10.

20. The article according to any one of claims 1 to 17, wherein, in the compound A:
n1 and s is each independently an integer of 5 to 80,
p is each independently an integer of 8 to 40, and
H1 is each independently an integer of 8 to 40; and
in the compound B:
n1 and s is each independently an integer of 5 to 80,
p is each independently an integer of 8 to 40,
H1 is each independently an integer of 8 to 40, and
H2 is each independently an integer of 1 to 10.

21. The article according to claim 1, wherein the compound A is selected from the following compounds: 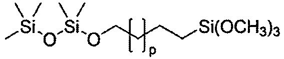 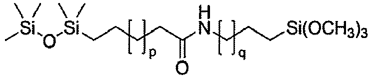 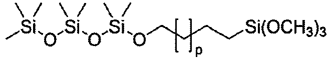 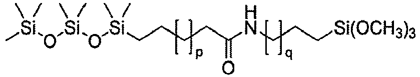 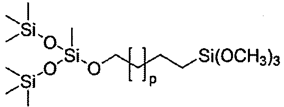 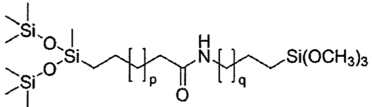 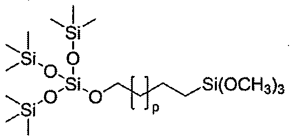 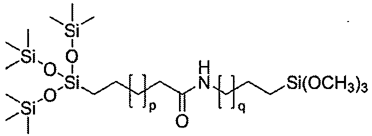 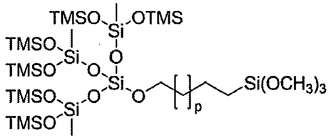 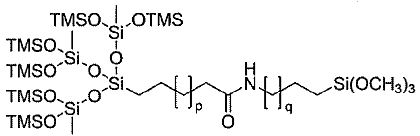 wherein TMSO is a trimethylsilyloxy group,
p is each independently an integer of 1 to 30, and
q is each independently an integer of 1 to 30; and
the compound B is selected from the following compounds: 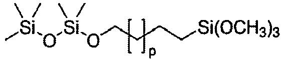 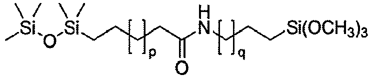 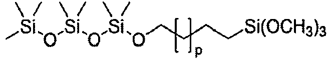 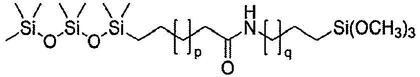 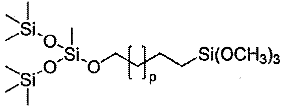 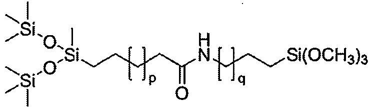 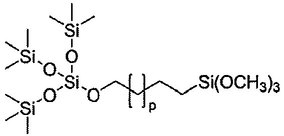 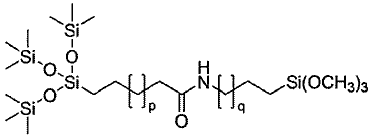 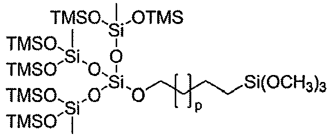 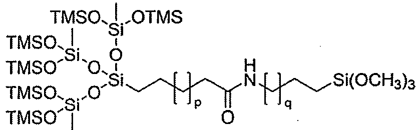 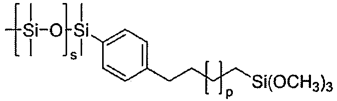 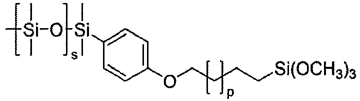 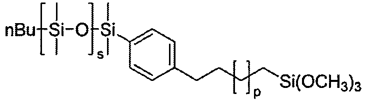 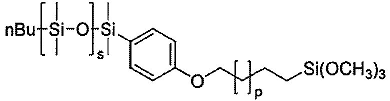 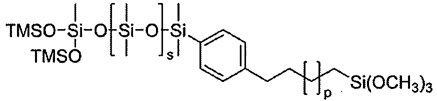 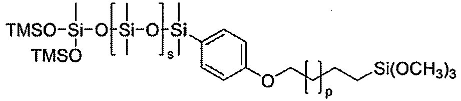 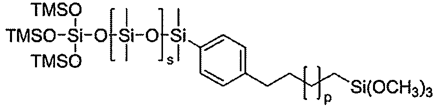 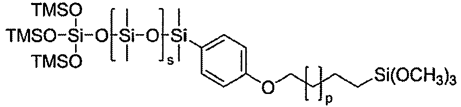
CH₃Si(CH₃)₂O(Si(CH₃)₂O)ₙSi(CH₃)₂(CH₂)₁₀CONHCH₂CH₂CH₂Si(O CH₃)₃
(CH₃CH₂CH₂CH₂Si(CH₃)₂(OSi(CH₃)₂)ₙ-(CH₂)₃-OCH₂-CONH-CH₂C{CH₂CH₂CH₂Si(OCH₃)₃}₃
wherein
TMSO is a trimethylsilyloxy group,
p is each independently an integer of 1 to 30,
q is each independently an integer of 1 to 30,
s is each independently an integer of 1 to 60, and
n is each independently an integer of 10 to 70.

22. The composition according to any one of claims 1 to 21, wherein the compound A is 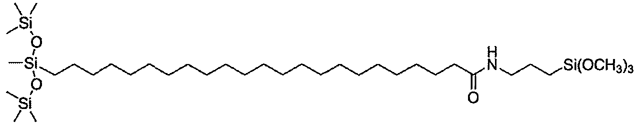
[(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH₂CH₂CH₂Si (OCH₃)₃]₂
(n = 26)
[(CH₃)₃SiO]₃SiO(Si(CH₃)₂O)ₙSi(CH₃)₂CH₂CH₂CH₂CH₂CH₂CH₂CH₂CH₂CH₂ CH₂CONHCH₂C[CH₂CH₂CH₂Si(OCH₃)₃]₃
(n = 23) and
the compound B is a compound selected from CH₃Si(CH₃)₂O(Si(CH₃)₂O)ₙSi(CH₃)₂(CH₂)₁₀CONHCH₂CH_{2C}H₂Si(OCH₃)₃ (n is an integer of 10 to 30)
(CH₃CH₂CH₂CH₂Si(CH₃)₂(OSi(CH₃)₂)₅₇-(CH₂)₃-OCH₂-CONH-CH₂C{CH₂CH₂CH₂Si(OCH₃)₃}₃ 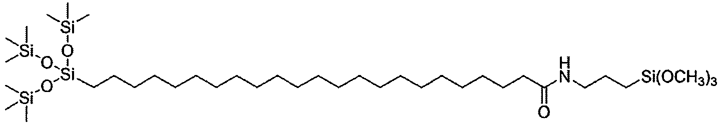 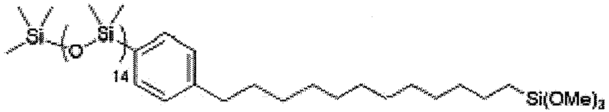 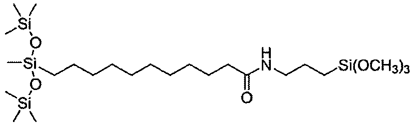 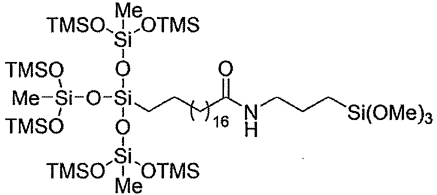 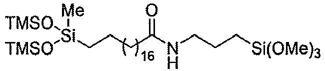
(wherein TMSO is trimethylsilyloxy, and Me is a methyl group.),
CH₃[Si(CH₃)₂O]ₙSi(CH₃)₂(CH₂)₂₂CONH-CH₂CH[CH₂CH₂CH₂Si(OCH₃)₃]₂
(n = 57)
[(CH₃)₃SiO]₂CH₃SiO(Si(CH₃)₂O)ₙSi(CH₃)₂CH₂CH₂CH₂CH₂CH₂CH₂CH₂CH₂ CH₂CH₂CH₂CH₂CH₂CH₂CH₂CH₂CH₂CH₂CH₂CH₂CH₂CH₂CONHCH₂CH[CH₂CH₂CH₂CH ₂CH₂CH₂CH₂CH₂CH₂CH₂CH₂Si(OCH₃)₃]₂
(n = 17)

23. The composition according to any one of claims 1 to 22, wherein a mass ratio of contents of the compound A and the compound B contained in the composition is 1:99 to 99:1.

24. A surface-treating agent comprising the composition according to any one of claims 1 to 23.

25. The surface-treating agent according to claim 24, comprising a condensate of the compound A and the compound B.

26. The surface-treating agent according to claim 24 or 25, which is for vacuum deposition.

27. The surface-treating agent according to claim 24 or 25, which is for wet coating.

28. A pellet comprising the surface-treating agent according to any one of claims 24 to 27.

29. An article comprising a substrate and a layer on the substrate, wherein the layer is formed from the surface-treating agent according to any one of claims 24 to 27.

30. The article according to claim 29, comprising, between the substrate and the aforementioned layer, a silicon oxide-containing intermediate layer.

31. The article according to claim 30, wherein the intermediate layer comprises an alkali metal atom.

32. The article according to claim 31, wherein the alkali metal atom is at least partially a sodium atom.

33. The article according to any one of claims 29 to 32, which is an optical member.

34. The article according to any one of claims 29 to 33, which is a display.
